(19) Europäisches Patentamt
European Patent Office
Office européen des brevets

(11) EP 4 130 057 A1

(12) **EUROPEAN PATENT APPLICATION**
published in accordance with Art. 153(4) EPC

(43) Date of publication:
**08.02.2023 Bulletin 2023/06**

(21) Application number: **21775103.1**

(22) Date of filing: **18.03.2021**

(51) International Patent Classification (IPC):
***C08F 8/14*** *(1974.07)* ***C08F 8/18*** *(1974.07)*
***C08F 220/28*** *(1974.07)*

(52) Cooperative Patent Classification (CPC):
**C08F 8/14; C08F 8/18; C08F 220/28**

(86) International application number:
**PCT/JP2021/011072**

(87) International publication number:
**WO 2021/193349 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.03.2020 JP 2020052770**

(71) Applicant: **Sumitomo Chemical Company, Limited**
**Tokyo 103-6020 (JP)**

(72) Inventor: **SAKURADA, Kenta**
**Ichihara-shi, Chiba 299-0195 (JP)**

(74) Representative: **Vossius & Partner Patentanwälte Rechtsanwälte mbB**
**Siebertstraße 3**
**81675 München (DE)**

(54) **HYDROPHILIC OIL REPELLENT POLYMER**

(57) A polymer includes: structural units A derived from at least one selected from the group consisting of ethylene and propylene; structural units B represented by a formula (1) below; and structural units C represented by a formula (2) below. In the formula (1), $L^{16}$ represents $-(CH_2)_n-(R^{f2}O)_p-R^{f1}$, $R^{f1}$ represents a $C_{1-15}$ alkyl group having one or more hydrogen atoms thereof substituted with one or more fluorine atoms, $R^{f2}$ represents a $C_{1-15}$ alkylene group having one or more hydrogen atoms thereof substituted with one or more fluorine atoms, p represents an integer of 0 to 15, and n represents an integer of 0 to 10. In the formula (2), $L^{26}$ represents $-(CH_2)_n-(R^{r2}O)_q-R^{r1}$, $R^{r1}$ represents a hydrogen atom or a $C_{1-15}$ alkyl group, $R^{r2}$ represents a $C_{1-15}$ alkylene group, q represents an integer of 0 to 1000000, and n represents an integer of 0 to 10.

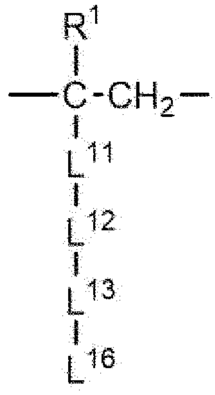

Formula (1)

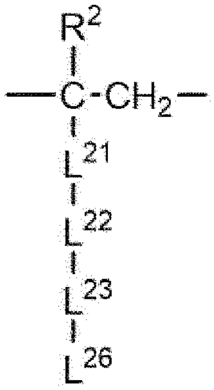

Formula (2)

EP 4 130 057 A1

## Description

### TECHNICAL FIELD

The present invention relates to a polymer having excellent hydrophilic and oleophobic performance, and an antifouling material and an anti-slime material that contain the polymer.

### BACKGROUND ART

Antifouling materials having oleophobic performance have conventionally been proposed. For example, Patent Document 1 describes a water-repellent and oleophobic agent having soil release properties, the water-repellent and oleophobic agent being characterized by containing a copolymer of polyethylene glycol (PEG) acrylate with a fluoroalkyl acrylate.

### PRIOR ART DOCUMENT

### PATENT DOCUMENT

Patent Document 1: JP-A-01-108290

### SUMMARY OF THE INVENTION

### PROBLEM TO BE SOLVED BY THE INVENTION

However, conventional water-repellent and oleophobic antifouling materials having soil release properties have been insufficient in durability.

In addition, well-known hydrophilic and oleophobic antifouling materials are also required to be improved in durability. Therefore, an object of the present application is to provide a novel hydrophilic and oleophobic polymer having excellent durability.

### MEANS FOR SOLVING THE PROBLEM

The present invention relates to the following, but is not limited thereto.

[Invention 1]

A polymer including: structural units A derived from at least one selected from the group consisting of ethylene and propylene; structural units B represented by a formula (1) below; and structural units C represented by a formula (2) below,

[Chemical 1]

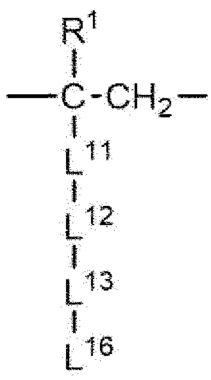

Formula (1)

in the formula (1),

$R^1$ represents a hydrogen atom or a methyl group;
$L^{11}$ represents -CO-O-, -O-CO-, or -O-;
$L^{12}$ represents a single bond, $-CH_2-$, $-CH_2-CH_2-$, $-CH_2-CH_2-CH_2-$, -CH $(CH_3)$ $-CH_2-$, $-CH_2-CH$ $(CH_3)$ -, $-CH_2-CH$ (OH) $-CH_2-$, or $-CH_2-CH$ $(CH_2OH)$ -;
$L^{13}$ represents a single bond, -CO-O-, -O-CO-, -O-, - CO-NH-, -NH-CO-, -CO-NH-CO-, -NH-CO-NH-, -NH-, or $-N(CH_3)-$;
$L^{16}$ represents $-(CH_2)_n-(R^{f2}O)_p-R^{f1}$;
$R^{f1}$ represents a $C_{1-15}$ alkyl group having one or more hydrogen atoms thereof substituted with one or more fluorine atoms;
$R^{f2}$ represents a $C_{1-15}$ alkylene group having one or more hydrogen atoms thereof substituted with one or more fluorine atoms;
p represents an integer of 0 to 15, and n represents an integer of 0 to 10;
when p is an integer of 2 or greater, a plurality of moieties $-(R^{f2}O)-$ may be identical or different; and
in $L^{11}$, $L^{12}$, and $L^{13}$ each representing a horizontally written chemical formula, a left side of the horizontally written chemical formula corresponds to an upper side of the formula (1) (a main-chain side of the polymer), and a right side of the horizontally written chemical formula corresponds to a lower side of the formula (1) (an end side of a side chain of the polymer), and

[Chemical 2]

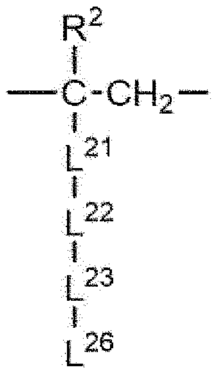

Formula (2)

in the formula (2),
$R^2$ represents a hydrogen atom or a methyl group;
$L^{21}$ represents -CO-O-, -O-CO-, or -O-;
$L^{22}$ represents a single bond, $-CH_2-$, $-CH_2-CH_2-$, $-CH_2-CH_2-CH_2-$, -CH $(CH_3)$ $-CH_2-$, $-CH_2-CH$ $(CH_3)$ -, $-CH_2-CH$ (OH) $-CH_2-$, or $-CH_2-CH$ $(CH_2OH)$ -;
$L^{23}$ represents a single bond, -CO-O-, -O-CO-, -O-, - CO-NH-, -NH-CO-, -CO-NH-CO-, -NH-CO-NH-, -NH-, or $-N(CH_3)-$;
$L^{26}$ represents - $(CH_2)_n-(R^{r2}O)_q-R^{r1}$;
$R^{r1}$ represents a hydrogen atom or a $C_{1-15}$ alkyl group;
$R^{r2}$ represents a $C_{1-15}$ alkylene group;
q represents an integer of 0 to 1000000, and n represents an integer of 0 to 10;
when q is an integer of 2 or greater, a plurality of moieties $-(R^{r2}O)-$ may be identical or different; and
in $L^{21}$, $L^{22}$, and $L^{23}$ each representing a horizontally written chemical formula, a left side of the horizontally written chemical formula corresponds to an upper side of the formula (2) (the main-chain side of the polymer), and a right side of the horizontally written chemical formula corresponds to a lower side of the formula (2) (an end side of a side chain of the polymer).

[Invention 2]

The polymer according to invention 1, further including structural units D that are at least one type selected from the group consisting of structural units represented by a formula (3) below and structural units represented by a formula (4) below,

[Chemical 3]

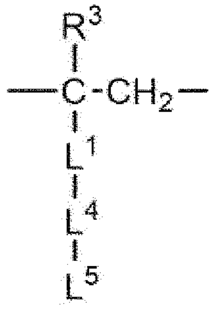

Formula (3)

[Chemical 4]

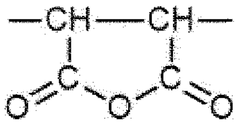

Formula (4)

in the formula (3)
$R^3$ represents a hydrogen atom or a methyl group;
$L^1$ represents -CO-O-, -O-CO-, or -O-;
$L^4$ represents a single bond or a $C_{1-8}$ alkylene group;
$L^5$ represents a hydrogen atom, an epoxy group, - $CH(OH)-CH_2OH$, a carboxy group, a hydroxy group, an amino group, or a $C_{1-4}$ alkylamino group; and
in $L^1$ representing a horizontally written chemical formula, a left side of the horizontally written chemical formula corresponds to an upper side of the formula (3) (the main-chain side of the polymer), and a right side of the horizontally written chemical formula corresponds to a lower side of the formula (3) (an end side of a side chain of the polymer).

[Invention 3]

The polymer according to invention 1 or 2, in which
when a total number of the structural units A, B, C, and D is defined as 100%, a number of the structural units A is 1 to 99% and a total number of the structural units B, C, and D is 99 to 1%.

[Invention 4]

The polymer according to any one of inventions 1 to 3, in which
when the total number of the structural units B, C, and D is defined as 100%, a total number of the structural units B and C is 1 to 99% and a total number of the structural units D is 99 to 1%.

[Invention 5]

The polymer according to any one of inventions 1 to 4, in which
a number ratio B : C between the structural units B and C is 3 : 7 to 7 : 3.

[Invention 6]

The polymer according to any one of inventions 1 to 5, being cross-linked.

[Invention 7]

The polymer according to any one of inventions 1 to 6, having a gel fraction of 20% or more.

[Invention 8]

The polymer according to any one of inventions 1 to 7, in which when a total number of all structural units included in the polymer is defined as 100%, the total number of the structural units A, B, C, and D is 90% or more.

[Invention 9]

A composition containing the polymer according to any one of inventions 1 to 8.

[Invention 10]

The composition according to invention 9, containing 1 wt% or more of the polymer.

[Invention 11]

The composition according to invention 9 or 10, containing a base resin.

[Invention 12]

The composition according to invention 11, in which the base resin is a thermosetting resin.

[Invention 13]

The composition according to invention 11, in which the base resin is unsaturated polyester.

[Invention 14]

A molded article containing the polymer according to any one of inventions 1 to 8.

[Invention 15]

A molded article containing the composition according to any one of inventions 9 to 13.

[Invention 16]

The molded article according to invention 14 or 15, configured to be an antifouling material.

[Invention 17]

The molded article according to invention 14 or 15, configured to be an anti-slime material.

[Invention 18]

A coating film containing the polymer according to any one of inventions 1 to 8.

[Invention 19]

A coating film containing the composition according to any one of inventions 9 to 13.

[Invention 20]

The coating film according to invention 18 or 19, configured to be an antifouling material.

[Invention 21]

The coating film according to invention 18 or 19, configured to be an anti-slime material.

[Invention 22]

A method for producing the polymer according to any one of inventions 1 to 8, the method including reacting a polymer with a compound β and a compound γ,

the polymer including: structural units A derived from at least one selected from the group consisting of ethylene and propylene; and structural units D that are at least one type selected from the group consisting of structural units represented by a formula (3) below and structural units represented by a formula (4) below, a number of the structural units A being 1 to 99% when a total number of the structural units A and D is defined as 100%,
the compound β being one or more selected from the group consisting of a compound represented by a formula (β1) below, a compound represented by a formula (β2) below, a compound represented by a formula (β3) below, a compound represented by a formula (β4) below, a compound represented by a formula (β5) below, a compound represented by a formula (β6) below, a compound represented by a formula (β7) below, and a compound represented by a formula (β8) below, and
the compound γ being one or more selected from the group consisting of a compound represented by a formula (γ1) below, a compound represented by a formula (y2) below, a compound represented by a formula (γ3) below, a compound represented by a formula (γ4) below, a compound represented by a formula (γ5) below, a compound represented by a formula (γ6) below, a compound represented by a formula (γ7) below, and a compound represented by a formula (γ8) below,

[Chemical 5]

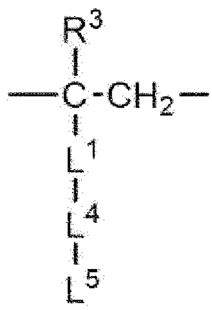
Formula (3)

in the formula (3),
$R^3$ represents a hydrogen atom or a methyl group;
$L^1$ represents -CO-O-, -O-CO-, or -O-;
$L^4$ represents a single bond or a $C_{1-8}$ alkylene group;
$L^5$ represents a hydrogen atom, an epoxy group, - $CH(OH)-CH_2OH$, a carboxy group, a hydroxy group, an amino group, or a $C_{1-4}$ alkylamino group; and
in $L^1$ representing a horizontally written chemical formula, a left side of the horizontally written chemical formula corresponds to an upper side of the formula (3) (a main-chain side of the polymer), and a right side of the horizontally written chemical formula corresponds to a lower side of the formula (3) (an end side of a side chain of the polymer),

[Chemical 6]

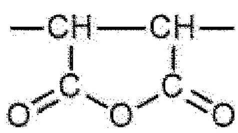
Formula (4)

$R^{f1}$-$(OR^{f2})_p$-$(CH_2)_n$-OH formula (β1)
$R^{f1}$- $(OR^{f2})_p$-$(CH_2)_n$-$NH_2$ formula (β2)
$R^{f1}$-$(OR^{f2})_p$-$(CH_2)_n$-X formula (β3)
$R^{f1}$-$(OR^{f2})_p$-$(CH_2)_n$-COOH formula (β4)
$R^{f1}$-$(OR^{f2})_p$-$(CH_2)_n$-$CONH_2$ formula (β5)
$R^{f1}$-$(OR^{f2})_p$-$(CH_2)_n$-COX formula (β6)
$R^{f1}$-$(OR^{f2})_p$-$(CH_2)_n$-$NHCONH_2$ formula (β7)
$R^{f1}$-$(OR^{f2})_p$-$(CH_2)_n$-NCO formula (β8)
in the formulae
$R^{f1}$, $R^{f2}$, p, and n are as specified in the formula (1), and X represents a halogen atom; and
when a plurality of the compounds β are used, $R^{f1}$, $R^{f2}$, p, n, and X may be identical or different between the plurality of the compounds β,
$R^{r1}$-$(OR^{r2})_q$-$(CH_2)_m$-OH formula (γ1)
$R^{r1}$-$(OR^{r2})_q$-$(CH_2)_m$-$NH_2$ formula (γ2)
$R^{r1}$-$(OR^{r2})_q$-$(CH_2)_m$-X formula (γ3)
$R^{r1}$-$(OR^{r2})_q$-$(CH_2)_m$-COOH formula (γ4)
$R^{r1}$-$(OR^{r2})_q$-$(CH_2)_m$-$CONH_2$ formula (γ5)
$R^{r1}$-$(OR^{r2})_q$-$(CH_2)_m$-COX formula (γ6)
$R^{r1}$-$(OR^{r2})_q$-$(CH_2)_m$-$NHCONH_2$ formula (γ7)
$R^{r1}$-$(OR^{r2})_q$-$(CH_2)_m$-NCO formula (γ8)
in the formulae
$R^{r1}$, $R^{r2}$, q, and m are as specified in the formula (1), and X represents a halogen atom; and
when a plurality of the compounds γ are used, $R^{r1}$, $R^{r2}$, q, m, and X may be identical or different between the plurality of the compounds γ.

[Invention 23]

The method according to invention 22, in which in the reacting, a neutral compatibilizing agent and a cationic compatibilizing agent are added.

EFFECTS OF THE INVENTION

A polymer (also referred to as a "polymer 1") according to the present invention has excellent hydrophilicity and oleophobic properties and excellent durability. Specifically, regarding the durability, the polymer 1 has low water solubility. According to one aspect, the polymer 1 has anti-slime properties (soil release properties). According to one aspect, the polymer 1 has antifouling properties. According to one aspect, the polymer 1 can singly be heat-molded. According to one aspect, a molded article containing the polymer 1 has less change in shape caused by heating. According to one aspect, the molded article containing the polymer 1 has excellent durability to friction. According to one aspect, a composition containing the polymer 1 and a base resin has excellent hydrophilicity and oleophobic properties.

MODE FOR CARRYING OUT THE INVENTION

Definition

All the numbers described in the present description are approximations regardless of using the term "about" or "approximate" together with the numbers. The numbers may vary by 1 percent, 2 percent, 5 percent, or sometimes 10 to 20 percent. Every time a range of a numerical value is described accompanying a lower limit $R^L$ and an upper limit $R^U$, an arbitrary number included in the range is particularly described. Particularly, a following number in the range is particularly described. Equation $R = R^L + k^* (R^U - R^L)$ (in the equation, k is a variable that increases by 1 percent each in a range of 1 percent to 100 percent; that is, k is 1 percent, 2 percent, 3 percent, 4 percent, 5 percent, ..., 50 percent, 51 percent, 52 percent, ..., 95 percent, 96 percent, 97 percent, 98 percent, 99 percent, or 100 percent). Further, an arbitrary numerical range defined by the numbers of the two Rs is also particularly described.
The expression "the lower limit to the upper limit" representing a numerical range represents "the lower limit or more and the upper limit or less", and the expression "the upper limit to the lower limit" represents "the upper limit or less and the lower limit or more". That is, these expressions represent numerical ranges including the lower limit and the upper limit.
Hereinafter, some embodiments of the present invention are described in detail. The present invention, however,

is not to be limited to the embodiments below.

Polymer 1

A polymer 1 includes: structural units A derived from at least one selected from the group consisting of ethylene and propylene; structural units B represented by a formula (1); and structural units C represented by a formula (2).
Hereinafter, each type of the structural units is described.

Structural units A

The structural units A are derived from at least one selected from the group consisting of ethylene and propylene, and are preferably derived from ethylene from the viewpoint of moldability.

Structural units B

The structural units B are represented by the formula (1), and structural units thereof are independently selected.

[Chemical 7]

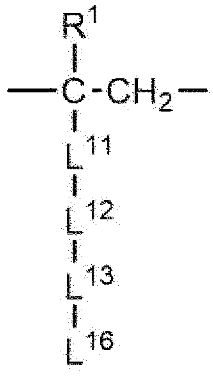

Formula (1)

In the formula (1),

$R^1$ represents a hydrogen atom or a methyl group,
$L^{11}$ represents -CO-O-, -O-CO-, or -O-,
$L^{12}$ represents a single bond, $-CH_2-$, $-CH_2-CH_2-$, $-CH_2-CH_2-CH_2-$, $-CH(CH_3)-CH_2-$, $-CH_2-CH(CH_3)-$, $-CH_2-CH(OH)-CH_2-$, or $-CH_2-CH(CH_2OH)-$,
$L^{13}$ represents a single bond, -CO-O-, -O-CO-, -O-, - CO-NH-, -NH-CO-, -CO-NH-CO-, -NH-CO-NH-, -NH-, or $-N(CH_3)-$,
$L^{16}$ represents $-(CH_2)_n-(R^{f2}O)_p-R^{f1}$,
$R^{f1}$ represents a $C_{1-15}$ alkyl group having one or more hydrogen atoms thereof substituted with one or more fluorine atoms,
$R^{f2}$ represents a $C_{1-15}$ alkylene group having one or more hydrogen atoms thereof substituted with one or more fluorine atoms, and
p represents an integer of 0 to 15, and n represents an integer of 0 to 10.

When p is an integer of 2 or greater, a plurality of moieties $-(R^{f2}O)-$ may be identical or different.
In $L^{11}$, $L^{12}$, and $L^{13}$ each representing a horizontally written chemical formula, a left side of the horizontally written chemical formula corresponds to an upper side of the formula (1) (a main-chain side of the polymer), and a right side of the horizontally written chemical formula corresponds to a lower side of the formula (1) (an end side of a side chain of the polymer).
$R^1$ is preferably a hydrogen atom.
$L^{11}$ is preferably -CO-O- or -O-CO-, more preferably - CO-O-.
$L^{12}$ is preferably a single bond, $-CH_2-$, $-CH_2-CH_2-$, or $-CH_2-CH_2-CH_2-$, more preferably a single bond.
$L^{13}$ is preferably a single bond, -O-CO-, -NH-, or - $N(CH_3)-$, more preferably a single bond.
$R^{f1}$ constituting $L^{16}$ is specifically $C_xF_yH_z-$, in which x is an integer of 1 to 15, y is an integer of 2 to 31, and z

is 2x + 1 - y. $R^{f1}$ is, for example, $CF_3(CF2)_a(CH_2)_b$-, in which a is an integer of 0 to 14, preferably an integer of 3 to 9, more preferably an integer of 5 to 7. b is an integer of 0 to 14, preferably an integer of 0 to 5, more preferably an integer of 0 to 3. a + b is 14 or less.

$R^{f2}$ constituting $L^{16}$ is, for example, CHF, $CF_2$, $C_2H_2F_2$, $C_2F_4$, $C_3H_3F_3$, $CF_2CF(CF_3)$, $CH_2CF(CF_3)$, $CF_2CH(CF_3)$, $CF_2CF(CH_3)$, $CH_2CH(CF_3)$, or $C_3F_6$. When p is an integer of 2 or greater, a plurality of moieties -($R^{f2}$O)- may be identical or different.

p constituting $L^{16}$ is preferably an integer of 0 to 10, more preferably an integer of 0 to 5, further preferably 0.

n constituting $L^{16}$ is preferably an integer of 0 to 4, more preferably 1 or 2, further preferably 2.

Examples of the structural units B represented by the formula (1) include the structural units below.

[Chemical 8]

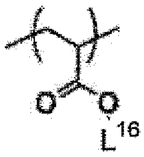 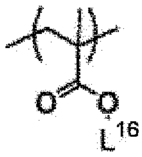 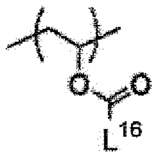 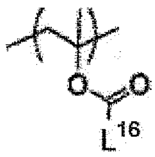 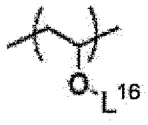 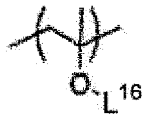

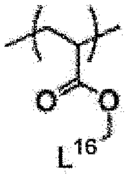 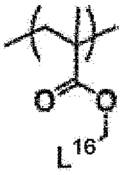 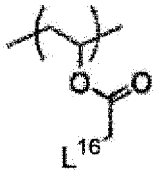 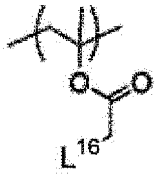 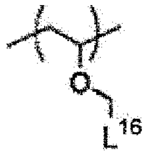 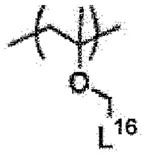

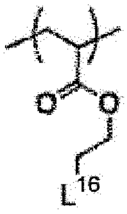 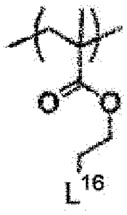 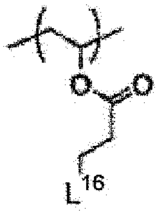 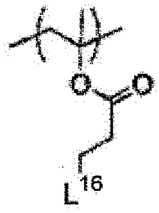 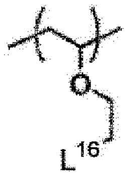 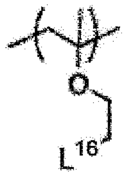

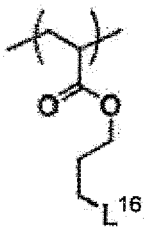 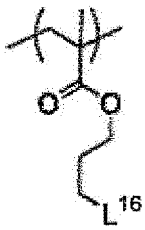 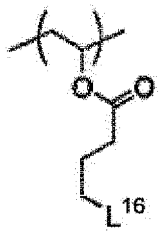 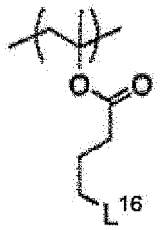 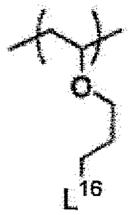 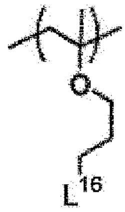

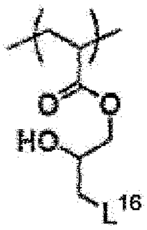 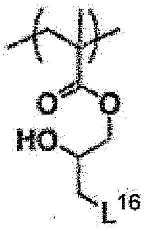 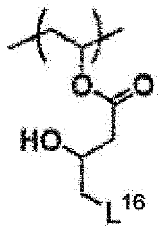 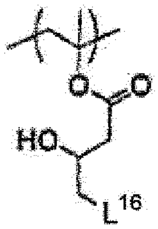 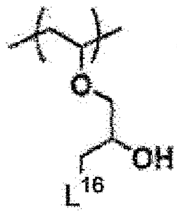 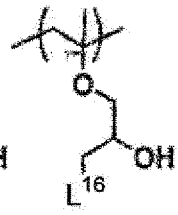

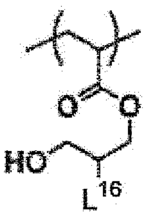 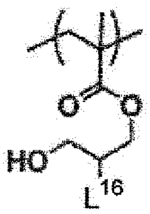 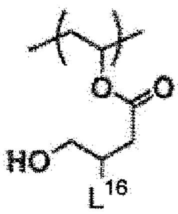 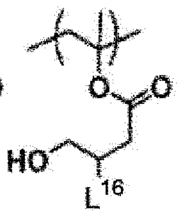 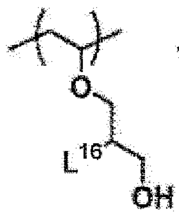 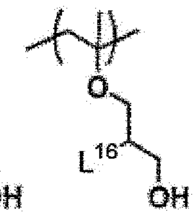

[Chemical 9]

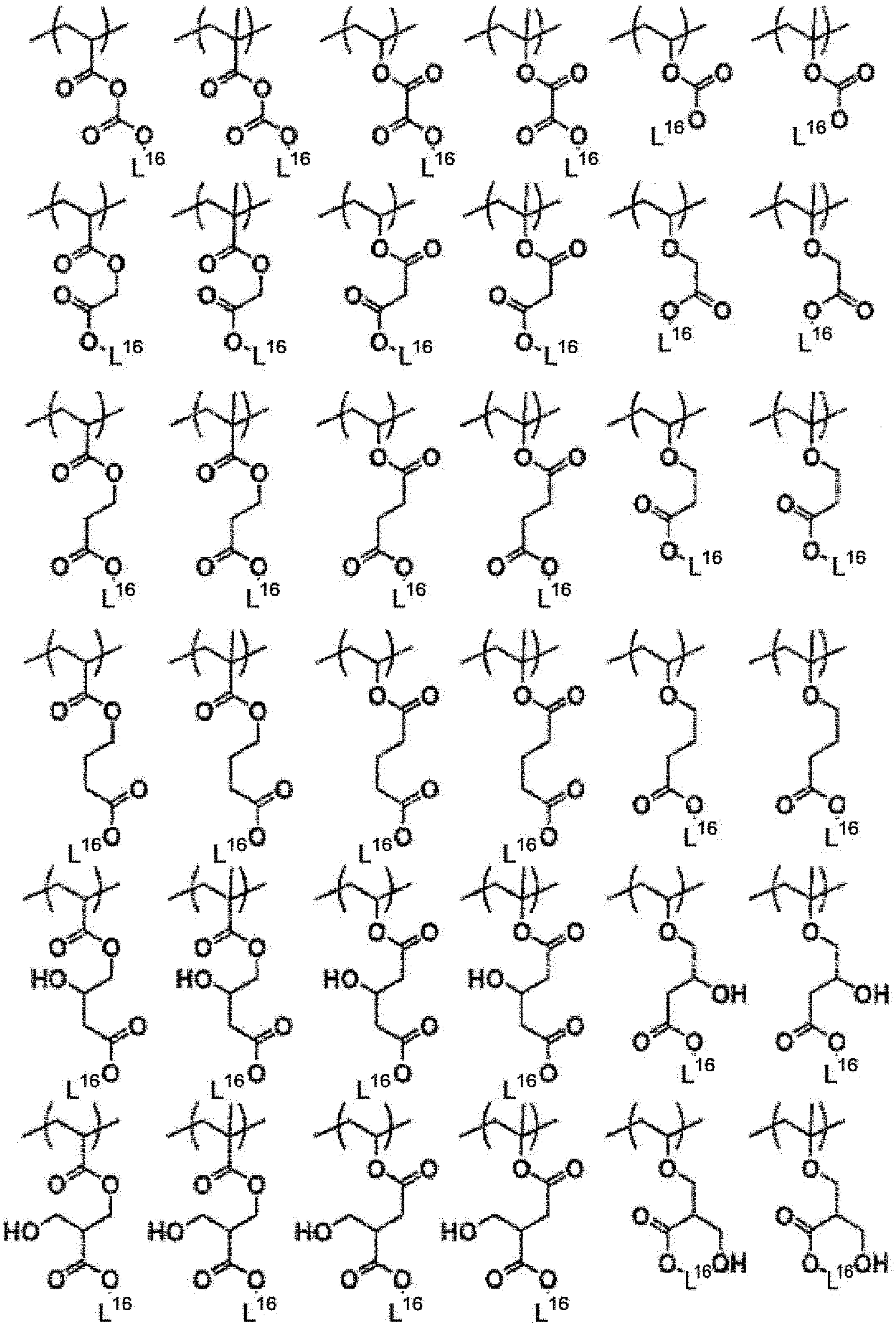

[Chemical 10]

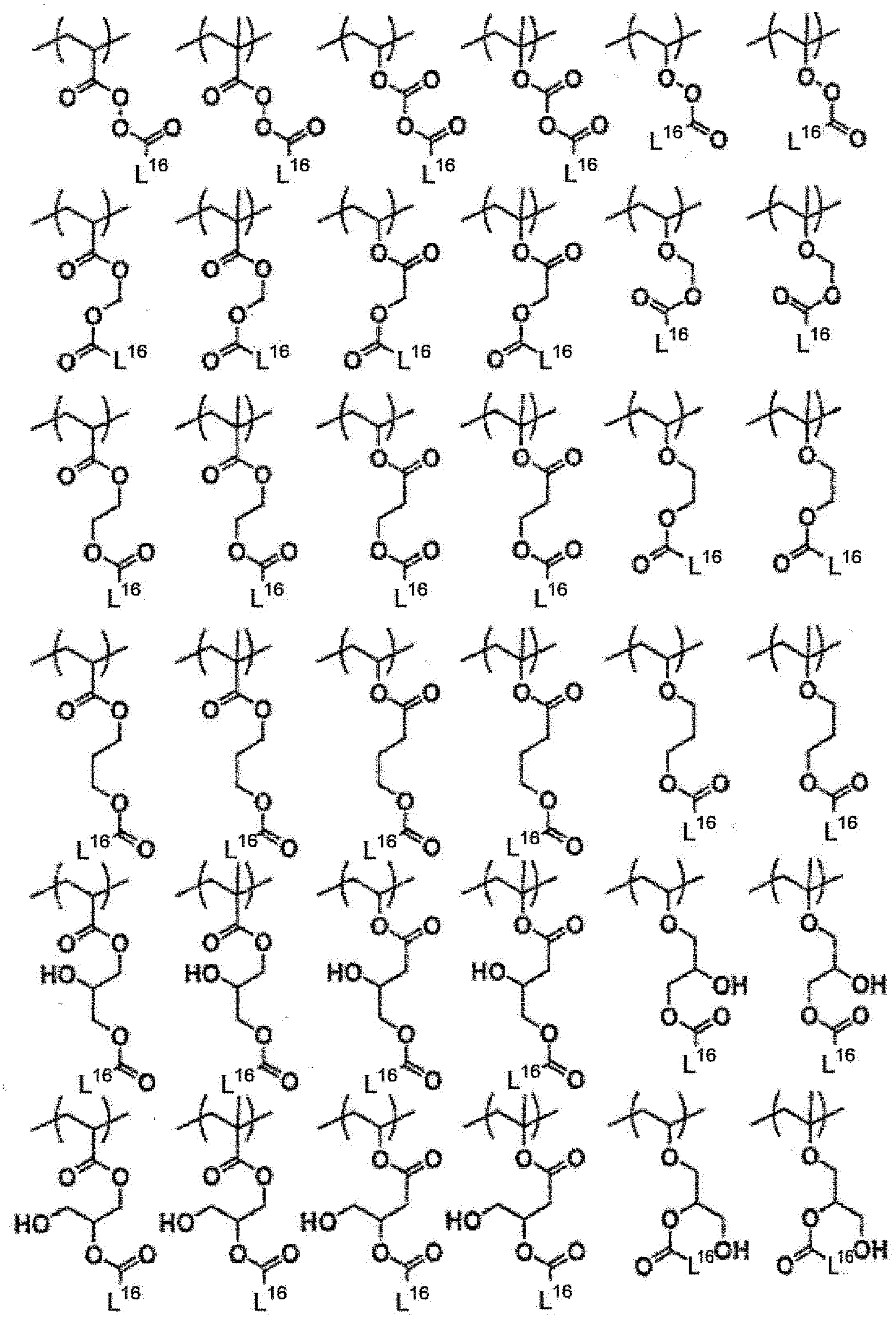

[Chemical 11]

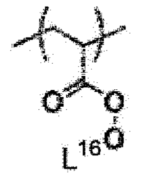 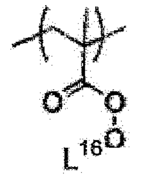 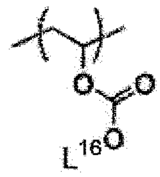 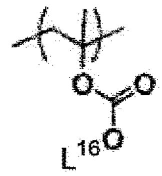 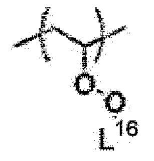 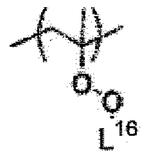

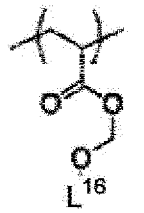 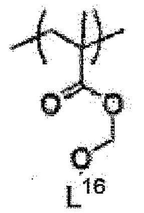 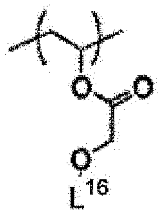 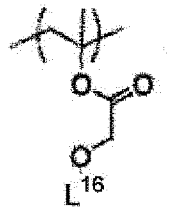 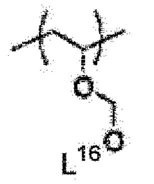 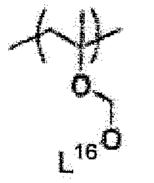

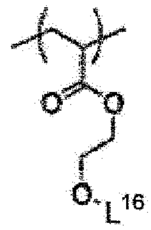 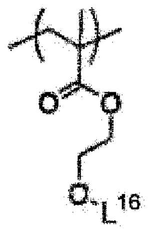 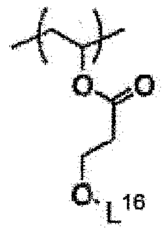 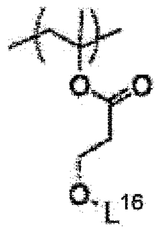 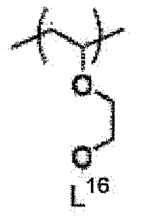 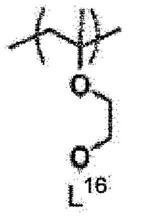

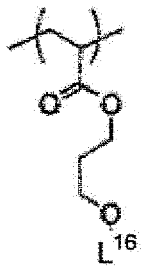 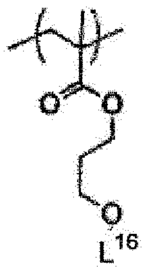 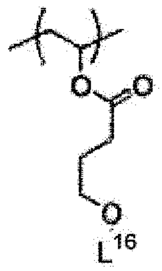 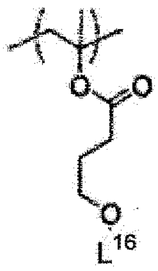 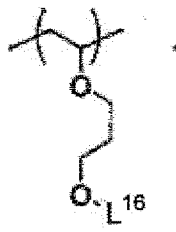 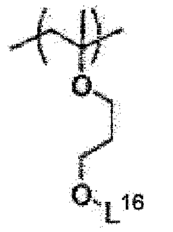

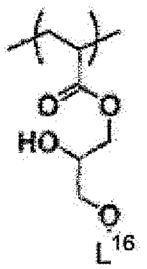 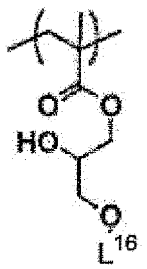 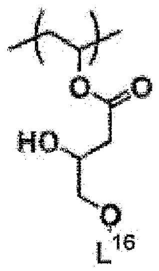 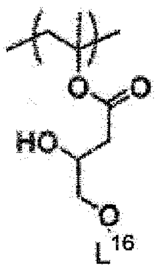 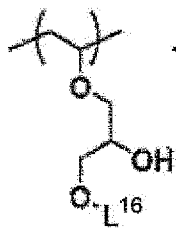 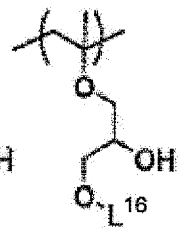

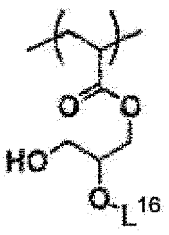 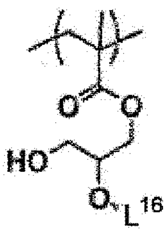 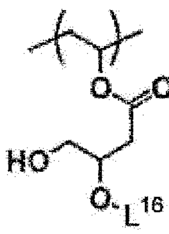 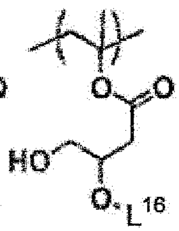 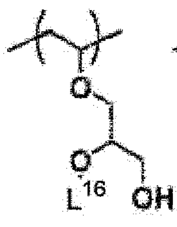 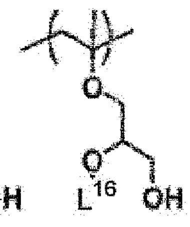

[Chemical 12]

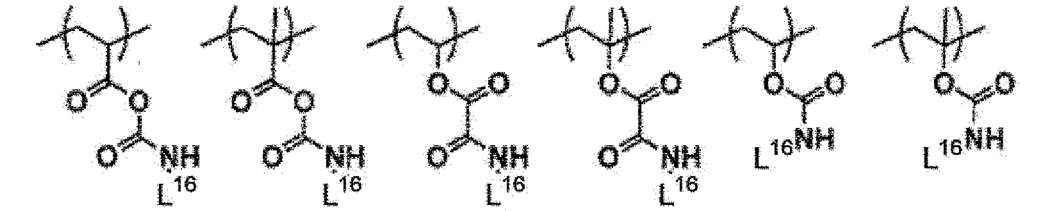
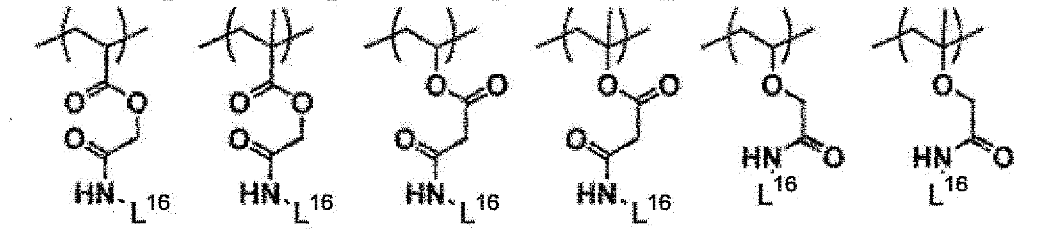
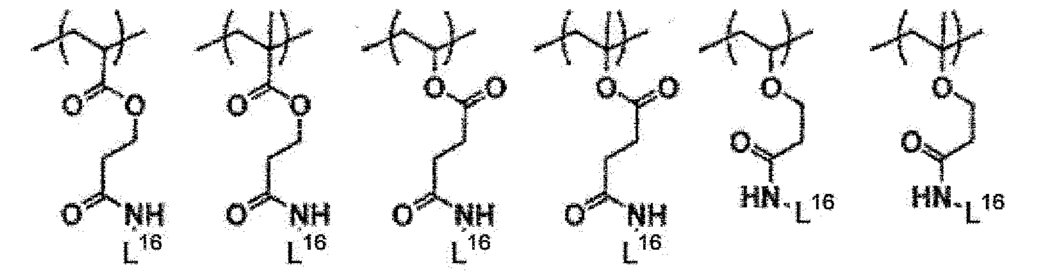
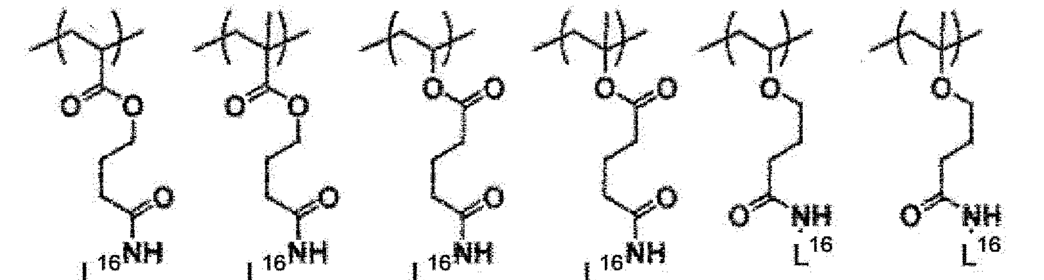
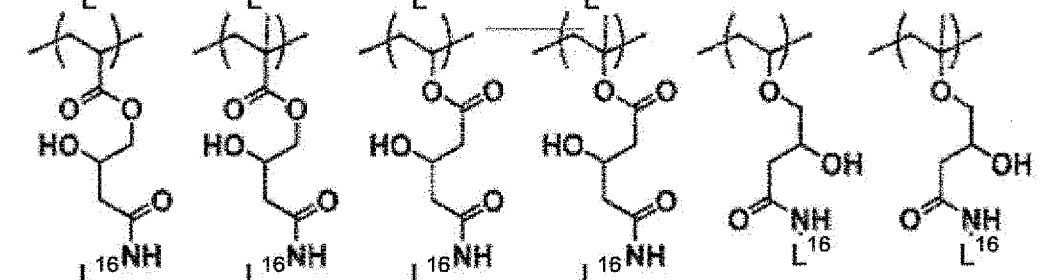
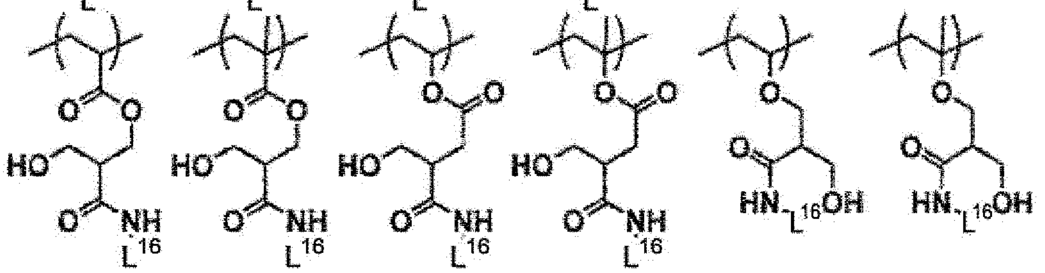

[Chemical 13]

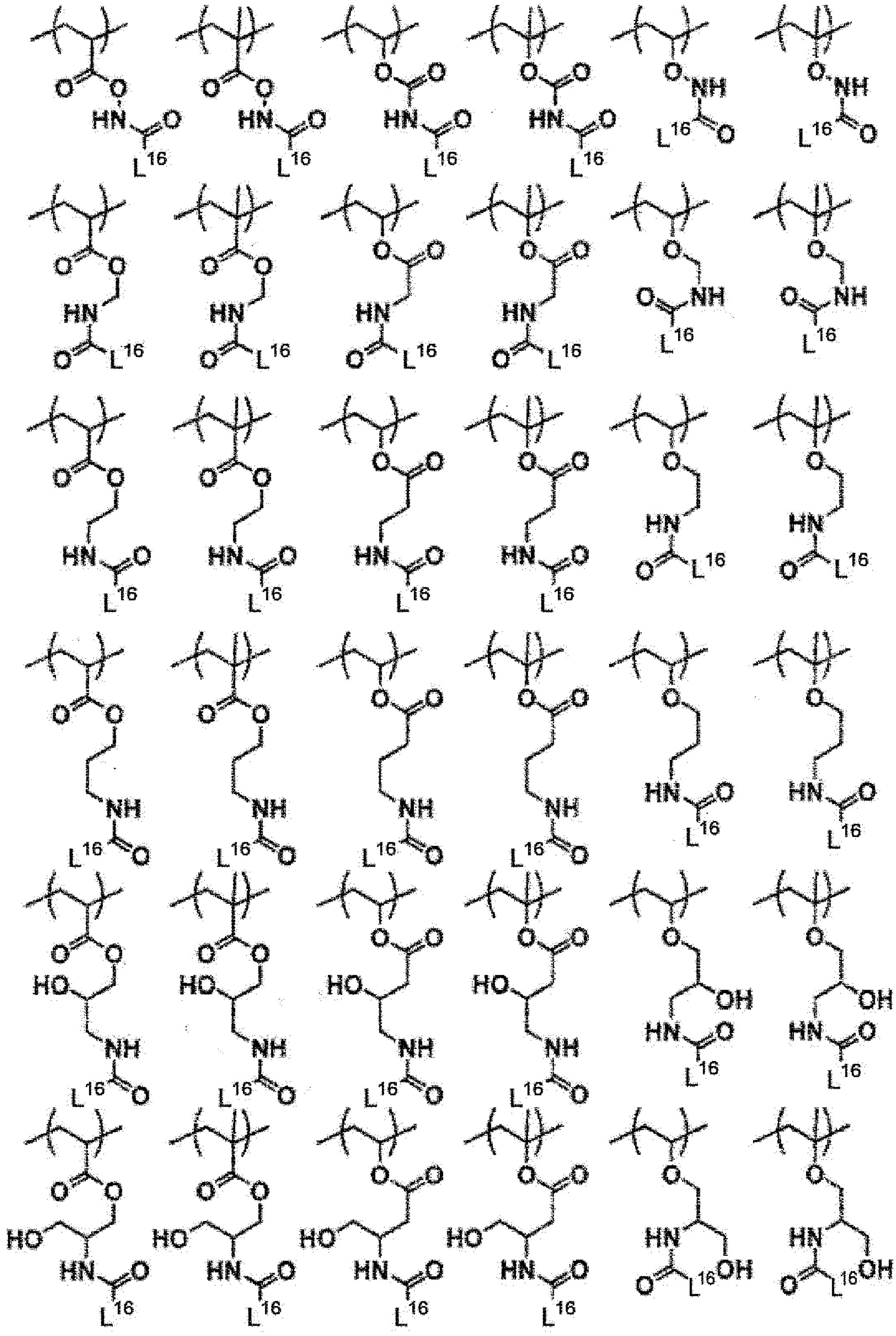

[Chemical 14]

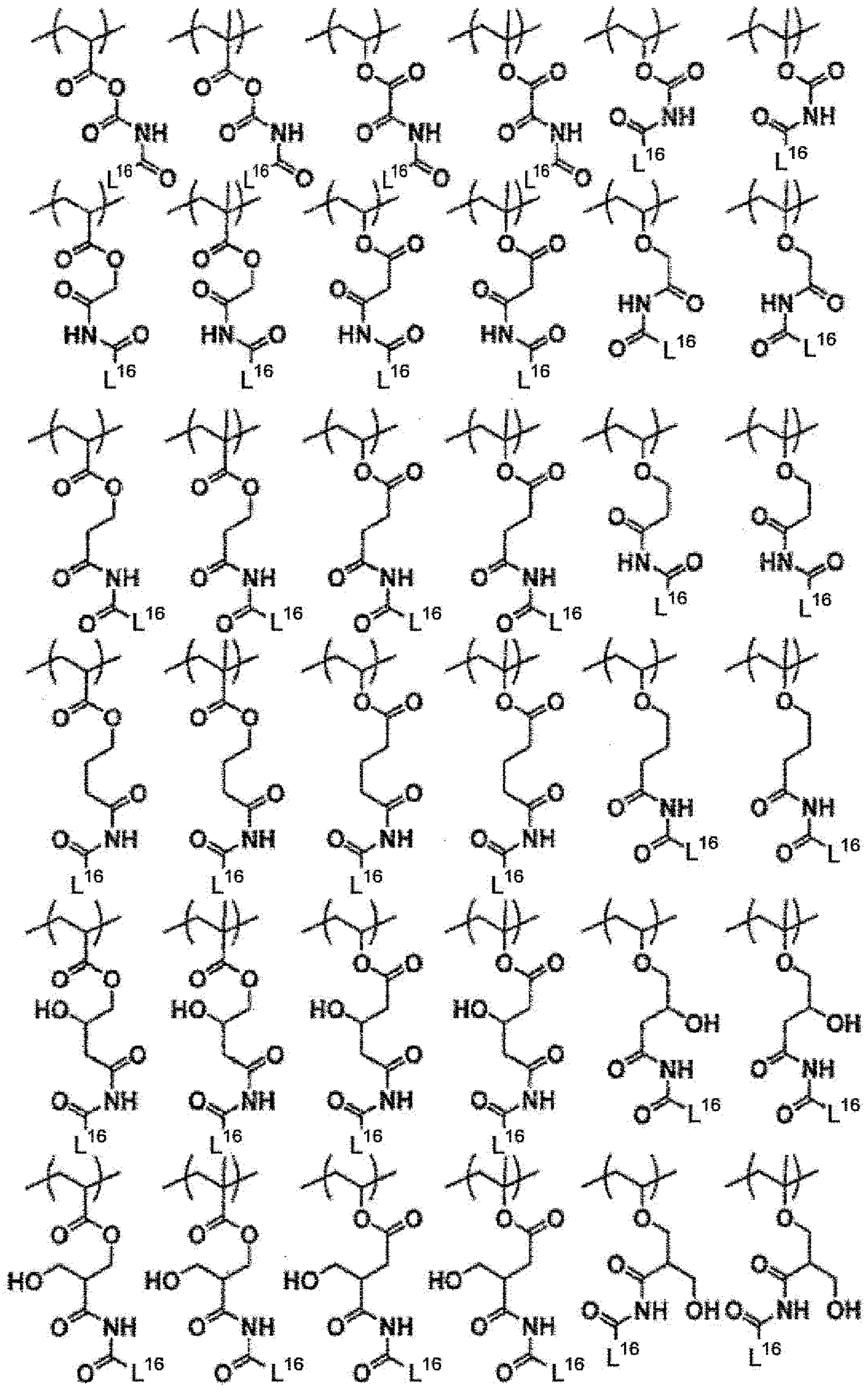

[Chemical 15]

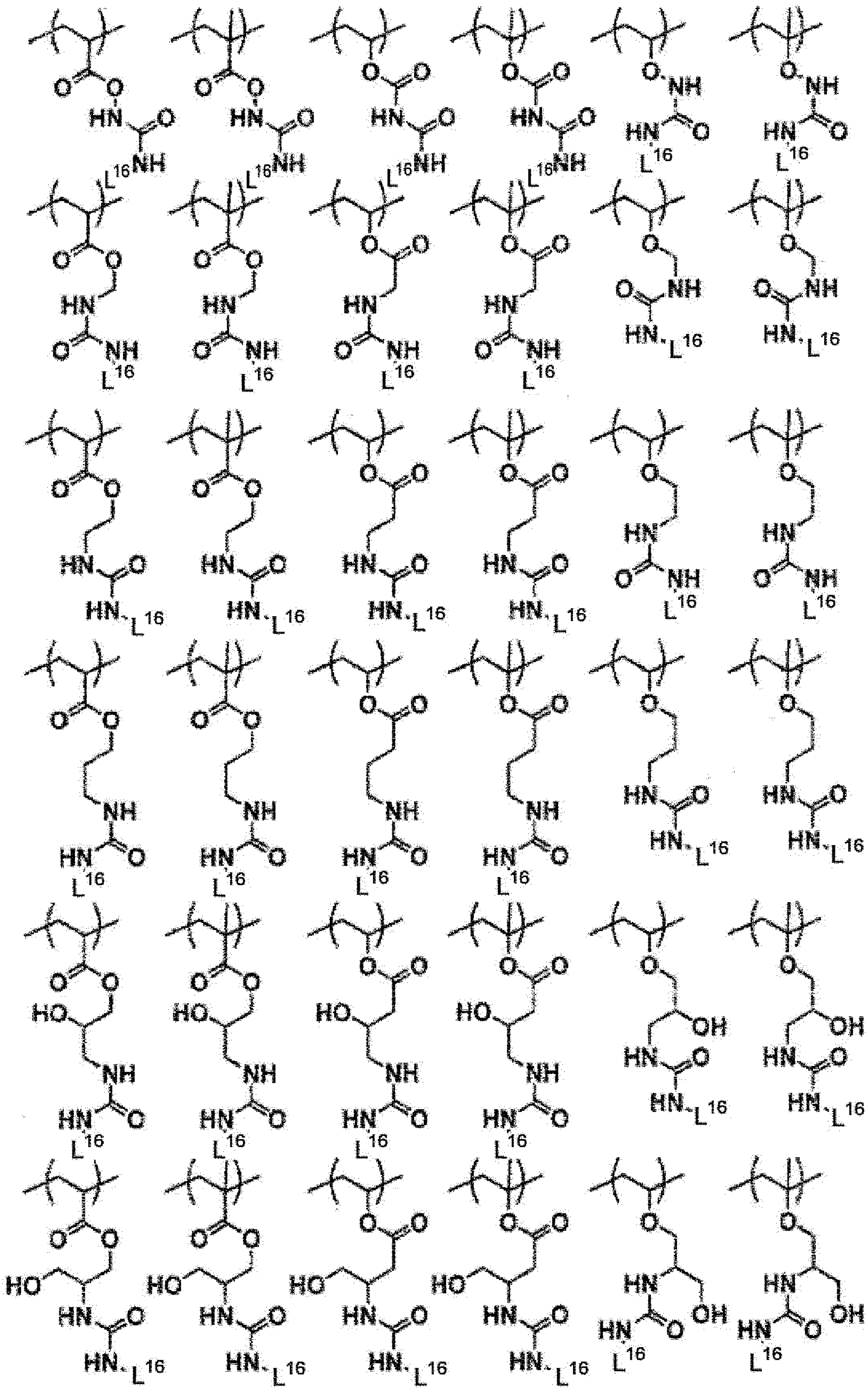

[Chemical 16]

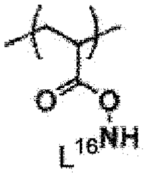 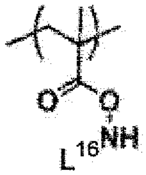 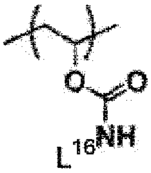 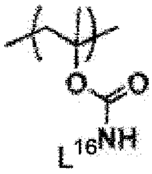 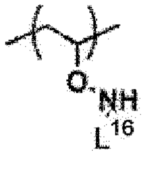 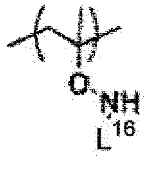

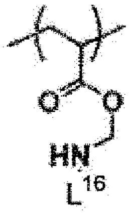 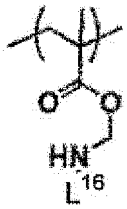 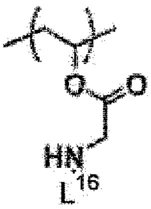 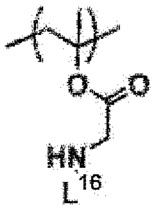 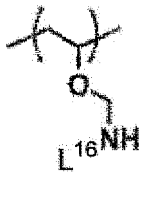 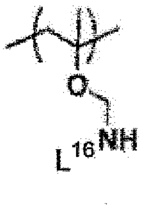

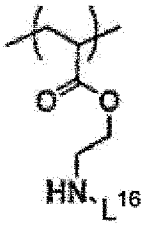 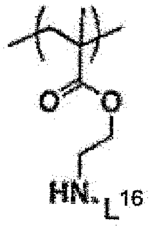 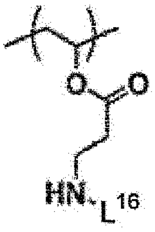 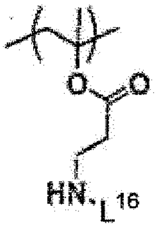 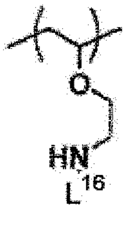 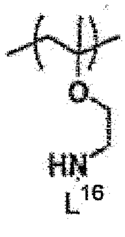

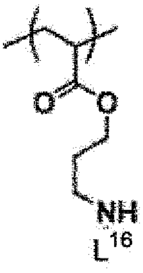 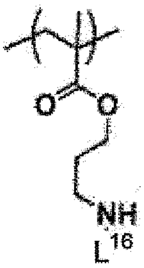 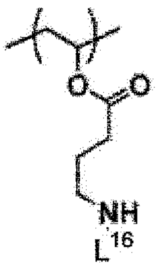 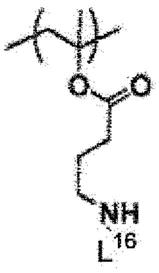 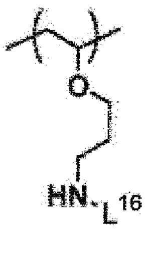 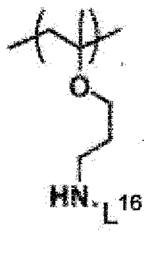

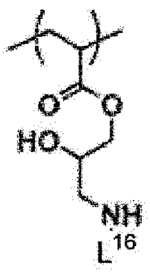 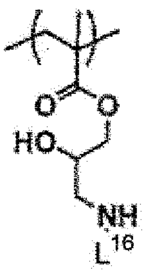 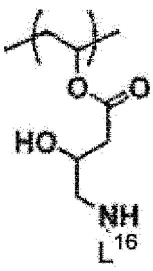 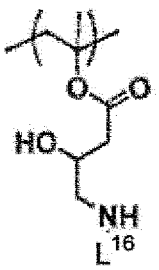 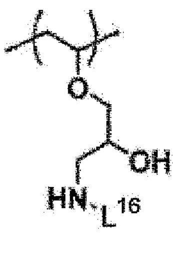 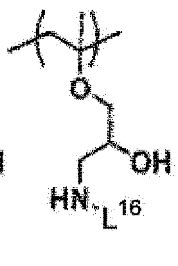

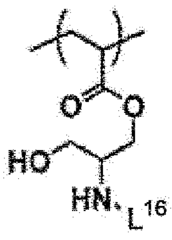 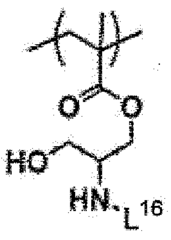 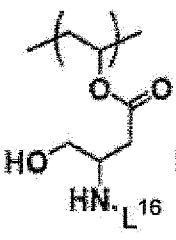 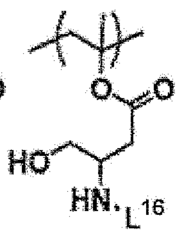 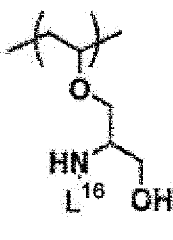 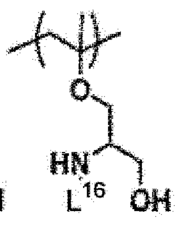

[Chemical 17]

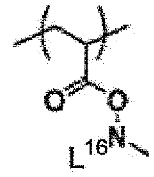 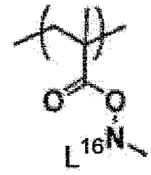 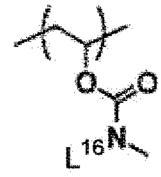 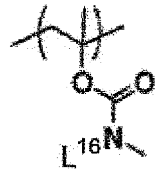 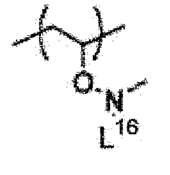 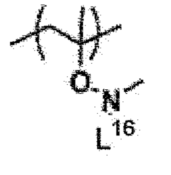

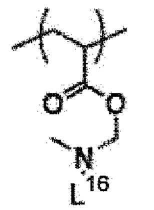 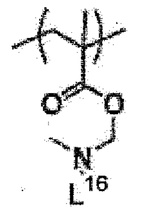 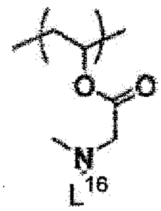 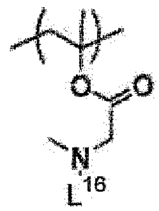 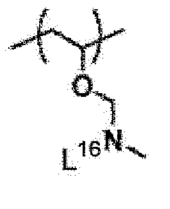 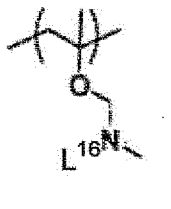

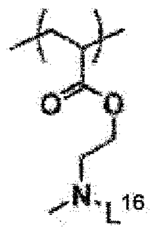 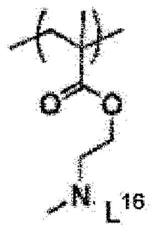 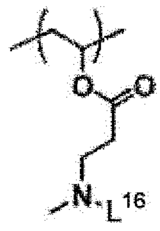 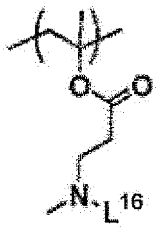 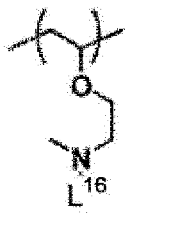 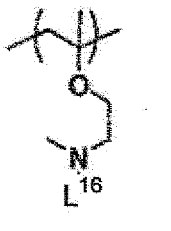

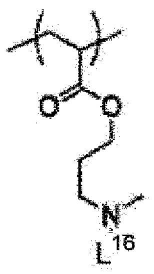 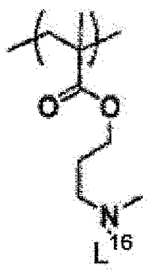 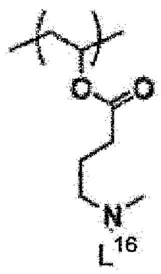 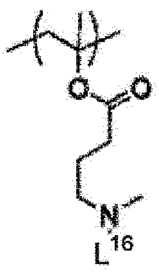 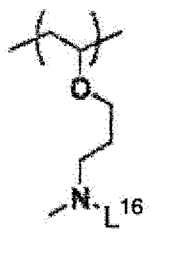 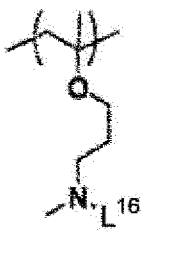

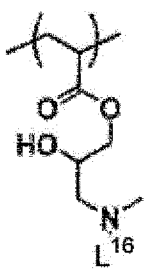 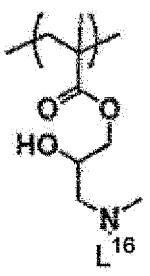 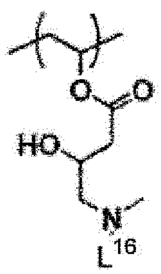 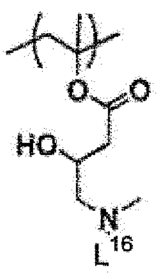 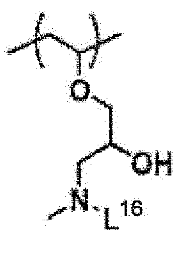 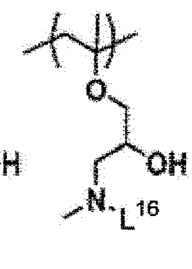

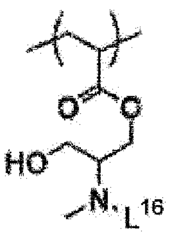 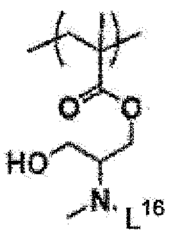 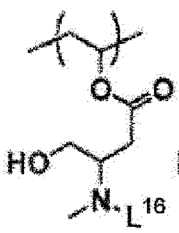 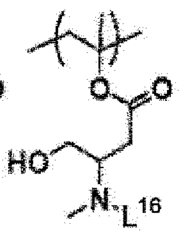 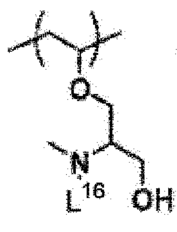 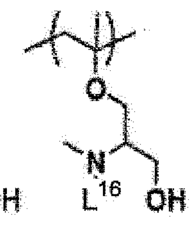

The structural units B represented by the formula (1) are preferably represented by any one of the structural units below.

[Chemical 18]

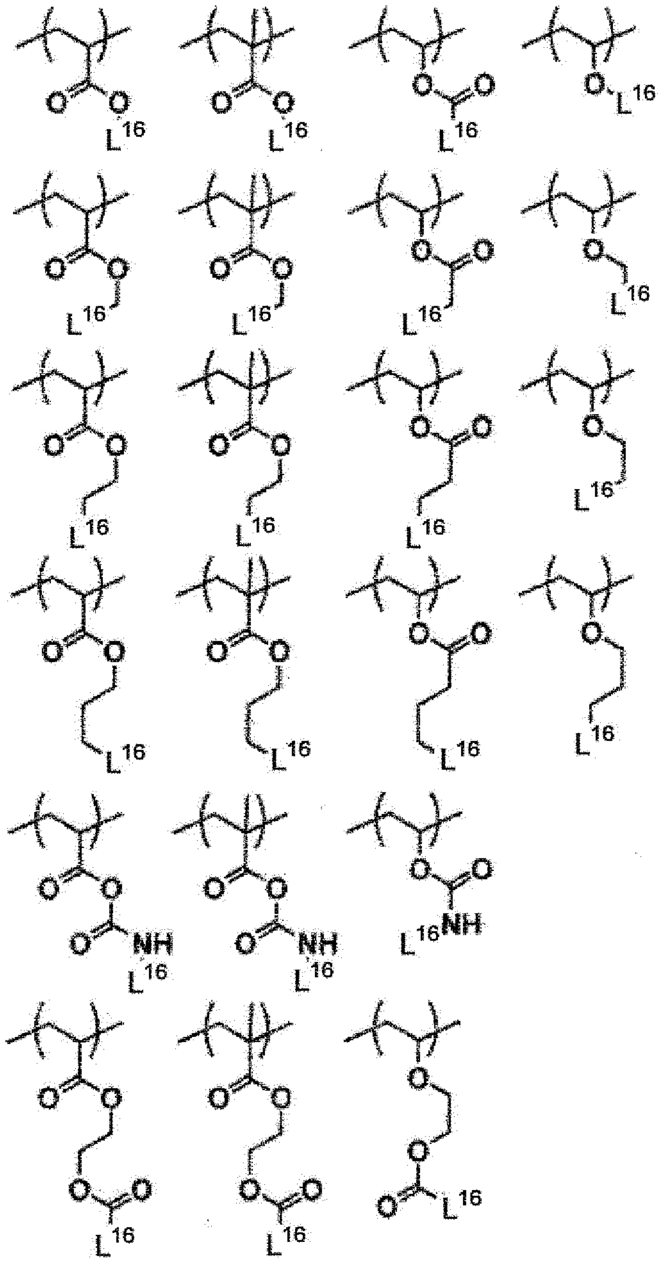

[Chemical 19]

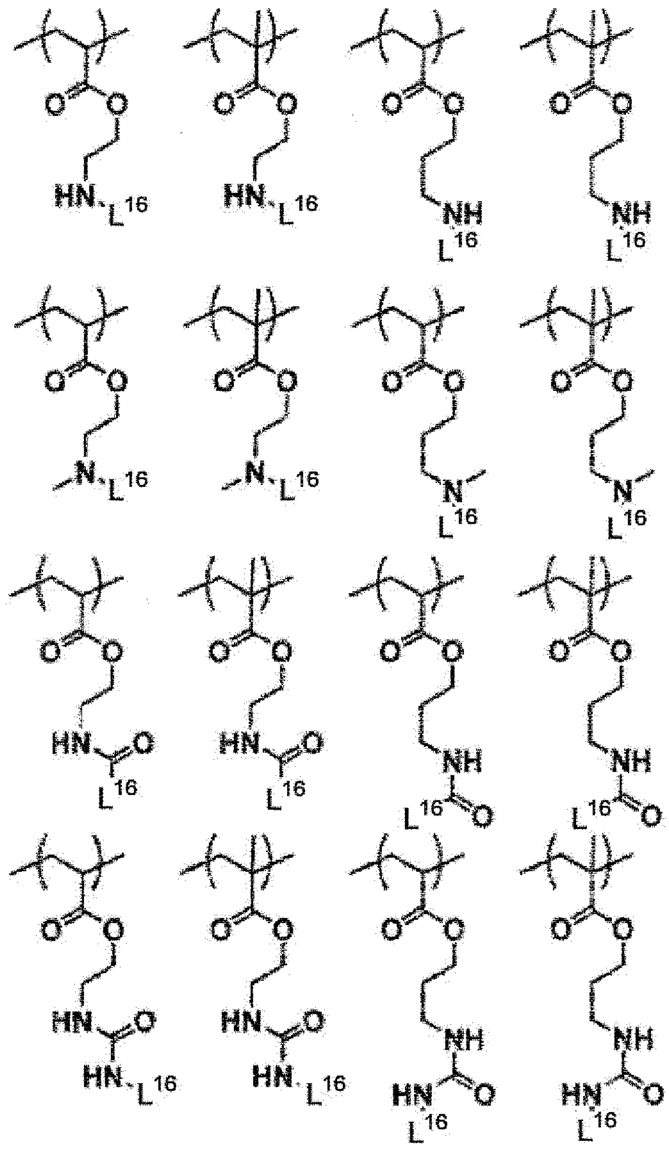

[Chemical 20]

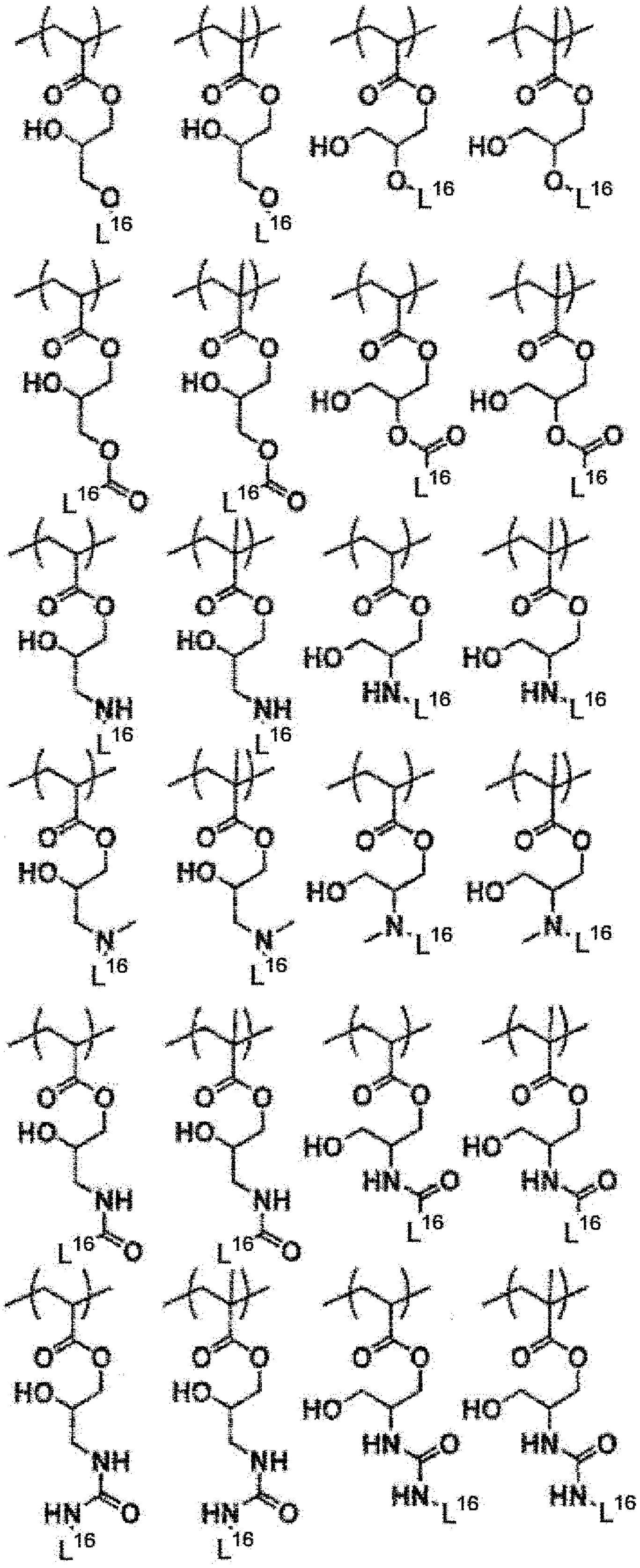

The structural units B represented by the formula (1) are more preferably represented by any one of the structural units below.

[Chemical 21]

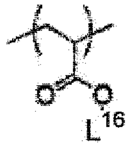
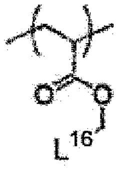
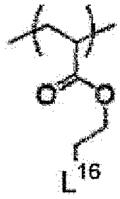
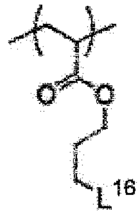
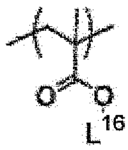
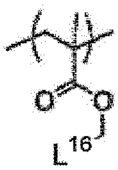
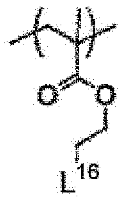
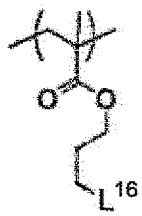
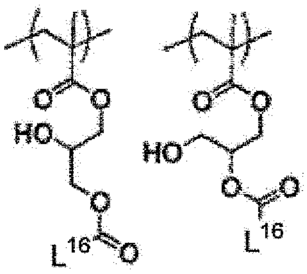

The structural units B represented by the formula (1) are further preferably represented by the structural unit below.

[Chemical 22]

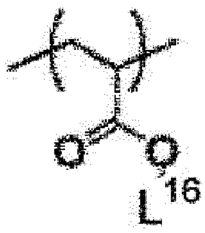

The structural units B are:

preferably structural units derived from 1H,1H,2H,2H-tridecafluoro-1-octyl acrylate, structural units derived from 1H,1H,2H,2H-heptadecafluoro-1-decyl acrylate, structural units derived from 1H,1H,2H,2H-tridecafluoro-1-octyl methacrylate, structural units derived from 1H,1H,2H,2H-heptadecafluoro-1-decyl methacrylate, structural units derived from 1H,1H,2H,2H-tridecafluoro-1-vinyloctanoate, structural units derived from 1H,1H,2H,2H-heptadecafluoro-1-vinyldecanoate, structural units derived from 1H, 1H, 2H, 2H-tridecafluoro-1-octyl vinyl ether, or structural units derived from1H, 1H, 2H, 2H-heptadecafluoro-1-decyl vinyl ether;

more preferably structural units derived from 1H,1H,2H,2H-tridecafluoro-1-octyl acrylate, structural units derived from 1H,1H,2H,2H-heptadecafluoro-1-decyl acrylate, structural units derived from 1H,1H,2H,2H-tridecafluoro-1-octyl methacrylate, or structural units derived from 1H,1H,2H,2H-heptadecafluoro-1-decyl methacrylate;

further preferably structural units derived from 1H,1H,2H,2H-tridecafluoro-1-octyl acrylate or structural units derived from 1H,1H,2H,2H-heptadecafluoro-1-decyl acrylate.

The polymer 1 may include two or more types of structural units B, and may include, for example, structural units derived from 1H,1H,2H,2H-tridecafluoro-1-octyl acrylate and structural units derived from 1H,1H,2H,2H-heptadecafluoro-1-decyl acrylate.

Structural units C

The structural units C are represented by the formula (2), and structural units thereof are independently selected.

[Chemical 23]

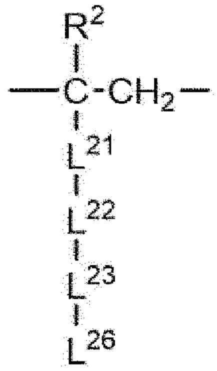

Formula (2)

In the formula (2),

$R^2$ represents a hydrogen atom or a methyl group,
$L^{21}$ represents -CO-O-, -O-CO-, or -O-,
$L^{22}$ represents a single bond, $-CH_2-$, $-CH_2-CH_2-$, $-CH_2-CH_2-CH_2-$, $-CH(CH_3)-CH_2-$, $-CH_2-CH(CH_3)-$, $-CH_2-CH(OH)-CH_2-$, or $-CH_2-CH(CH_2OH)-$,
$L^{23}$ represents a single bond, -CO-O-, -O-CO-, -O-, - CO-NH-, -NH-CO-, -CO-NH-CO-, -NH-CO-NH-, -NH-, or $-N(CH_3)-$,
$L^{26}$ represents $-(CH_2)_m-(R^{r2}O)_q-R^{r1}$,
$R^{r1}$ represents a hydrogen atom or a $C_{1-15}$ alkyl group,
$R^{r2}$ represents a $C_{1-15}$ alkylene group, and
q represents an integer of 0 to 1000000, and m represents an integer of 0 to 10.

When q is an integer of 2 or greater, a plurality of moieties $-(R^{r2}O)-$ may be identical or different.

In $L^{21}$, $L^{22}$, and $L^{23}$ each representing a horizontally written chemical formula, a left side of the horizontally written chemical formula corresponds to an upper side of the formula (2) (the main-chain side of the polymer), and a right side of the horizontally written chemical formula corresponds to a lower side of the formula (2) (an end side of a side chain of the polymer).

$R^2$ is preferably a hydrogen atom.

$L^{21}$ is preferably -CO-O- or -O-CO-, more preferably - CO-O-.

$L^{22}$ is preferably a single bond, $-CH_2-$, $-CH_2-CH_2-$, or $-CH_2-CH_2-CH_2-$, more preferably a single bond.

$L^{23}$ is preferably a single bond, -NH-, or $-N(CH_3)-$, more preferably a single bond.

When $R^{r1}$ constituting $L^{26}$ is an alkyl group, $R^{r1}$ specifically represents $C_tH_{2t+1}-$, in which t represents an integer of 1 to 15. t is preferably an integer of 1 to 3, more preferably 1.

$R^{r2}$ constituting $L^{26}$ is, for example, $-CH_2-$, $-CH_2-CH_2-$, $-CH_2-CH_2-CH_2-$, $-CH_2-CH_2-CH_2-CH_2-$, $-CH_2-CH(CH_3)-$, or $-CH(CH_3)-CH_2-$. When q is the integer 2, a plurality of moieties $-(R^{r2}O)-$ may be identical or different.

q constituting $L^{26}$ is preferably an integer of 5 to 10000, more preferably an integer of 10 to 1000, further preferably an integer of 12 to 230, further more preferably an integer of 15 to 100, particularly preferably an integer of 20 to 50.

m constituting $L^{26}$ is preferably an integer of 0 to 4, more preferably an integer of 0 to 2, further preferably 0.

Examples of the structural units C represented by the formula (2) include the structural units below.

[Chemical 24]

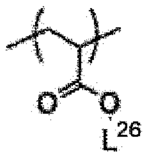 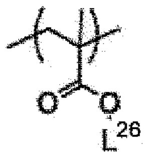 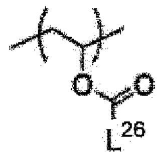 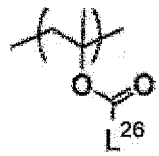 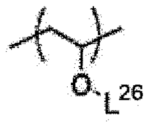 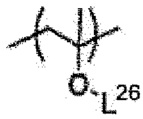

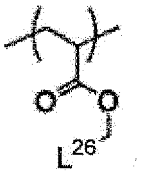 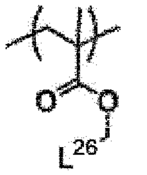 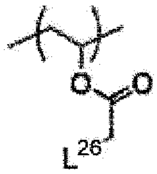 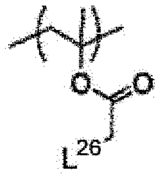 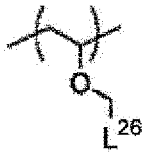 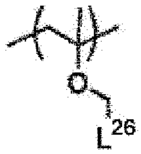

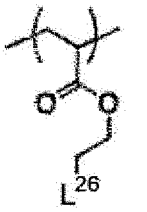 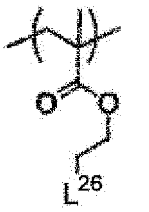 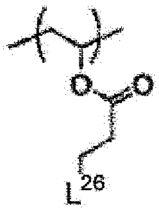 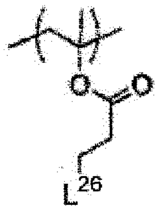 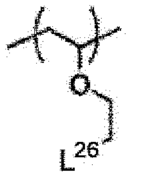 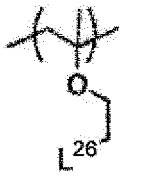

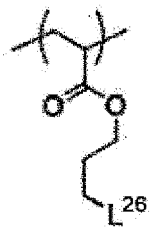 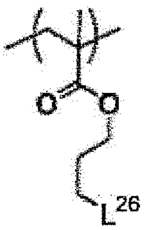 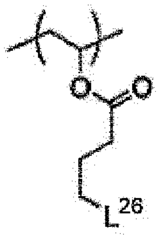 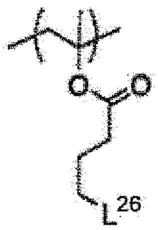 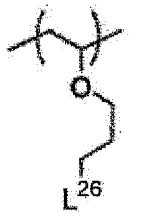 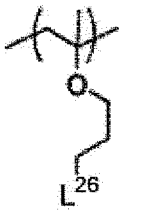

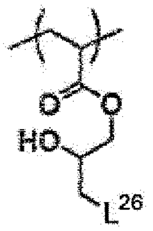 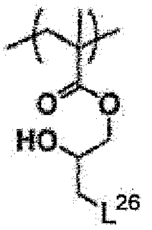 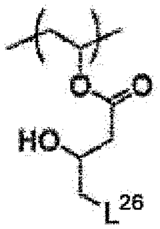 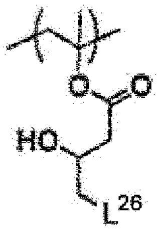 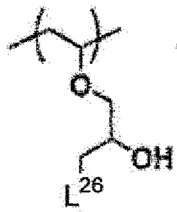 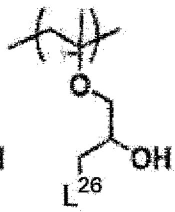

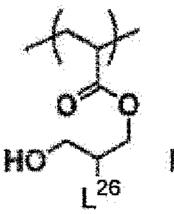 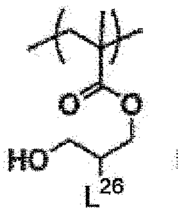 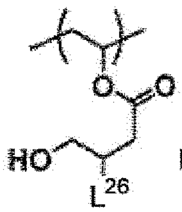 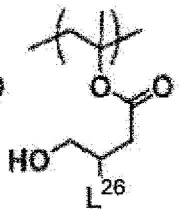 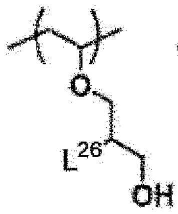 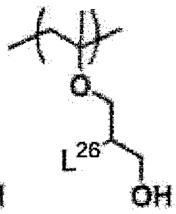

[Chemical 25]

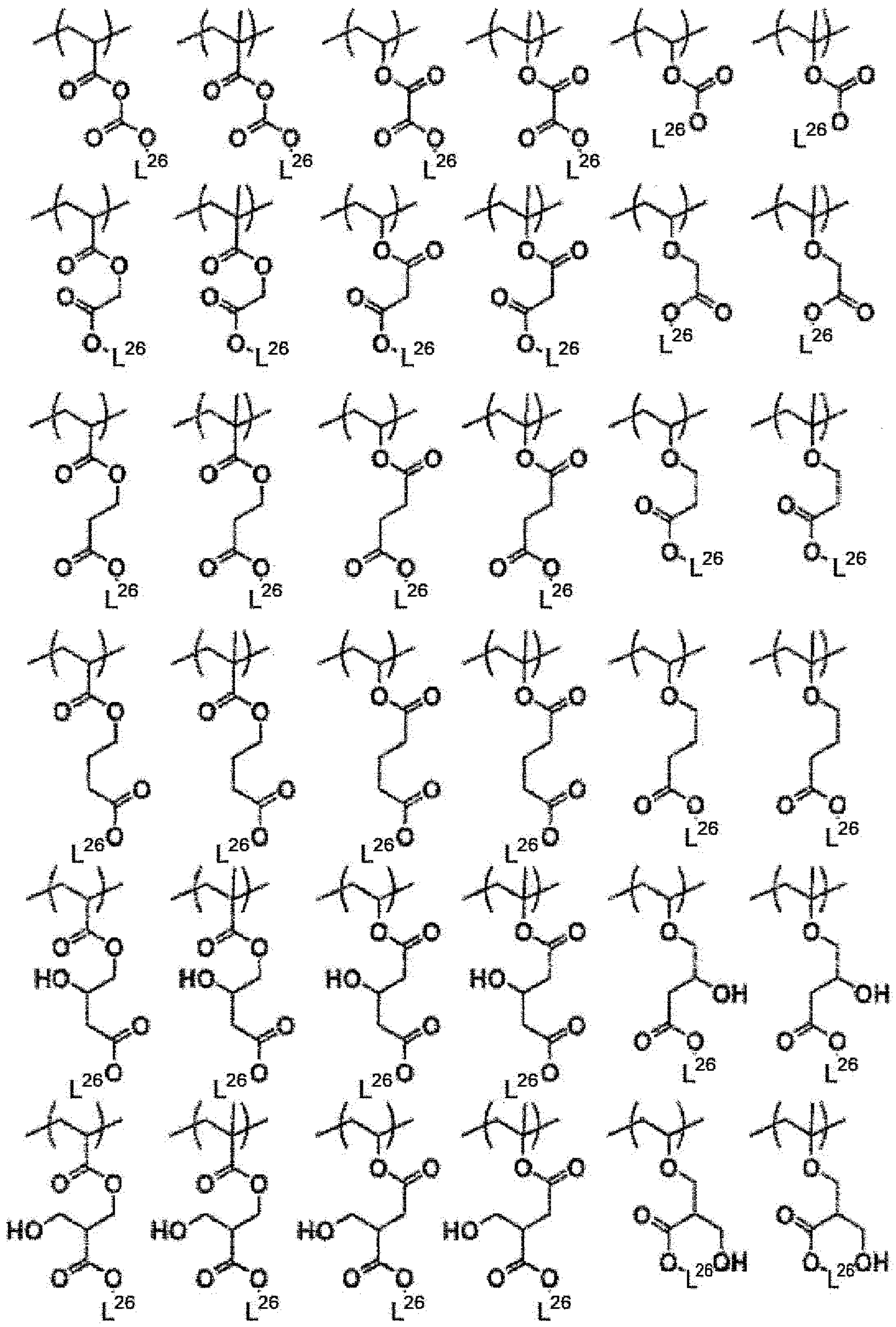

[Chemical 26]

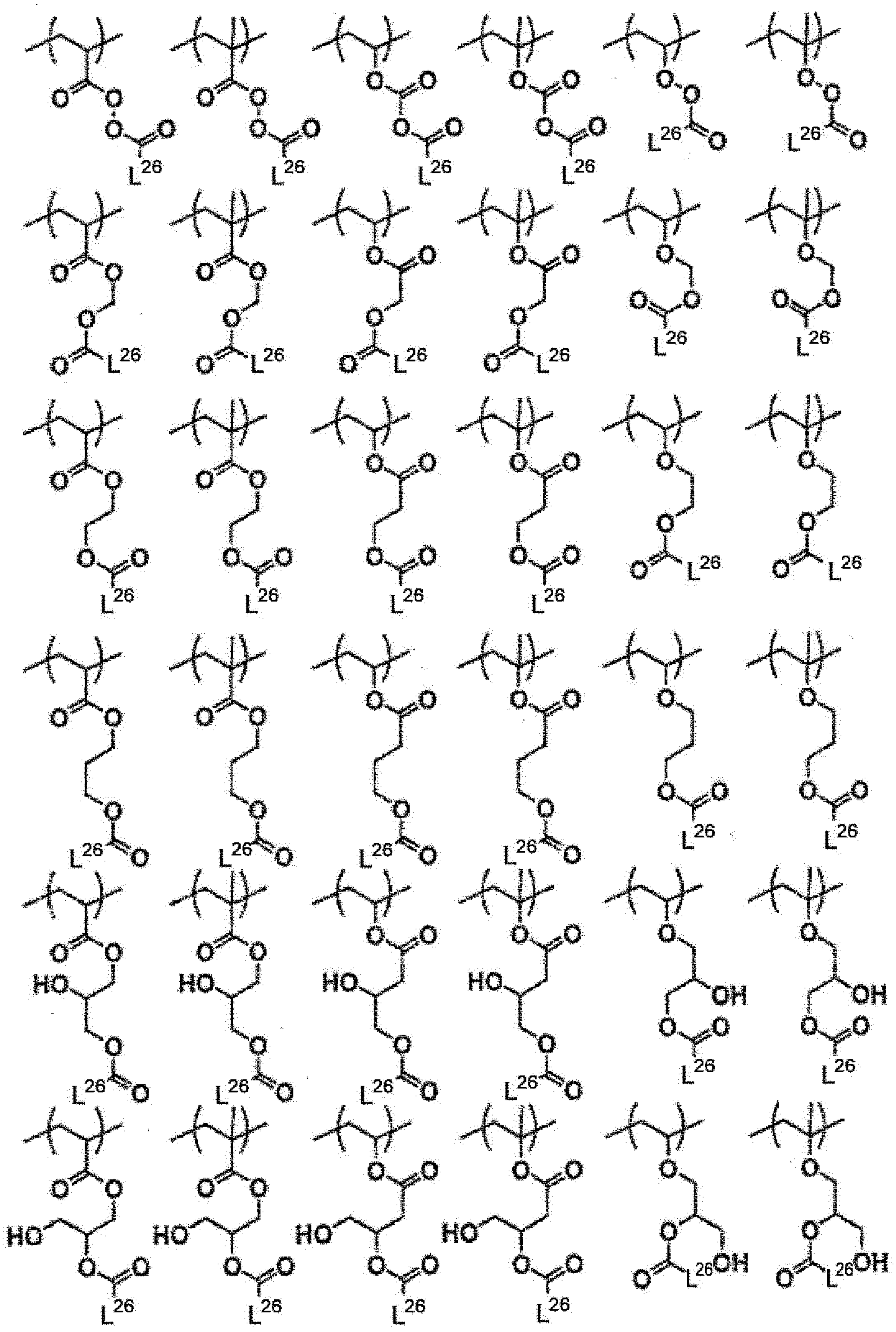

[Chemical 27]

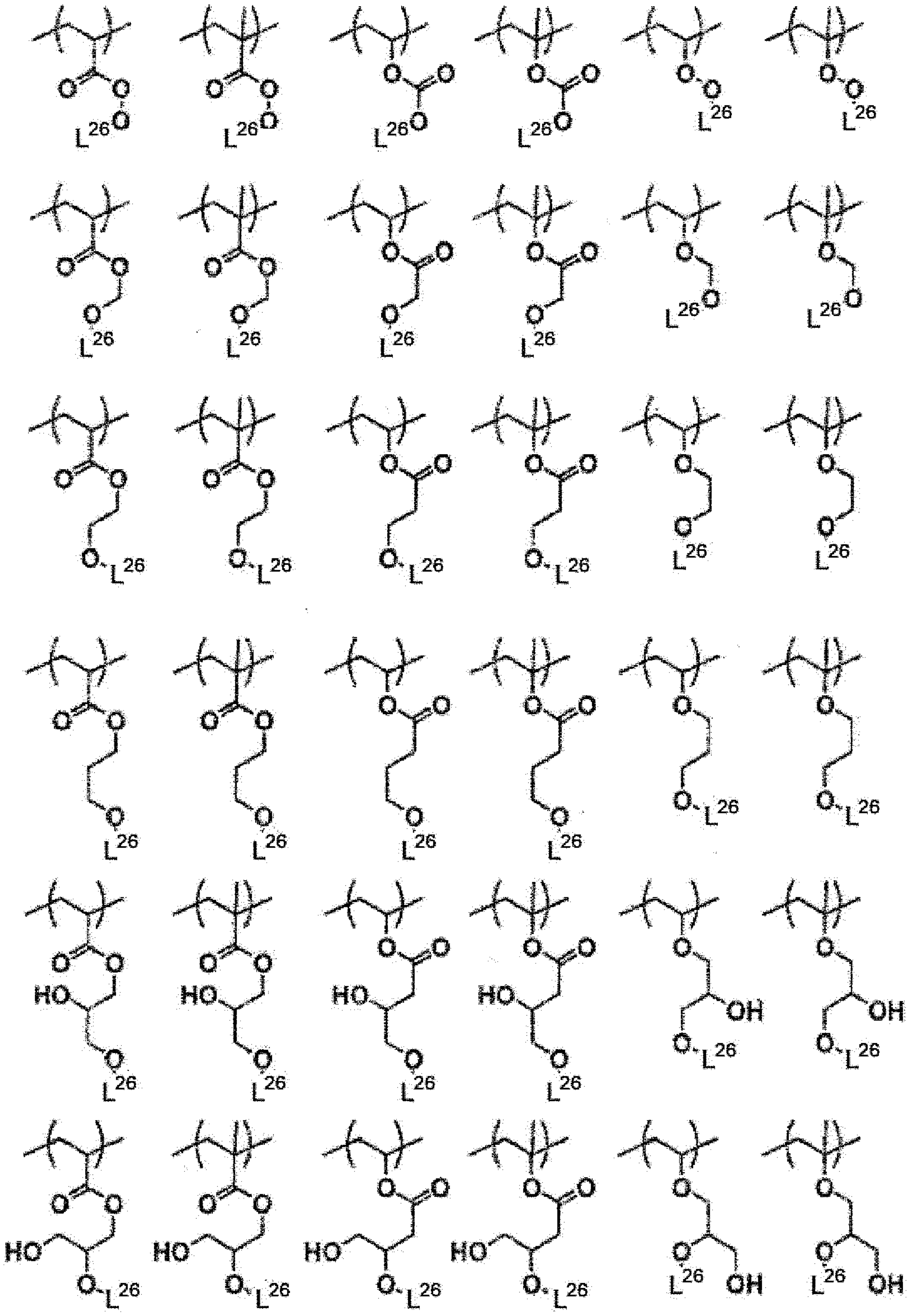

[Chemical 28]

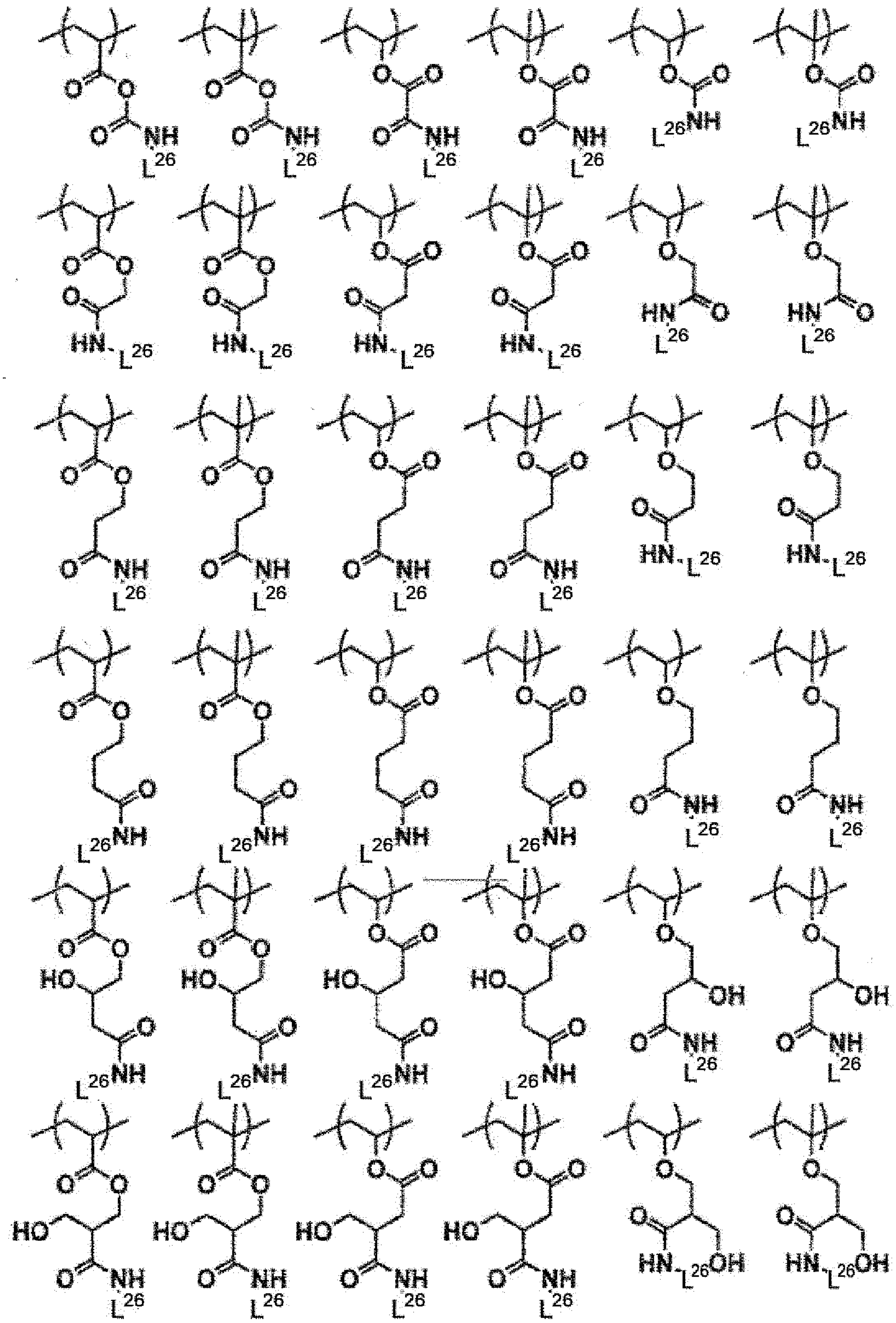

[Chemical 29]

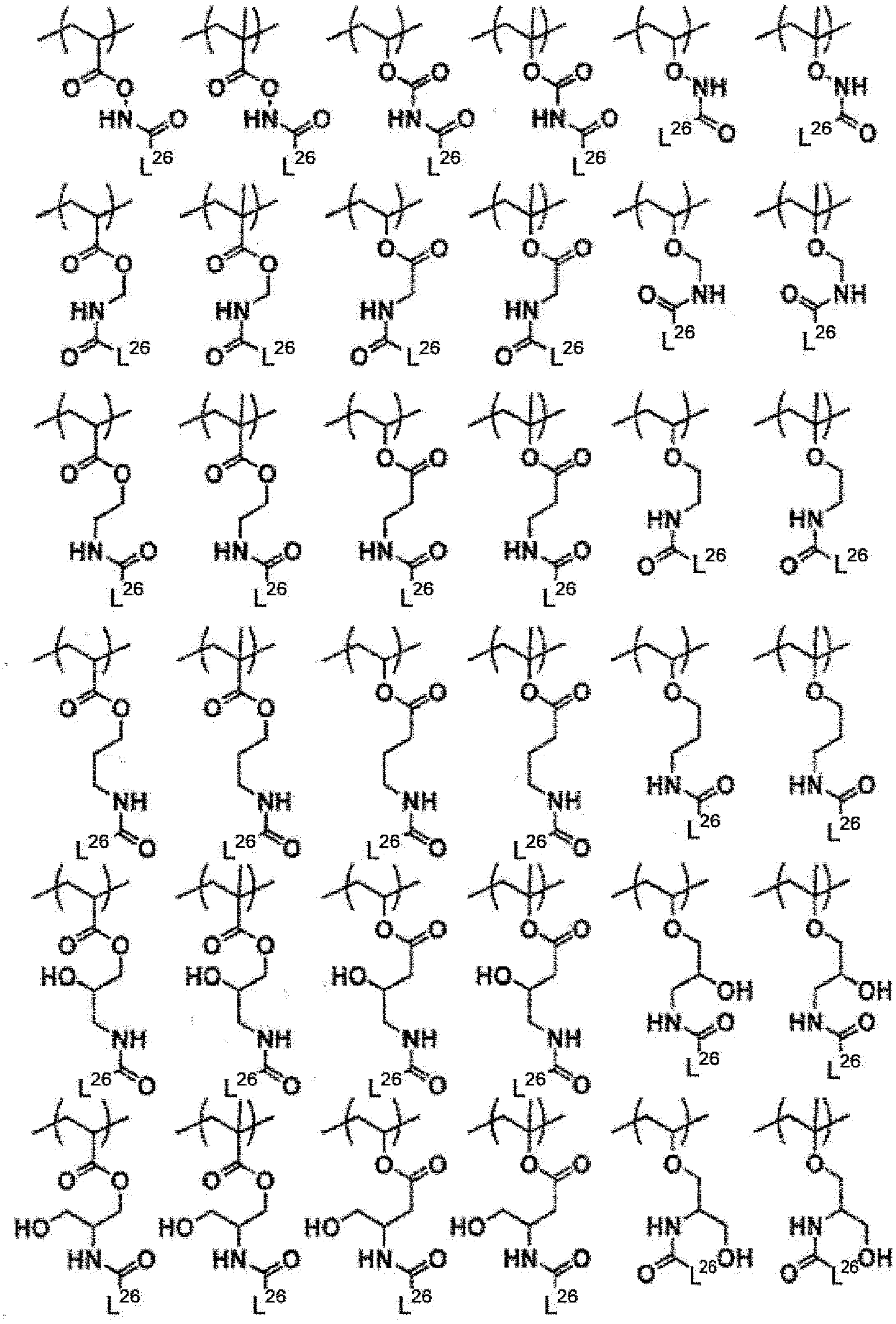

[Chemical 30]

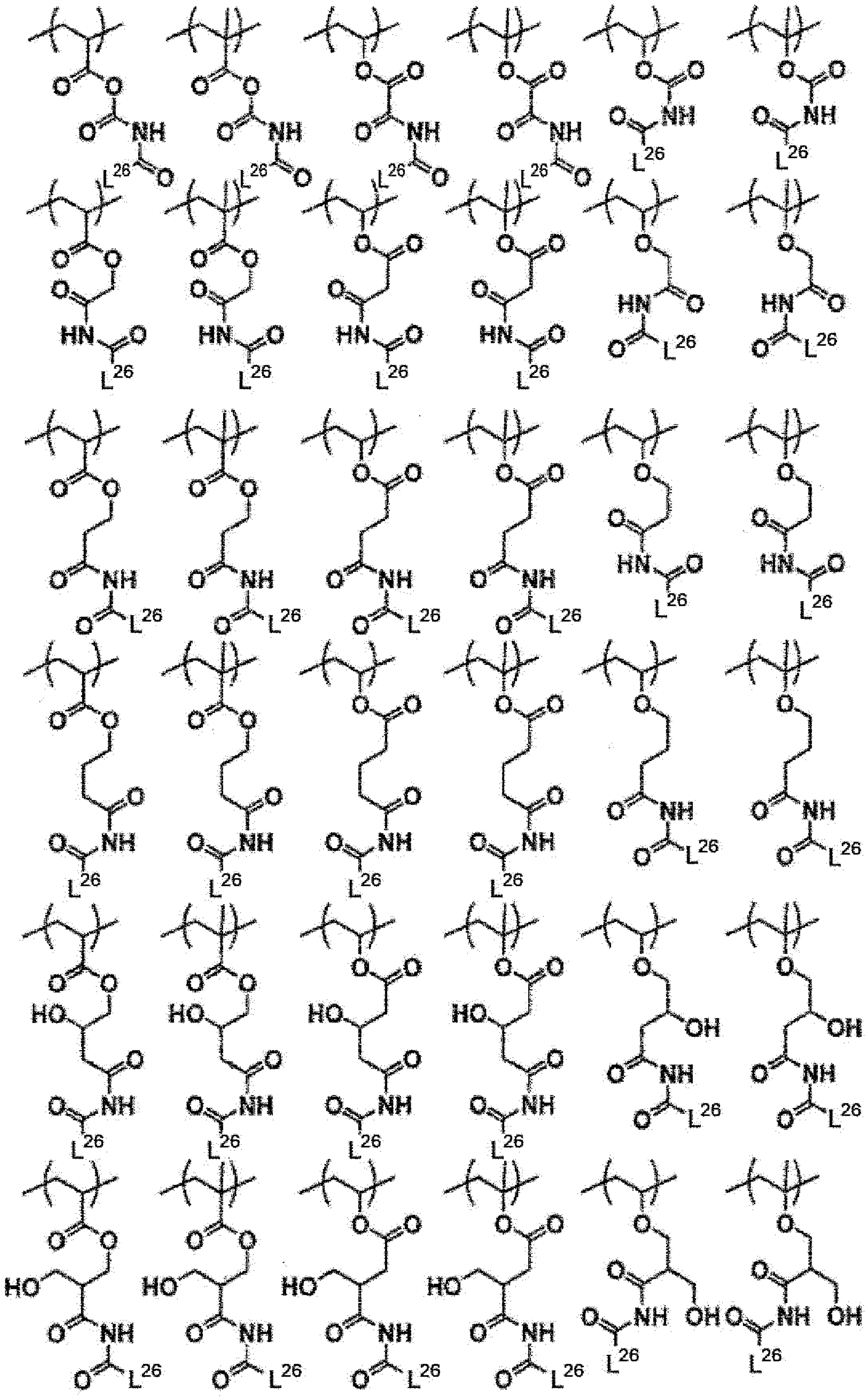

[Chemical 31]

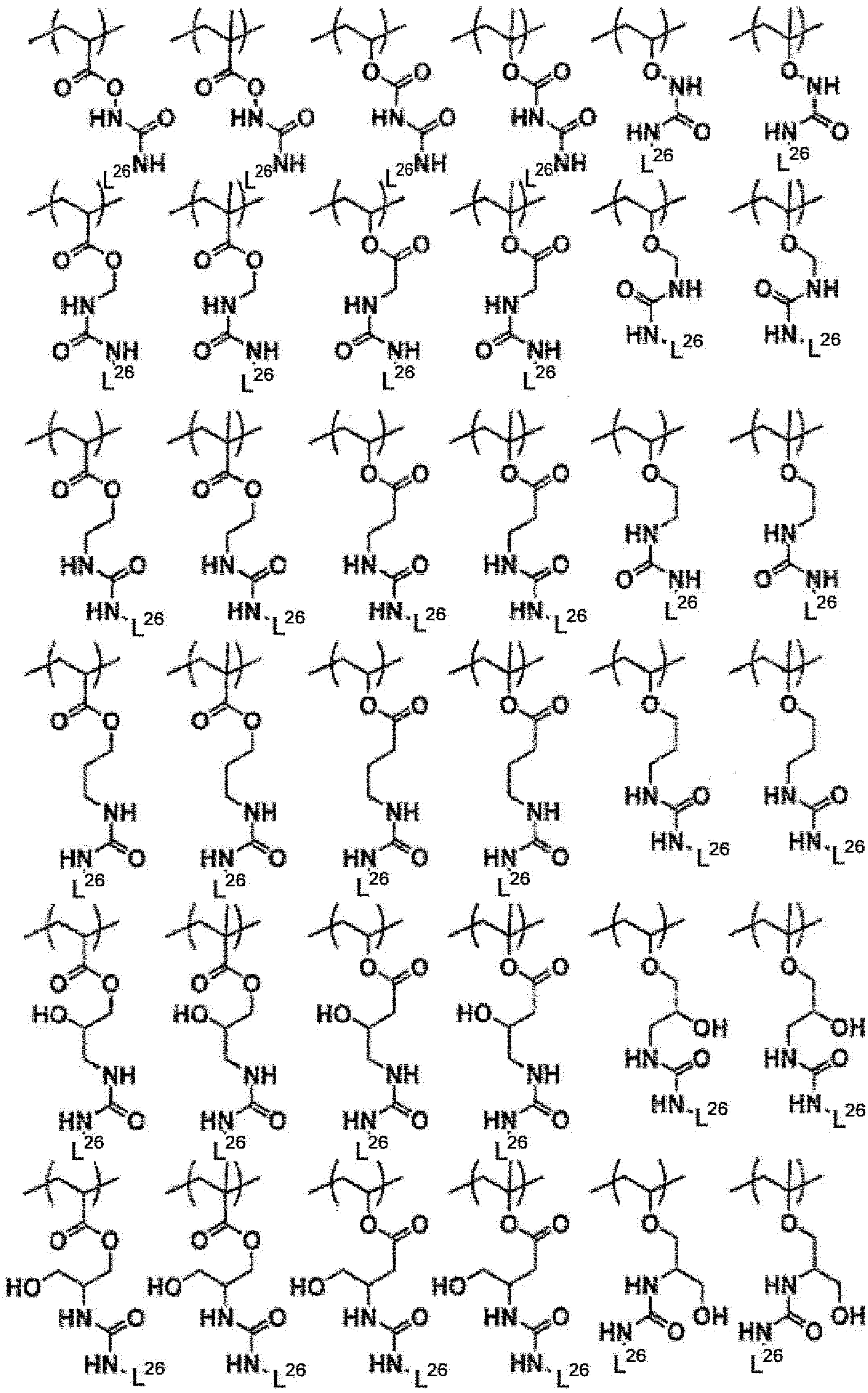

[Chemical 32]

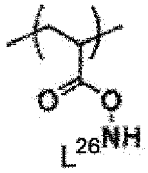 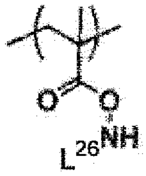 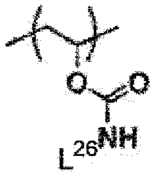 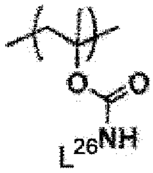 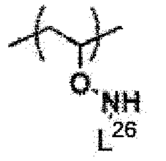 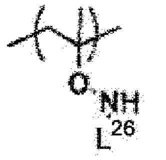

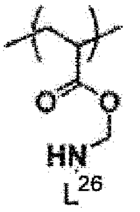 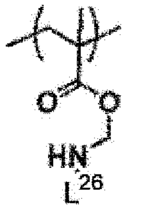 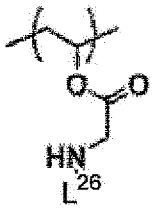 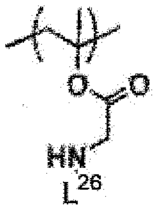 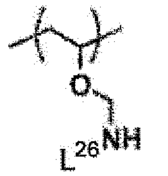 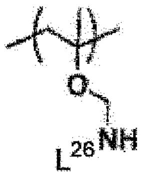

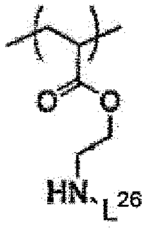 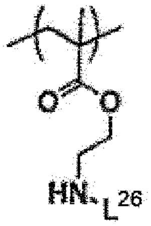 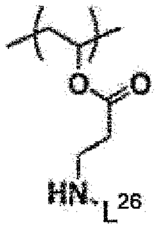 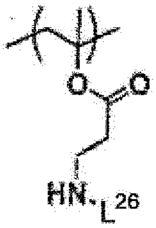 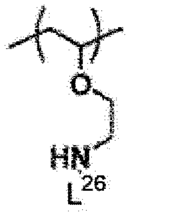 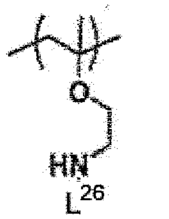

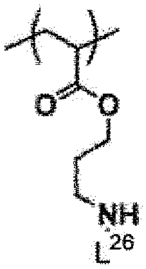 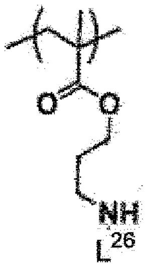 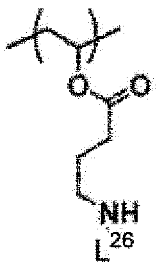 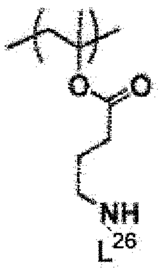 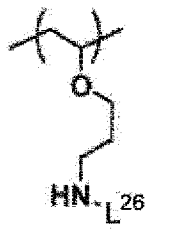 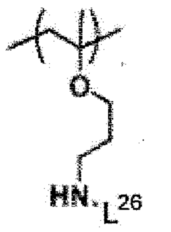

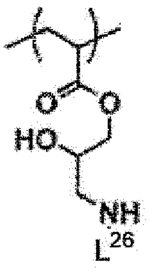 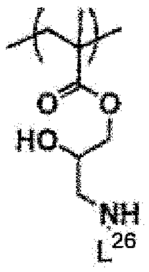 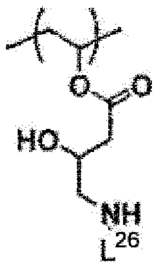 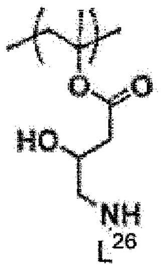 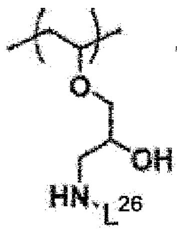 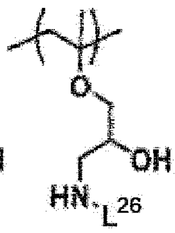

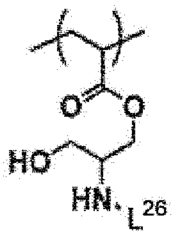 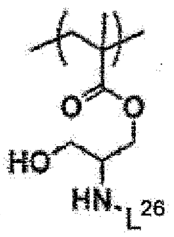 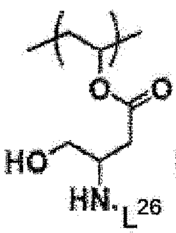 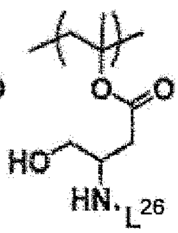 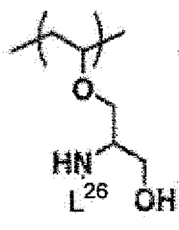 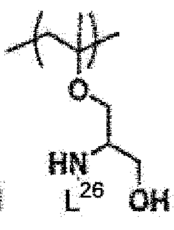

[Chemical 33]

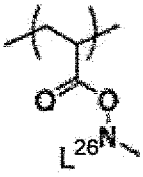 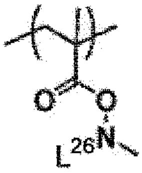 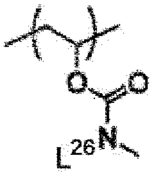 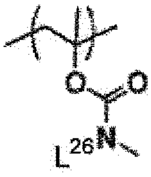 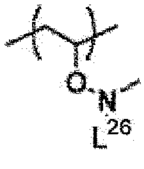 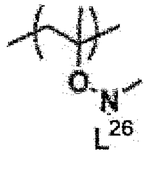

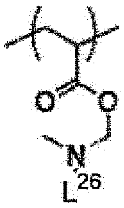 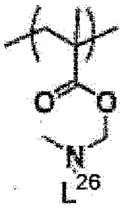 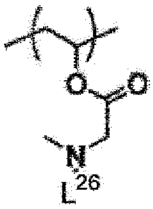 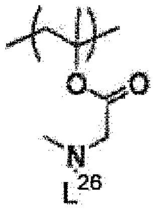 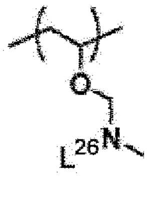 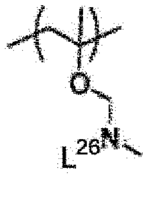

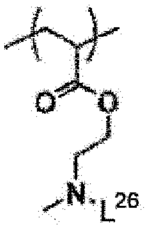 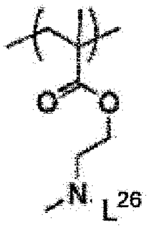 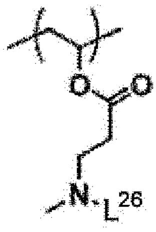 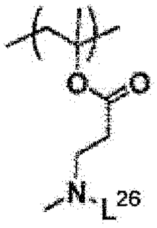 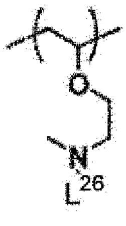 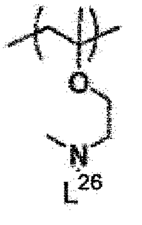

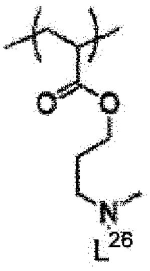 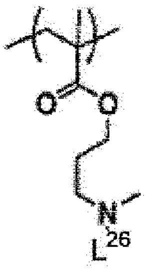 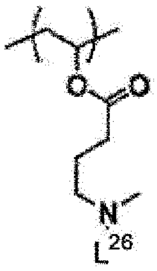 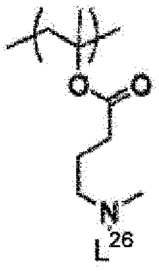 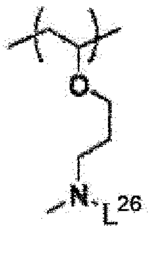 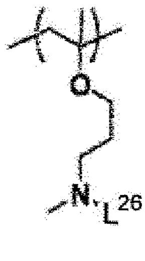

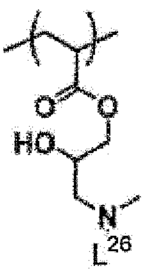 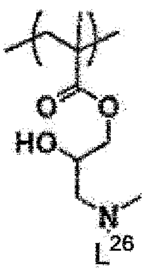 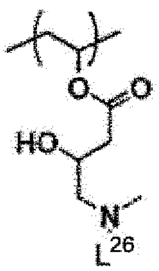 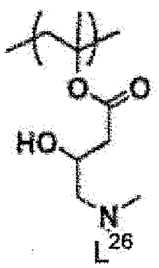 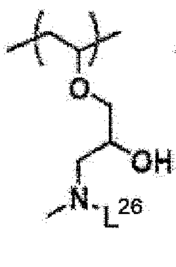 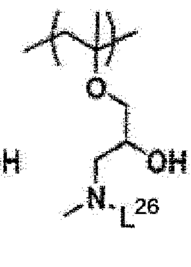

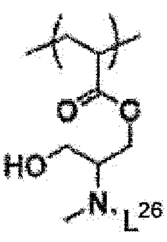 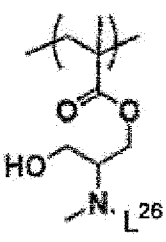 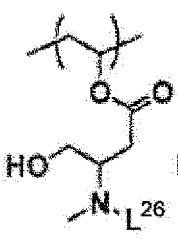 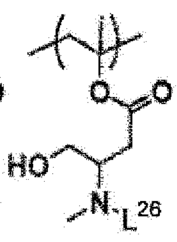 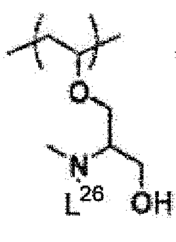 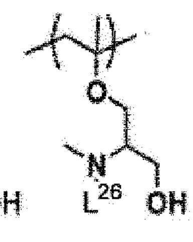

The structural units C represented by the formula (2) are preferably represented by any one of the structural units below.

[Chemical 34]

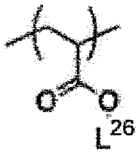 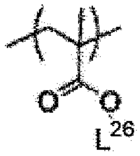 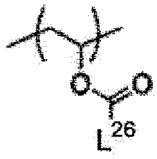 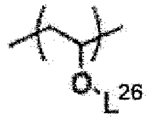

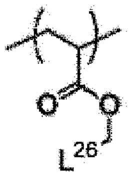 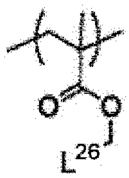 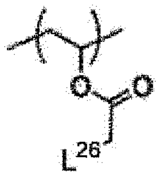 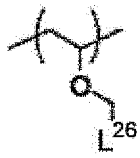

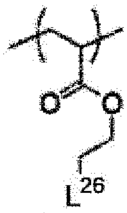 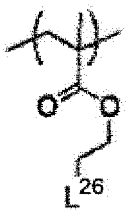 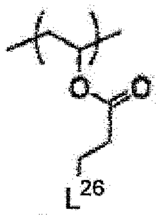 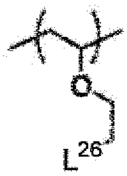

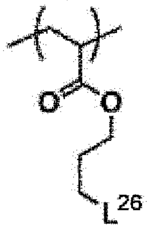 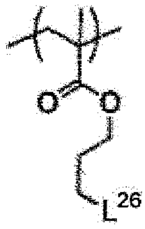 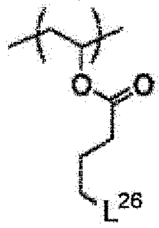 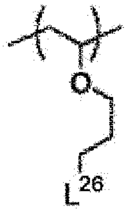

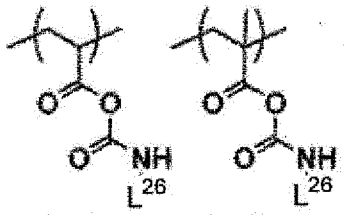 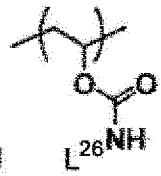

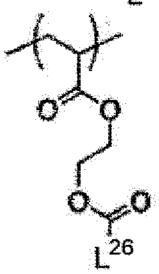 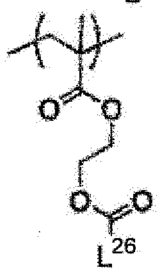 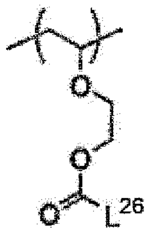

[Chemical 35]

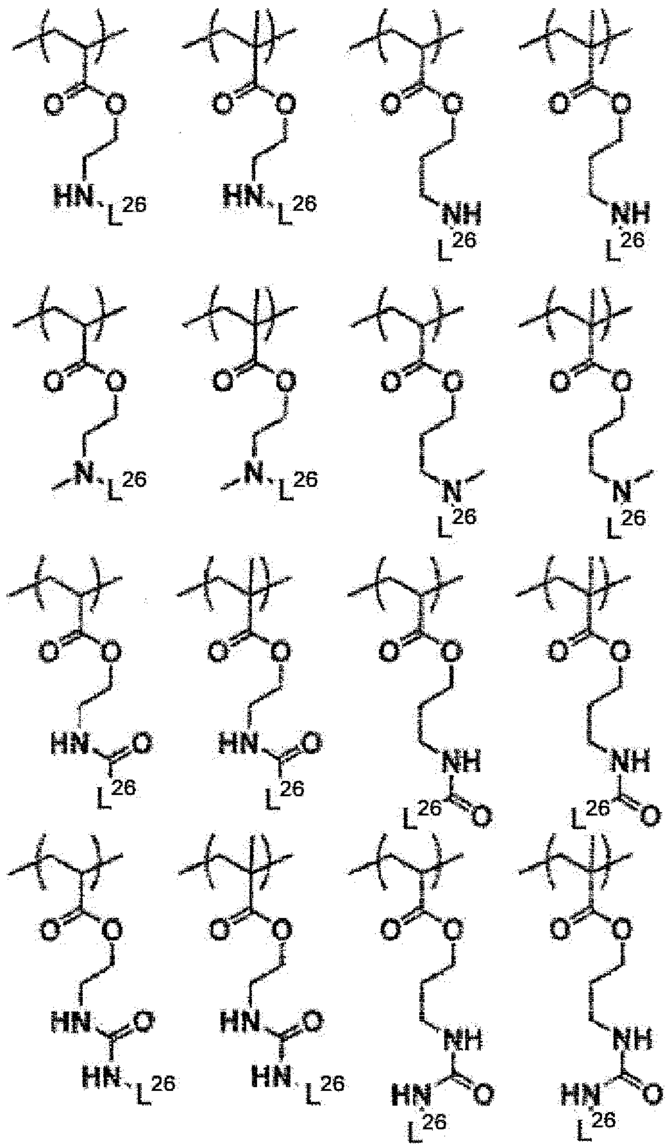

[Chemical 36]

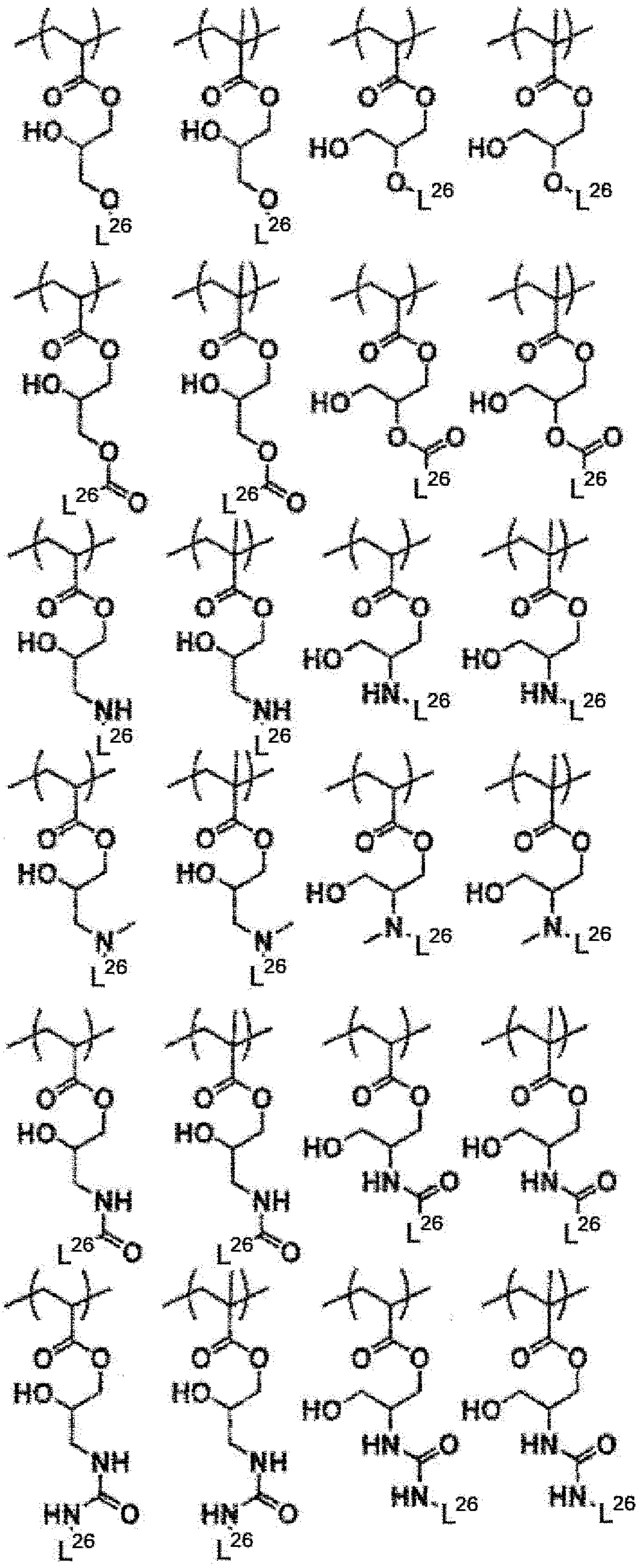

The structural units C represented by the formula (2) are more preferably represented by any one of the structural units below.

[Chemical 37]

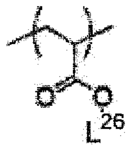 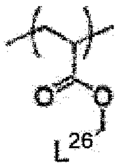 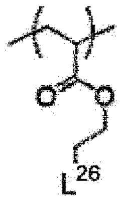 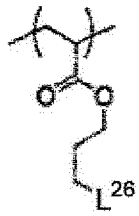

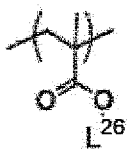 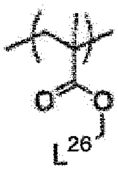 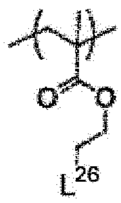 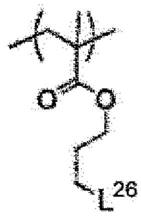

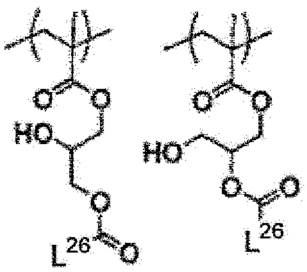

The structural units C represented by the formula (2) are further preferably represented by the structural unit below.

[Chemical 38]

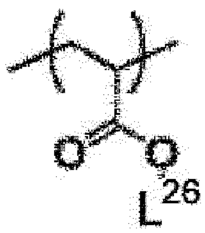

The polymer 1 may include two or more types of structural units C, and may include structural units derived from methoxy polyethylene glycol acrylate and structural units derived from methoxy polypropylene glycol acrylate.

Structural units D

The polymer 1 may further include structural units D that are at least one type selected from the group consisting of structural units represented by a formula (3) below and structural units represented by a formula (4) below.

[Chemical 39]

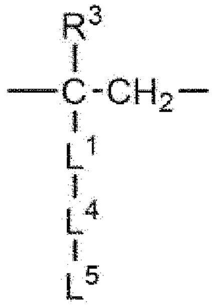

Formula (3)

[Chemical 40]

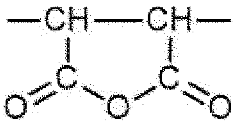

Formula (4)

In the formula (3),

$R^3$ represents a hydrogen atom or a methyl group,
$L^1$ represents -CO-O-, -O-CO-, or -O-,
$L^4$ represents a single bond or a $C_{1-8}$ alkylene group, and
$L^5$ represents a hydrogen atom, an epoxy group, - $CH(OH)-CH_2OH$, a carboxy group, a hydroxy group, an amino group, or a $C_{1-4}$ alkylamino group.

In $L^1$ representing a horizontally written chemical formula, a left side of the horizontally written chemical formula corresponds to an upper side of the formula (3) (the main-chain side of the polymer), and a right side of the horizontally written chemical formula corresponds to a lower side of the formula (3) (an end side of a side chain of the polymer).

Structural units represented by formula (3)

Preferable aspects of the structural units represented by the formula (3) are described as follows.
$R^3$ is preferably a hydrogen atom.
$L^1$ is preferably -CO-O- or -O-CO-, more preferably - CO-O-.
Examples of the $C_{1-8}$ alkylene group represented by $L^4$ include a methylene group, an ethylene group, an n-propylene group, a 1-methylethylene group, an n-butylene group, a 1,2-dimethylethylene group, a 1,1-dimethylethylene group, a 2,2-dimethylethylene group, an n-pentylene group, an n-hexylene group, an n-heptalene group, an n-octylene group, and a 2-ethyl-n-hexylene group.
$L^4$ is preferably a single bond, a methylene group, an ethylene group, or an n-propylene group, more preferably a methylene group.
Examples of the $C_{1-4}$ alkylamino group represented by $L^5$ include a methylamino group, an ethylamino group, a propylamino group, a butylamino group, a dimethylamino group, and a diethylamino group.
$L^5$ is preferably a hydrogen atom, an epoxy group, or $-CH(OH)-CH_2OH$, more preferably a hydrogen atom.
Examples of the structural units D represented by the formula (3) include the structural units below.

[Chemical 41]

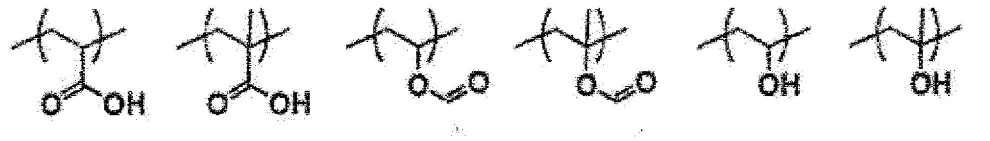

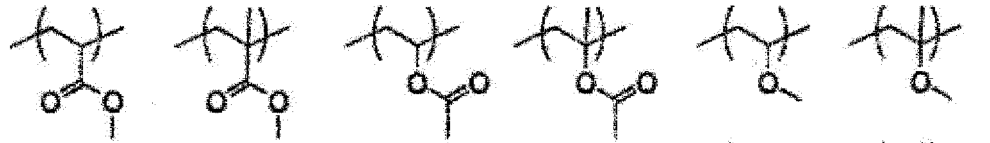

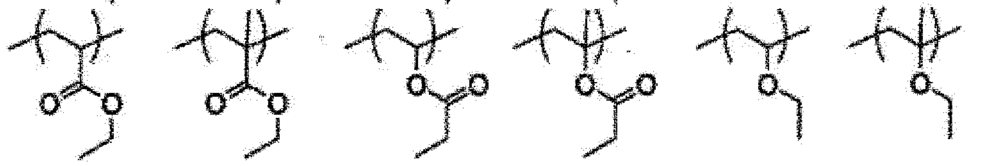

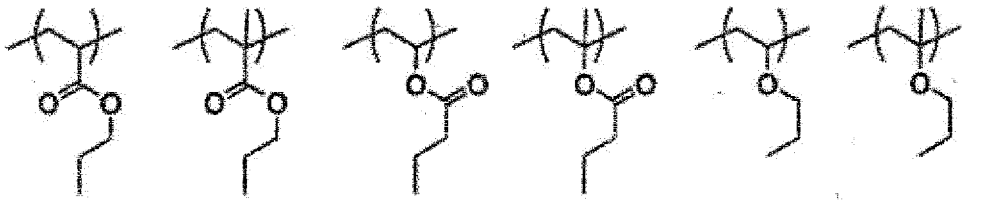

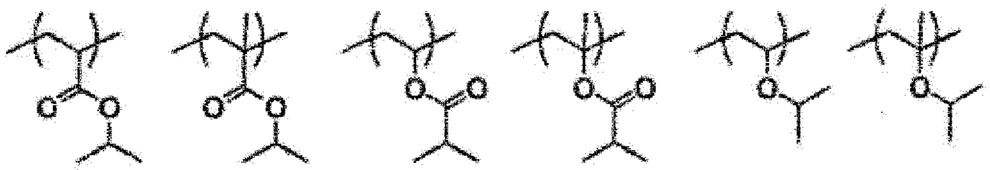

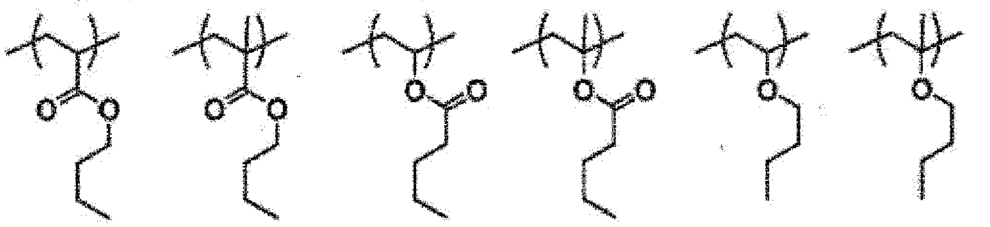

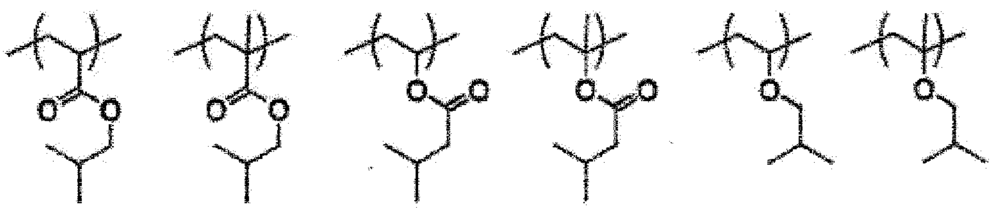

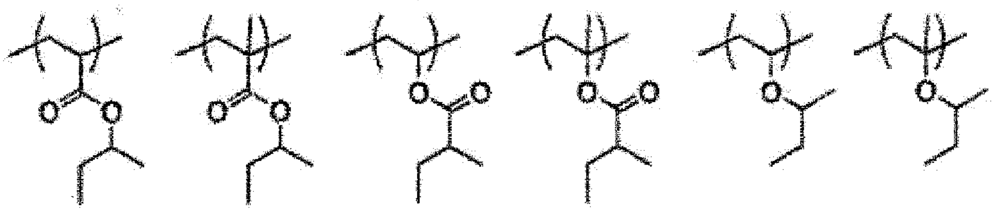

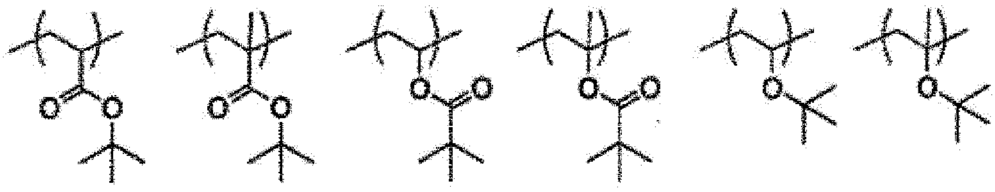

[Chemical 42]

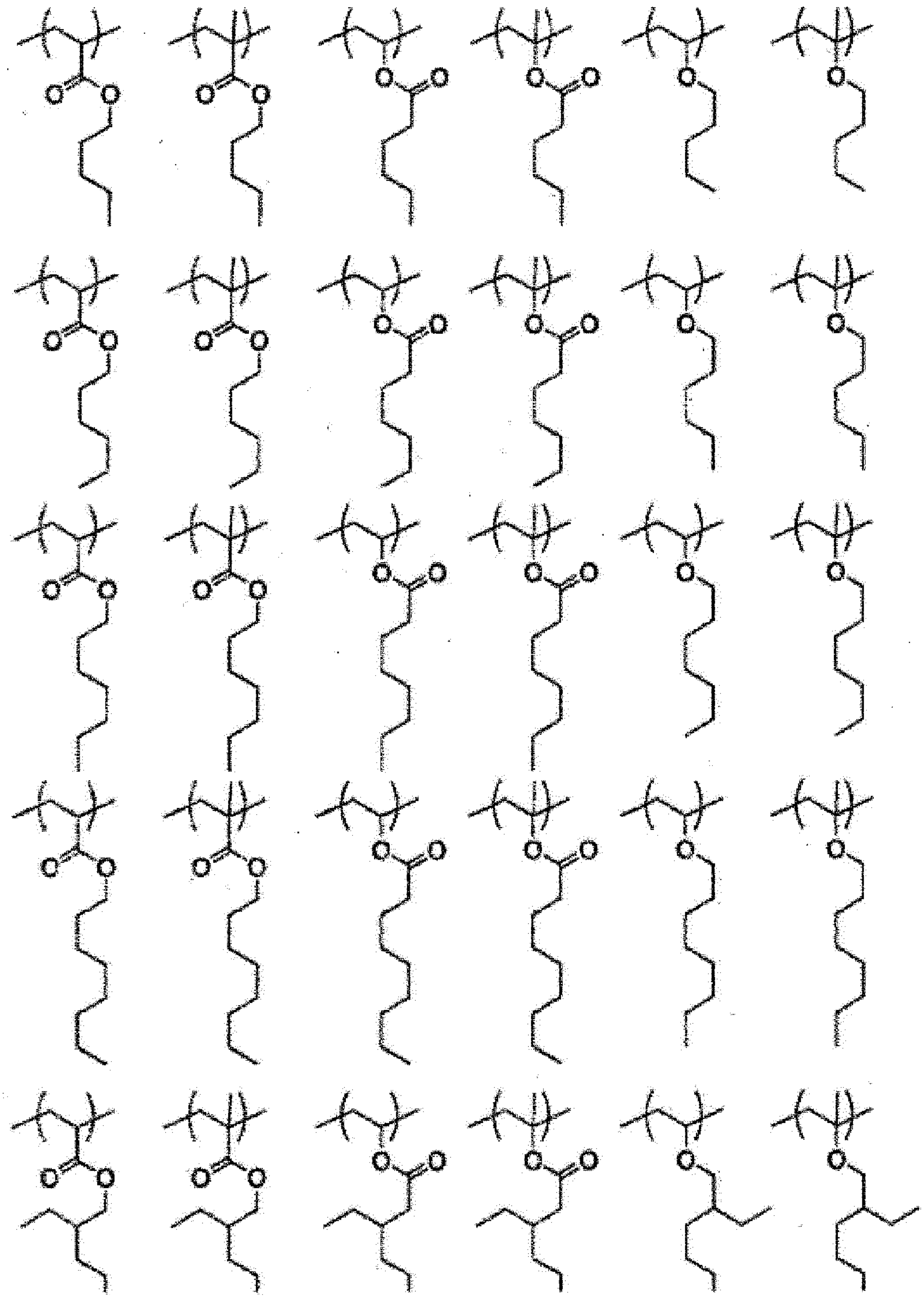

[Chemical 43]

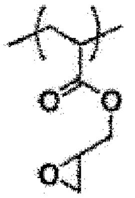 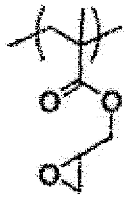 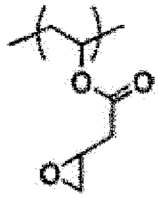 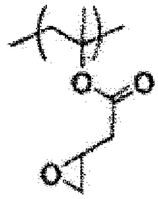 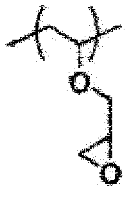 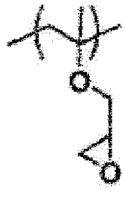

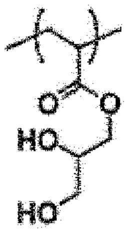 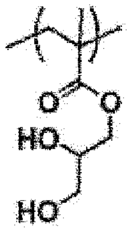 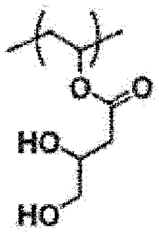 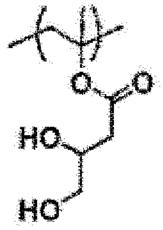 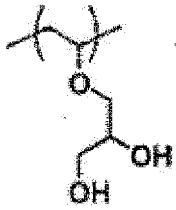 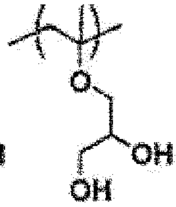

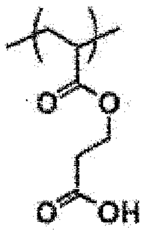 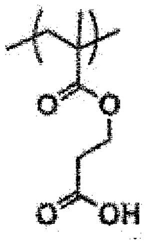 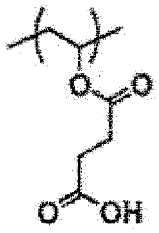 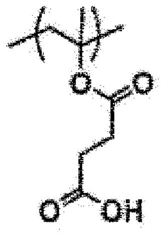 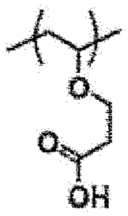 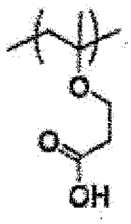

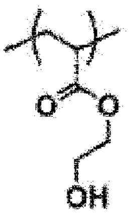 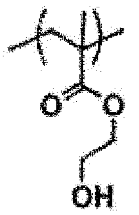 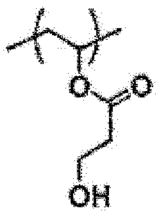 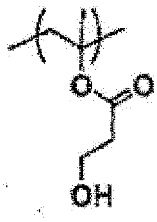 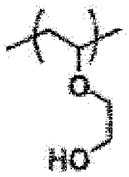 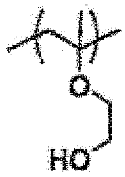

[Chemical 44]

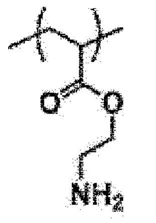
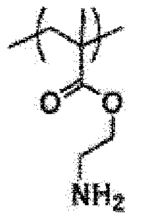
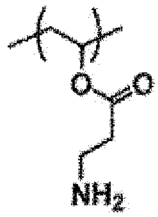
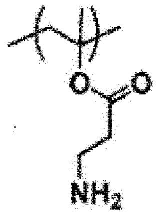
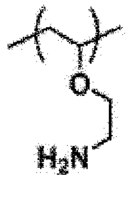
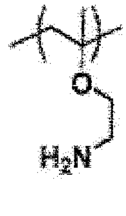

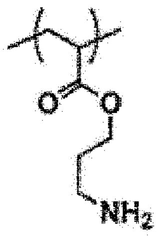
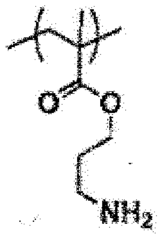
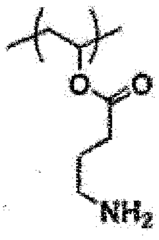
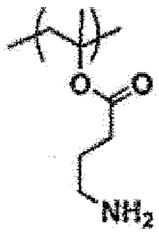
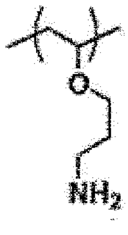
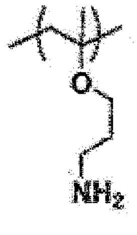

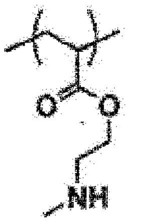
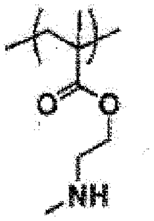
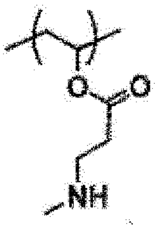
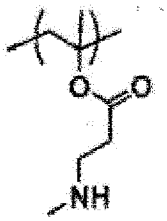
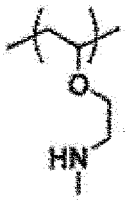
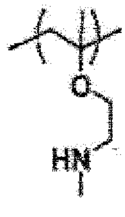

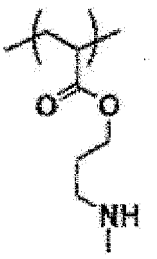
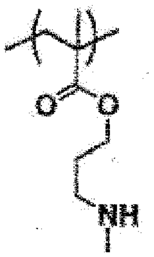
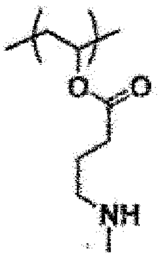
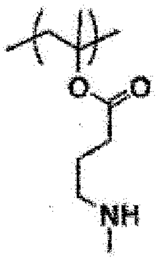
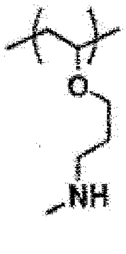
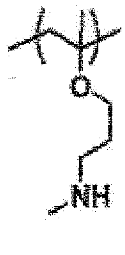

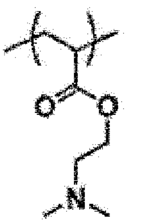
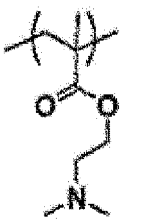
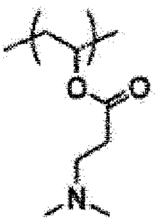
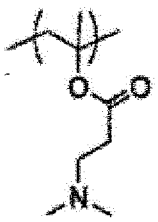
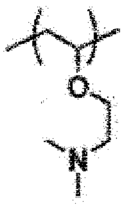
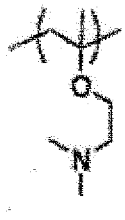

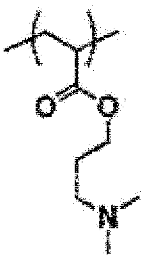
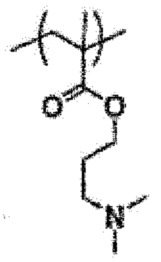
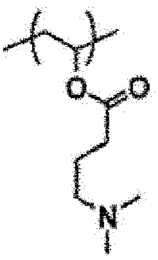
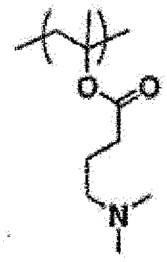
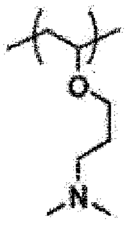
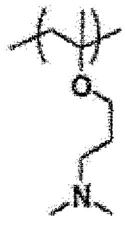

The structural units D represented by the formula (3) are preferably represented by any one of the structural units below.

[Chemical 45]

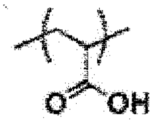
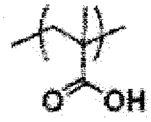
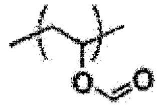
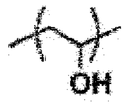
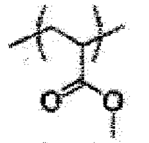
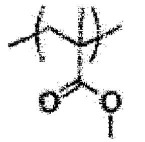
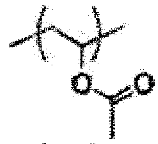
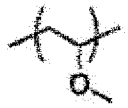
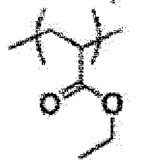
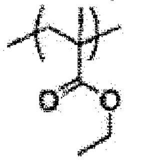
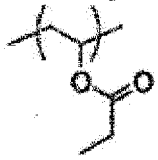
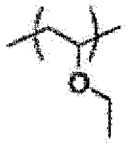
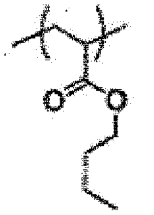
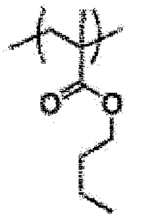
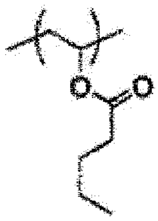
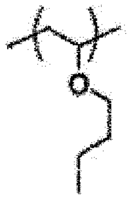
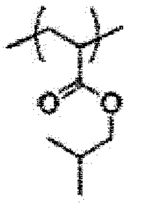
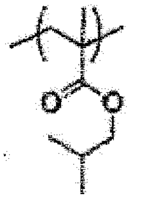
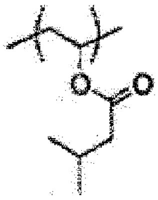
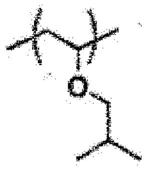
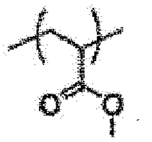
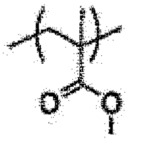
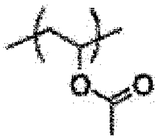
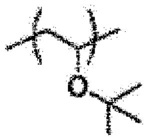

[Chemical 46]

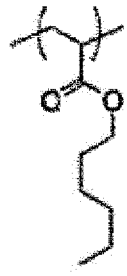 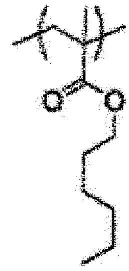 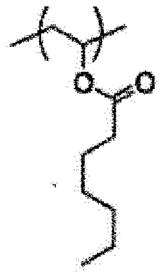 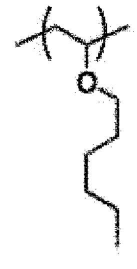

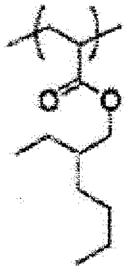 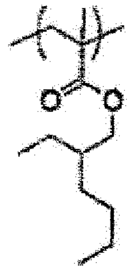 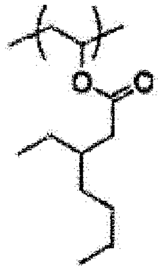 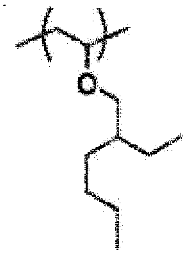

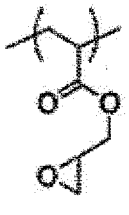 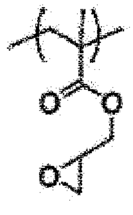 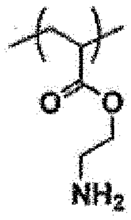 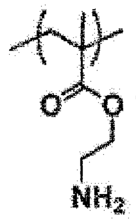

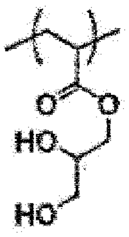 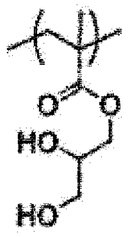 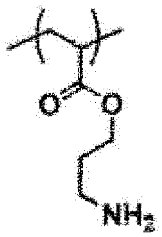 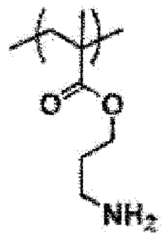

[Chemical 47]

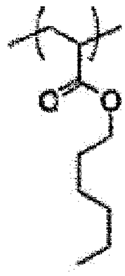
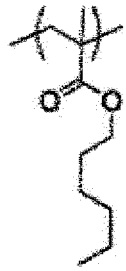
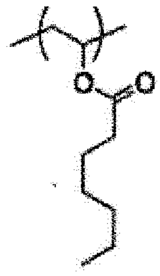
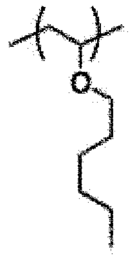
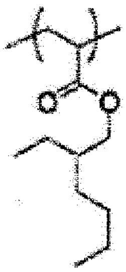
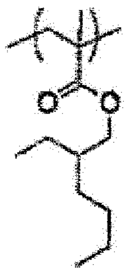
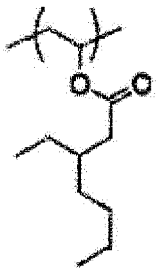
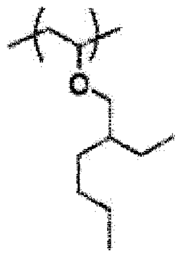
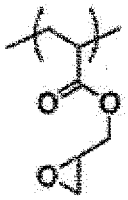
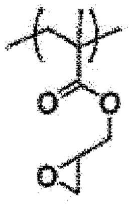
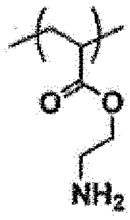
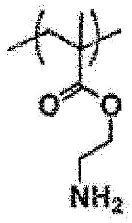
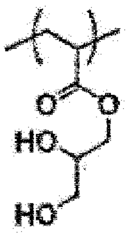
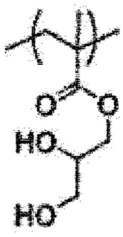
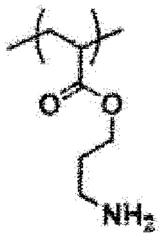
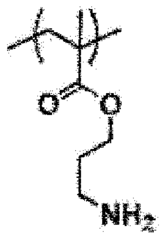

[Chemical 48]

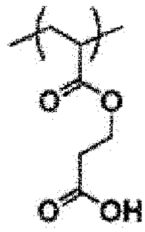 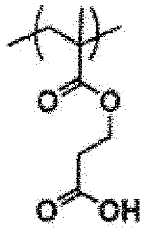 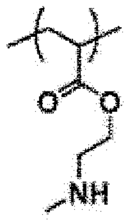 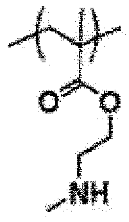

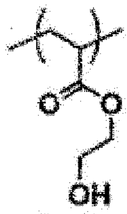 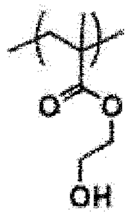 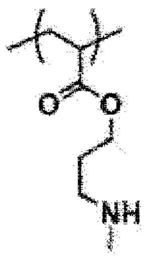 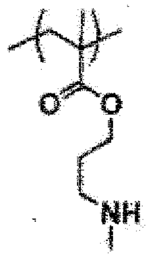

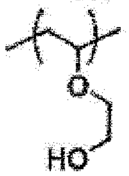

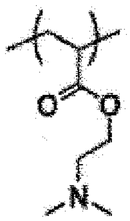 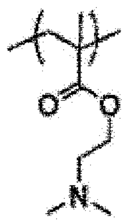

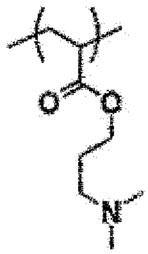 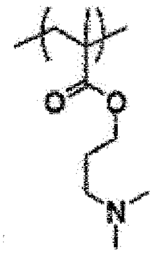

The structural units D represented by the formula (3) are more preferably represented by any one of the structural units below.

[Chemical 49]

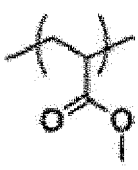 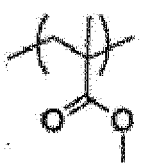 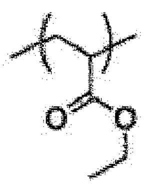 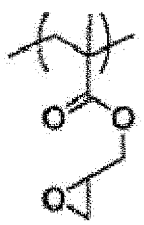 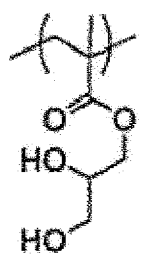

[Chemical 50]

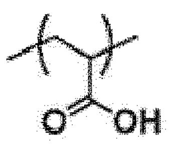 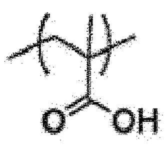

[Chemical 51]

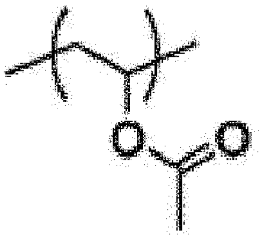

The structural units D represented by the formula (3) are further preferably represented by the structural unit below.

[Chemical 52]

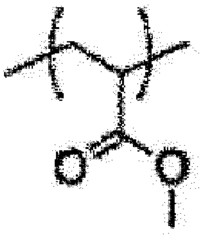

The structural units D represented by the formula (3) are derived from, for example, acrylic acid, methacrylic acid, vinyl alcohol, methyl acrylate, ethyl acrylate, n-propyl acrylate, isopropyl acrylate, n-butyl acrylate, isobutyl acrylate, sec-butyl acrylate, tert-butyl acrylate, methyl methacrylate, ethyl methacrylate, n-propyl methacrylate, isopropyl methacrylate, n-butyl methacrylate, isobutyl methacrylate, sec-butyl methacrylate, tert-butyl methacrylate, vinyl formate, vinyl acetate, vinyl propionate, vinyl(n-butyrate), vinyl(isobutyrate), methyl vinyl ether, ethyl vinyl ether, n-propyl vinyl ether, isopropyl vinyl ether, n-butyl vinyl ether, isobutyl vinyl ether, sec-butyl vinyl ether, tert-butyl vinyl ether, glycidyl acrylate, glycidyl methacrylate, 2,3-dihydroxypropyl acrylate, 2,3-dihydroxypropyl methacrylate, 3-(dimethylamino)propyl acrylate, or 3-(dimethylamino)propyl methacrylate. The structural units D represented by the formula (3) are preferably derived from acrylic acid, methacrylic acid, vinyl alcohol, methyl acrylate, ethyl acrylate, isopropyl acrylate, methyl methacrylate, ethyl methacrylate, isopropyl methacrylate, vinyl formate, vinyl acetate, glycidyl acrylate, glycidyl methacrylate, 2,3-dihydroxypropyl acrylate, 2,3-dihydroxypropyl methacrylate, 3-(dimethylamino)propyl acrylate, or 3-(dimethylamino)propyl methacrylate. The structural units D represented by the formula (3) are more preferably derived from acrylic acid, methacrylic acid, methyl acrylate, ethyl acrylate, methyl methacrylate, vinyl acetate, glycidyl methacrylate, or 2,3-dihydroxypropyl methacrylate. The structural units D represented by the formula (3) are further preferably derived from methyl acrylate.

Structural units represented by formula (4)

Preferable aspects of the structural units represented by the formula (4) are described as follows.

The structural units D represented by the formula (4) may be derived from two types of structural units that can be selected duplicately from the structural units B, the structural units C, or the structural units D represented by the formula (3). The details are described later.

The structural units D represented by the formula (4) may be derived from maleic anhydride.

The polymer 1 may include two or more types of structural units D, and may include, for example, structural units derived from methyl acrylate, structural units derived from ethyl acrylate, and structural units derived from glycidyl methacrylate.

Examples of the polymer 1 include a polymer including:

the structural units A;

the structural units B represented by the formula (1), in which $R^1$ is a hydrogen atom or a methyl group, $L^{11}$ is -CO-O-, $L^{12}$ and $L^{13}$ are each a single bond, and $L^{16}$ is - $(CH_2)_n$-$R^{f1}$;

the structural units C represented by the formula (2), in which $R^2$ is a hydrogen atom or a methyl group, $L^{21}$ is -CO-

O-, $L^{22}$ and $L^{23}$ are each a single bond, and $L^{26}$ is - $(CH_2)_n$-$R^{r1}$; and
the structural units D represented by the formula (3), in which $R^3$ is a hydrogen atom or a methyl group, $L^1$ is -CO-O-, $L^4$ is a C1 alkylene group, and $L^5$ is a hydrogen atom.

The polymer 1 may be a random polymer or a block polymer. The polymer 1 may be a mixture of block polymerization and random polymerization.

In one aspect, when the total number of all the structural units included in the polymer 1 is defined as 100%, the total number of the structural units A, B, C, and D is 90% or more.

In one aspect, when the total number of the structural units A, B, C, and D is defined as 100%, the number of the structural units A in the polymer 1 is 1 to 99%, and is preferably 70 to 99%, more preferably 75 to 99%, further preferably 80 to 99% in order to give good moldability into a molded article containing the polymer.

In one aspect, when the total number of the structural units A, B, C, and D is defined as 100%, the total number of the structural units B, C, and D in the polymer 1 is 1 to 99%, and is preferably 1 to 30%, more preferably 5 to 30%, further preferably 10 to 30% in order to give better water repellency and oleophobic properties of a molded article containing the polymer.

In one aspect, when the total number of the structural units B, C, and D is defined as 100%, the total number of the structural units B and C in the polymer 1 is 1 to 100%, and is preferably 10 to 99%, more preferably 20 to 99%, further preferably 50 to 99% in order to give better hydrophilicity and oleophobic properties of a molded article containing the polymer.

In one aspect, when the total number of the structural units B, C, and D is defined as 100%, the number of the structural units D in the polymer 1 is 0 to 99%, and is preferably 5 to 99% or less, more preferably 10 to 99%, further preferably 20 to 99% in order to give good moldability into a molded article containing the polymer.

In one aspect, when the total number of the structural units B and C is defined as 100%, the number of the structural units B in the polymer 1 is 10 to 99%, and is preferably 15 to 99% or less, more preferably 20 to 99%, further preferably 30 to 99% in order to give better hydrophilicity and oleophobic properties.

In one aspect, when the total number of the structural units B and C is defined as 100%, the number of the structural units C in the polymer 1 is 10 to 99%, and is preferably 15 to 99% or less, more preferably 20 to 99%, further preferably 30 to 99% in order to give better hydrophilicity and oleophobic properties.

In one aspect, the number ratio (B : C) between the structural units B and C in the polymer 1 is 1 : 9 to 9 : 1, preferably 2 : 8 to 8 : 2, more preferably 3 : 7 to 7 : 3.

The number of each type of the structural units A, B, C, and D included in the polymer 1 can be obtained, for example, from the integrated value of a signal attributed to the type of structural units in a $^{13}$C nuclear magnetic resonance spectrum (hereinafter, a $^{13}$C-NMR spectrum) or in a $^{1}$H nuclear magnetic resonance spectrum (hereinafter, a $^{1}$H-NMR spectrum).

When the polymer 1 is a polymer produced by a production method including reacting a precursor polymer P described later with a compound β and a compound γ that are described later, the number of each type of the structural units A, B, C, and D can be obtained, for example, by the method below.

Number (unit: %) of each type of structural units $A_1$ derived from ethylene and structural units $D_1$ derived from methyl acrylate when precursor polymer P being ethylene-methyl acrylate copolymer

In a $^{13}$C-NMR spectrum of the precursor polymer P (ethylene-methyl acrylate copolymer), integrated values ($A_1$, $B_1$, $C_1$, $D_1$, and $E_1$) of ranges $a_1$, $b_1$, $c_1$, $d_1$, and $e_1$ below are obtained, and the number of each type of structural units $A_1$ derived from ethylene and structural units $D_1$ derived from methyl acrylate is calculated from the content (number) of three dyads (EE, EA, AA) obtained from equations below. EE means an ethylene-ethylene dyad, EA means an ethylene-methyl acrylate dyad, and AA means a methyl acrylate-methyl acrylate dyad.

$a_1$: 28.1 to 30.5 ppm
$b_1$: 31.9 to 32.6 ppm
$c_1$: 41.7 ppm
$d_1$: 43.1 to 44.2 ppm
$e_1$: 45.0 to 46.5 ppm

$$EE = A_1/4 + B_1/2$$

$$EA = E_1$$

$$AA = C_1 + D_1$$

$$\text{Number of structural units } A_1 = 100 - \text{number of structural units } D_1$$

$$\text{Number of structural units } D_1 = 100 \times (EA/2 + AA)/(EE + EA + AA)$$

Conversion rate $X_B$ (unit: %) and conversion rate $X_C$ of structural units $D_1$, which are derived from methyl acrylate, to structural units $B_2$ represented by formula (1) and to structural units $C_2$ represented by formula (2)

In a $^{13}$C-NMR spectrum of the polymer 1 obtained by reacting the ethylene-methyl acrylate copolymer with the compounds β and γ, integrated values ($F_1$, $G_1$, and $H_1$) of ranges $f_1$, $g_1$, and $h_1$ below are obtained. Next, a conversion rate $X_B$ and a conversion rate $X_C$ of the structural units $D_1$, which are derived from methyl acrylate included in the ethylene-methyl acrylate copolymer, to structural units $B_2$ represented by the formula (1) of the polymer 1 and to structural units $C_2$ represented by the formula (2) are calculated from equations below.

$f_1$: 50.0 to 51.2 ppm
$g_1$: 55.0 to 56.8 ppm
$h_1$: 58.0 to 59.6 ppm

$$\text{Conversion rate } X_B = 100 \times G_1/(F_1 + G_1 + H_1)$$

$$\text{Conversion rate } X_c = 100 \times H_1/(F_1 + G_1 + H_1)$$

Number (unit: %) of each type of structural units $A_2$ derived from ethylene, structural units $B_2$ represented by formula (1), structural units $C_2$ represented by formula (2), and structural units $D_2$ derived from methyl acrylate, all types of structural units being included in polymer 1

The number of each type of structural units $A_2$ derived from ethylene, structural units $B_2$ represented by the formula (1), structural units $C_2$ represented by the formula (2), and structural units $D_2$ derived from methyl acrylate, all the types of structural units being included in the polymer 1, is calculated from equations below.

Number of structural units $A_2$ included in polymer 1 = number of structural units $A_1$ included in ethylene-methyl acrylate copolymer

$$\text{Number of structural units } B_2 \text{ included in polymer 1} = (\text{number of structural units } D_1 \text{ included in ethylene-methyl acrylate copolymer}) \times \text{conversion rate } X_B/100$$

$$\text{Number of structural units } C_2 \text{ included in polymer 1} = (\text{number of structural units } D_1 \text{ included in ethylene-methyl acrylate copolymer}) \times \text{conversion rate } X_c/100$$

Number of structural units $D_2$ included in polymer 1 = (number of structural units $D_1$ included in ethylene-methyl acrylate copolymer) - (number of structural units $B_2$ included in polymer 1) - (number of structural units $C_2$ included in polymer 1)

The number of the structural units $A_2$, the number of the structural units $B_2$, the number of the structural units $C_2$, and the number of the structural units $D_2$ thus obtained respectively correspond to the number (unit: %) of the structural units A derived from ethylene, the number of the structural units B represented by the formula (1), the number of the structural units C represented by the formula (2), and the number of the structural units D represented by the formulae (3) and (4), all the types of structural units being included in the polymer 1.

The content (wt%) of each type of the structural units A, the structural units B, the structural units C, and the structural units D included in the polymer 1 according to the present invention can be calculated from an equation below.

Weight percent of structural units A = (number of structural units A × molecular weight of structural unit A)/(number of structural units A × molecular weight of structural unit A + number of structural units B × molecular weight of structural unit B + number of structural units C × molecular weight of structural unit C + number of structural units D × molecular weight of structural unit D)

Weight percent of structural units B = (number of structural units B × molecular weight of structural unit B)/(number of structural units A × molecular weight of structural unit A + number of structural units B × molecular weight of structural unit B + number of structural units C × molecular weight of structural unit C + number of structural units D × molecular weight of structural unit D)

Weight percent of structural units C = (number of structural units C × molecular weight of structural unit C)/(number of structural units A × molecular weight of structural unit A + number of structural units B × molecular weight of structural unit B + number of structural units C × molecular weight of structural unit C + number of structural units D × molecular weight of structural unit D)

Weight percent of structural units D = (number of structural units D × molecular weight of structural unit D)/(number of structural units A × molecular weight of structural unit A + number of structural units B × molecular weight of structural unit B + number of structural units C × molecular weight of structural unit C + number of structural units D × molecular weight of structural unit D)

Cross-linked polymer

In one aspect, the polymer 1 is cross-linked. That is, in at least a part of the molecules of the polymer, molecules are linked by a covalent bond.

Examples of a method for cross-linking the uncross-linked polymer according to the present invention include a cross-linking method using irradiation with an ionizing radiation ray and a cross-linking method using an organic peroxide.

When the uncross-linked polymer according to the present invention is cross-linked by irradiation with an ionizing radiation ray, the uncross-linked polymer according to the present invention is usually molded into a desired shape in advance and then irradiated with an ionizing radiation ray. The molding is performed by a known method, and extrusion molding, injection molding, and press molding are preferred. The molded article to be irradiated with an ionizing radiation ray may be a molded article containing only the uncross-linked polymer according to the present invention, or may be a molded article containing the uncross-linked polymer according to the present invention and a polymer different therefrom. Examples of the polymer different from the uncross-linked polymer according to the present invention include a base resin described later. When the molded article contains the uncross-linked polymer according to the present invention and the base resin described later, the content of the uncross-linked polymer according to the present invention is preferably 1 to 99 wt%, with the total amount of the uncross-linked polymer according to the present invention and the base resin defined as 100 wt%.

Examples of the ionizing radiation ray include an $\alpha$ ray, a $\beta$ ray, a $\gamma$ ray, an electron ray, a neutron ray, and an X ray. A cobalt-60 $\gamma$ ray or an electron ray is preferred. When the molded article containing the polymer has a sheet shape, the sheet-shaped molded article may have at least one surface thereof irradiated with an ionizing radiation ray.

The irradiation with an ionizing radiation ray is performed using a known ionizing radiation ray irradiator. The

irradiation dose is usually 5 to 300 kGy, preferably 10 to 150 kGy. The polymer 1 can be formed into a highly cross-linked polymer with a low irradiation dose.

In the acquisition of the polymer 1 cross-linked by irradiation with an ionizing radiation ray, when the molded article to be irradiated with an ionizing radiation ray contains a cross-linking agent, the polymer 1 that is more highly cross-liked can be obtained. The cross-linking agent increases the degree of cross-linking of the polymer 1 and thereby improves the mechanical characteristics, and a compound having a plurality of double bonds in its molecules is preferably used as the cross-linking agent. Examples of the cross-linking agent include N,N'-m-phenylene bismaleimide, toluylene bismaleimide, a polyfunctional isocyanate, triallyl isocyanurate, triallyl cyanurate, p-quinone dioxime, nitrobenzene, diphenylguanidine, divinylbenzene, trivinylbenzene, buta-1,3-diene, diallyl phthalate, dihydrodicyclopentadienyl acrylate, diallyl maleate, ethylene glycol di(meth)acrylate, polyethylene glycol di(meth)acrylate, trimethylolpropane tri(meth)acrylate, trimethylolpropane triacrylate, and allyl (meth)acrylate. The cross-linking agents may be used singly or in combination of a plurality thereof.

When the total weight of the uncross-linked polymer according to the present invention and the polymer different therefrom that are included in the molded article to be irradiated with an ionizing radiation ray is defined as 100 parts by weight, the addition amount of the cross-linking agent is preferably 0.01 to 4.0 parts by weight, more preferably 0.05 to 2.0 parts by weight.

Examples of the cross-linking method using an organic peroxide include a method for cross-linking the uncross-linked polymer according to the present invention through molding of a composition containing the uncross-linked polymer according to the present invention and an organic peroxide by a known heat molding method. Examples of the known heat molding method include extrusion molding, injection molding, and press molding. The composition containing the uncross-linked polymer according to the present invention and an organic peroxide may contain, as a polymer component, only the polymer 1, or the polymer 1 and a polymer different from the polymer 1.

The composition containing the uncross-linked polymer according to the present invention and an organic peroxide may contain a polymer different from the polymer. Examples of the different polymer include a base resin described later. When the total amount of the uncross-linked polymer according to the present invention and the base resin is defined as 100 wt%, the content of the uncross-linked polymer according to the present invention is preferably 1 to 99 wt%.

When the uncross-linked polymer according to the present invention is cross-linked by an organic peroxide, the organic peroxide preferably has a decomposition temperature that is equal to or higher than the flow starting temperature of a polymer component contained in the composition containing the uncross-linked polymer according to the present invention and the organic peroxide. Examples of a preferable organic peroxide include dicumyl peroxide, 2,5-dimethyl-2,5-di-tert-butylperoxyhexane, 2,5-dimethyl-2,5-di-tert-butylperoxyhexyne, α,α-di-tert-butylperoxyisopropylbenzene, and tert-butylperoxy-2-ethylhexyl carbonate.

The cross-linked polymer 1 has a gel fraction of preferably 20 wt% or more, more preferably 40 wt% or more, further preferably 60 wt% or more, most preferably 70 wt% or more. The gel fraction indicates the degree of cross-linking of a crosslinked polymer, and a polymer having a high gel fraction means to have more cross-linked structures and form a stronger network structure. A polymer having a high gel fraction has high shape retainability and is less likely to be deformed.

The gel fraction is obtained by a method described below.

About 500 mg of a polymer and an empty mesh basket prepared using a metal mesh (mesh size: 400 mesh) are weighed. The mesh basket having the polymer sealed therein and 50 mL of xylene (manufactured by KANTO CHEMICAL CO., INC.; Cica-guaranteed or equivalent thereof; mixture of o-xylene, m-xylene, p-xylene, and ethylbenzene; total weight of o-xylene, m-xylene, and p-xylene being 85 wt% or more) are introduced into a 100-mL test tube, and subjected to heating extraction at 110°C for 6 hours. After the extraction, the mesh basket including an extraction residue therein is taken out from the test tube, and dried under reduced pressure by a vacuum dryer at 80°C for 8 hours, and the dried mesh basket including an extraction residue therein is weighed. The gel weight is calculated from the difference in weight between the dried mesh basket including an extraction residue therein and the empty mesh basket. The gel fraction (wt%) is calculated by an equation below.

$$\text{Gel fraction} = (\text{gel weight}/\text{weight of measurement sample}) \times 100$$

Production method

The polymer 1 is obtained, for example, by producing a precursor polymer including the structural units A and D, and next reacting the structural units D in the precursor polymer with the compounds β and γ. The details are described

as follows.

Precursor polymer

The precursor polymer is obtained, for example, by copolymerizing ethylene as a raw material for the structural units A, with an acrylic acid ester as a raw material for the structural units D. The copolymerization may be random copolymerization or block copolymerization, or may be a mixture of block polymerization and random polymerization. The precursor polymer may include a type of structural units different from the structural units A to D. As the polymerization reaction, a known method (or a combination of known methods) may be used. A commercially available polymer may be used as the precursor polymer as long as the polymer includes the structural units A and D.

Examples of the precursor polymer include an ethylene-acrylic acid copolymer, an ethylene-methacrylic acid copolymer, an ethylene-vinyl alcohol copolymer, an ethylene-methyl acrylate (EMA) copolymer, an ethylene-ethyl acrylate copolymer, an ethylene-n-propyl acrylate copolymer, an ethylene-n-butyl acrylate copolymer, an ethylene-methyl methacrylate copolymer, an ethylene-ethyl methacrylate copolymer, an ethylene-n-propyl methacrylate copolymer, an ethylene-n-butyl methacrylate copolymer, an ethylene-vinyl formate copolymer, an ethylene-vinyl acetate copolymer, an ethylene-vinyl propionate copolymer, an ethylene-vinyl(n-butyrate) copolymer, an ethylene-methyl vinyl ether copolymer, an ethylene-ethyl vinyl ether copolymer, an ethylene-n-propyl vinyl ether copolymer, an ethylene-n-butyl vinyl ether copolymer, an ethylene-maleic anhydride copolymer, an ethylene-glycidyl acrylate copolymer, an ethylene-glycidyl methacrylate copolymer, an ethylene-3-(dimethylamino)propyl acrylate copolymer, and an ethylene-3-(dimethylamino)propyl methacrylate copolymer. As to the copolymers described above, the precursor polymer P can also be a copolymer that includes the structural units A derived not from "ethylene" but from "propylene", or a copolymer including the structural units A derived from both ethylene and propylene.

Compound β

The structural units D in the precursor polymer may be reacted with the compound β and thereby converted to the structural units B. The compound β is preferably a compound represented by a formula (β1), or one or more compounds selected from the group consisting of a compound represented by the formula (β1), a compound represented by a formula (β2), a compound represented by a formula (β3), a compound represented by a formula (β4), a compound represented by a formula (β5), a compound represented by a formula (β6), a compound represented by a formula (β7), and a compound represented by a formula (β8) .

$R^{f1}\text{-}(OR^{f2})_p\text{-}(CH_2)_n\text{-}OH$ formula (β1)

$R^{f1}\text{-}(OR^{f2})_p\text{-}(CH_2)_n\text{-}NH_2$ formula (β2)

$R^{f1}\text{-}(OR^{f2})_p\text{-}(CH_2)_n\text{-}X$ formula (β3)

$R^{f1}\text{-}(OR^{f2})_p\text{-}(CH_2)_n\text{-}COOH$ formula (β4)

$R^{f1}\text{-}(OR^{f2})_p\text{-}(CH_2)_n\text{-}CONH_2$ formula (β5)

$R^{f1}\text{-}(OR^{f2})_p\text{-}(CH_2)_n\text{-}COX$ formula (β6)

$R^{f1}\text{-}(OR^{f2})_p\text{-}(CH_2)_n\text{-}NHCONH_2$ formula (β7)

$R^{f1}\text{-}(OR^{f2})_p\text{-}(CH_2)_n\text{-}NCO$ formula (β8)

In the formulae, $R^{f1}$, $R^{f2}$, p, and n are as specified in the formula (1). X represents a halogen atom. When a plurality of compounds β are used, $R^{f1}$, $R^{f2}$, p, n, and X may be identical or different between the compounds β. A commercially available compound may be used as the compound β.

Examples of a method for reacting the structural units D included in the precursor polymer with the compound β include:

a method for reacting the structural units D included in the precursor polymer with a compound represented by the formula (β1), (β2), or (β4) when the structural units D have an ester group as a functional group;

a method for reacting the structural units D included in the precursor polymer with a compound represented by the formula (β1), (β2), (β3), (β5), (β6), (β7), or (β8) when the structural units D have a carboxy group as a functional group;

a method for reacting the structural units D included in the precursor polymer with a compound represented by the formula (β3), (β4), (β6), or (β8) when the structural units D have a hydroxy group as a functional group;
a method for reacting the structural units D included in the precursor polymer with a compound represented by the formula (β3), (β4), (β5), (β6), (β7), or (β8) when the structural units D have an amino group as a functional group; and
a method for reacting the structural units D included in the precursor polymer with a compound represented by the formula (β1), (β2), (β4), (β5), or (β7) when the structural units D have an epoxy group as a functional group.

The method for reacting the structural units D included in the precursor polymer with the compound β is more preferably a method for reacting the structural units D included in the precursor polymer with a compound represented by the formula (β1), (β2), or (β4) when the structural units D have an ester group as a functional group.
The method for reacting the structural units D included in the precursor polymer with the compound β is further preferably a method for reacting the structural units D included in the precursor polymer with a compound represented by the formula (β1) when the structural units D have an ester group as a functional group.
When the structural units B are obtained by a transesterification reaction between the structural units D and the compound β, a known method (or a combination of known methods) may be used. In the reaction, a compatibilizing agent may be added. Examples of the compatibilizing agent include: polyols such as diethylene glycol dibutyl ether (DEG-DBE) that is a neutral compatibilizing agent; and tetraalkylammonium salts such as hexadecyltrimethylammonium chloride (HTAC) that is a cationic compatibilizing agent.
When the structural units D are reacted with the compound β, a catalyst may be added to promote the reaction. Examples of the catalyst include an alkali metal salt and a Group 4 metal complex. Examples of the alkali metal salt include: alkali metal hydroxides such as lithium hydroxide, sodium hydroxide, and potassium hydroxide; and alkali metal alkoxides such as lithium methoxide and sodium methoxide. Examples of the Group 4 metal complex include tetra(iso-propyl) orthotitanate, tetra(n-butyl) orthotitanate, and tetraoctadecyl orthotitanate. The addition amount of the catalyst is preferably 0.01 to 50 parts by weight, more preferably 0.01 to 5 parts by weight, relative to the total 100 parts by weight of the precursor polymer P and compound β used for the reaction.
In one aspect of the present invention, without using the structural units D, a raw material monomer for the structural units B may be polymerized with ethylene. Examples of such polymerization include a method for polymerizing a raw material monomer for the structural units B with ethylene, using, as a polymerization initiator, an organic peroxide such as tert-butyl peroxypivalate, or an azo compound such as azobisisobutyronitrile.
Examples of the raw material monomer for the structural units B include:

1H,1H,2H,2H-tridecafluoro-1-octyl acrylate;
1H,1H,2H,2H-heptadecafluoro-1-decyl acrylate;
1H,1H,2H,2H-tridecafluoro-1-octyl methacrylate;
1H,1H,2H,2H-heptadecafluoro-1-decyl methacrylate;
1H,1H,2H,2H-tridecafluoro-1-vinyloctanoate;
1H,1H,2H,2H-heptadecafluoro-1-vinyldecanoate;
1H,1H,2H,2H-tridecafluoro-1-octyl vinyl ether; and
1H,1H,2H,2H-heptadecafluoro-1-decyl vinyl ether.

Compound γ

In one aspect of the present invention, the structural units D in the precursor polymer may be reacted with the compound γ and thereby converted to the structural units C. The compound γ is one or more compounds selected from the group consisting of a compound represented by a formula (γ1), a compound represented by a formula (γ2), a compound represented by a formula (γ3), a compound represented by a formula (γ4), a compound represented by a formula (γ5), a compound represented by a formula (γ6), a compound represented by a formula (γ7), and a compound represented by a formula (γ8).

$R^{r1}\text{-}(OR^{r2})_q\text{-}(CH_2)_m\text{-}OH$ formula (γ1)

$R^{r1}\text{-}(OR^{r2})_q\text{-}(CH_2)_m\text{-}NH_2$ formula (γ2)

$R^{r1}\text{-}(OR^{r2})_q\text{-}(CH_2)_m\text{-}X$ formula (γ3)

$R^{r1}\text{-}(OR^{r2})_q\text{-}(CH_2)_m\text{-}COOH$ formula (γ4)

$R^{r1}\text{-}(OR^{r2})_q\text{-}(CH_2)_m\text{-}CONH_2$ formula (γ5)

$R^{r1}$-$(OR^{r2})_q$-$(CH_2)_m$-COX formula (γ6)

$R^{r1}$-$(OR^{r2})_q$-$(CH_2)_m$-$NHCONH_2$ formula (γ7)

$R^{r1}$-$(OR^{r2})_q$-$(CH_2)_m$-NCO formula (γ8)

In the formulae, $R^{r1}$, $R^{r2}$, q, and m are as specified in the formula (1). X represents a halogen atom. When a plurality of compounds γ are used, $R^{r1}$, $R^{r2}$, q, m, and X may be identical or different between the compounds γ. A commercially available compound may be used as the compound γ.

Examples of a method for reacting the structural units D included in the precursor polymer with the compound γ include:

a method for reacting the structural units D included in the precursor polymer with a compound represented by the formula (γ1), (γ2), or (γ4) when the structural units D have an ester group as a functional group;
a method for reacting the structural units D included in the precursor polymer with a compound represented by the formula (γ1), (γ2), (γ3), (γ5), (γ6), (γ7), or (γ8) when the structural units D have a carboxy group as a functional group;
a method for reacting the structural units D included in the precursor polymer with a compound represented by the formula (γ3), (γ4), (γ6), or (γ8) when the structural units D have a hydroxy group as a functional group;
a method for reacting the structural units D included in the precursor polymer with a compound represented by the formula (γ3), (γ4), (γ5), (γ6), (γ7), or (γ8) when the structural units D have an amino group as a functional group; and
a method for reacting the structural units D included in the precursor polymer with a compound represented by the formula (γ1), (γ2), (γ4), (γ5), or (γ7) when the structural units D have an epoxy group as a functional group.

The method for reacting the structural units D included in the precursor polymer with the compound γ is more preferably a method for reacting the structural units D included in the precursor polymer with a compound represented by the formula (γ1), (γ2), or (γ4) when the structural units D have an ester group as a functional group.

The method for reacting the structural units D included in the precursor polymer with the compound γ is further preferably a method for reacting the structural units D included in the precursor polymer with a compound represented by the formula (γ1) when the structural units D have an ester group as a functional group.

When the structural units C are obtained by a transesterification reaction between the structural units D and the compound γ, a known method (or a combination of known methods) may be used. In the reaction, a compatibilizing agent may be added. Examples of the compatibilizing agent include: polyols such as diethylene glycol dibutyl ether (DEG-DBE) that is a neutral compatibilizing agent; and tetraalkylammonium salts such as hexadecyltrimethylammonium chloride (HTAC) that is a cationic compatibilizing agent.

When the structural units D are reacted with the compound γ, a catalyst may be added to promote the reaction. Examples of the catalyst include an alkali metal salt and a Group 4 metal complex. Examples of the alkali metal salt include: alkali metal hydroxides such as lithium hydroxide, sodium hydroxide, and potassium hydroxide; and alkali metal alkoxides such as lithium methoxide and sodium methoxide. Examples of the Group 4 metal complex include tetra(iso-propyl) orthotitanate, tetra(n-butyl) orthotitanate, and tetraoctadecyl orthotitanate. The addition amount of the catalyst is preferably 0.01 to 50 parts by weight, more preferably 0.01 to 5 parts by weight, relative to the total 100 parts by weight of the precursor polymer P and compound γ used for the reaction.

In one aspect of the present invention, without using the structural units D, a raw material monomer for the structural units C may be polymerized with ethylene. Examples of such polymerization include a method for polymerizing a raw material monomer for the structural units C with ethylene, using, as a polymerization initiator, an organic peroxide such as tert-butyl peroxypivalate, or an azo compound such as azobisisobutyronitrile.

Examples of the raw material monomer for the structural units C include:

methoxy polyethylene glycol acrylate;
methoxy polyethylene glycol methacrylate;
methoxy polypropylene glycol acrylate;
methoxy polypropylene glycol methacrylate;
ethoxy polyethylene glycol acrylate;
ethoxy polyethylene glycol methacrylate;
ethoxy polypropylene glycol acrylate;
ethoxy polypropylene glycol methacrylate;
polyethylene glycol acrylate;
polyethylene glycol methacrylate;

polypropylene glycol acrylate; and
polypropylene glycol methacrylate.

When the polymer 1 includes the structural units D and the structural units D are represented by the formula (3), the structural units D may be the structural units D in the precursor polymer that have not been converted by the reaction with the compounds β and γ.

When the polymer 1 includes the structural units D and the structural units D are represented by the formula (4), the structural units D may be derived from maleic anhydride. Alternatively, the structural units D may be formed by a condensation reaction of two types of structural units that can be selected duplicately from the structural units B, the structural units C, or the structural units D represented by the formula (3).

The structural units D in the precursor polymer may be reacted with the compound β to be converted to the structural units B and then reacted with the compound γ to be converted to the structural units C, the structural units D in the precursor polymer may be reacted with the compound γ to be converted to the structural units C and then reacted with the compound β to be converted to the structural units B, or the structural units D in the precursor polymer may be reacted simultaneously with the compounds β and γ to be converted to the structural units B and C. The structural units D in the precursor polymer are preferably reacted simultaneously with the compounds β and γ to be converted to the structural units B and C.

When raw material monomers for the structural units B and C are polymerized with ethylene without using the structural units D, ethylene may be polymerized with the structural units B and then polymerized with the structural units C, may be polymerized with the structural units C and then polymerized with the structural units B, or may be polymerized simultaneously with the structural units B and C. Ethylene is preferably polymerized simultaneously with the structural units B and C.

When the reactivity ratio of ethylene used as a raw material in the production of the precursor polymer is defined as r1 and the reactivity ratio of a monomer forming the structural units D are defined as r2, the product r1 × r2 of the reactivity ratios is preferably 0.5 to 5.0, more preferably 0.5 to 3.0 in order to give good shape retainability of a produced molded article containing the polymer 1.

The ethylene reactivity ratio r1 is a value defined by r1 = k11/k12, in which k11 represents the reaction speed at which ethylene is bonded to a polymer having the structural units A at ends thereof in the copolymerization of ethylene with the monomer forming the structural units D, and k12 represents the reaction speed at which the monomer forming the structural units D is bonded to the polymer having the structural units A at ends thereof. The reactivity ratio r1 is an index representing with which, ethylene or the monomer forming the structural units D, the polymer having the structural units A at ends thereof is more likely to be reacted in the copolymerization of ethylene with the monomer forming the structural units D.

As r1 is increased, the polymer having the structural units A at ends thereof is more likely to be reacted with ethylene and a chain of the structural units A is therefore easily created.

The ethylene reactivity ratio r2 is a value defined by r2 = k22/k21, in which k21 represents the reaction speed at which ethylene is bonded to a polymer having the structural units D at ends thereof in the copolymerization of ethylene with the monomer forming the structural units D, and k22 represents the reaction speed at which the monomer forming the structural units D is bonded to the polymer having the structural units D at ends thereof. The reactivity ratio r2 is an index representing with which, ethylene or the monomer forming the structural units D, the polymer having the structural units D at ends thereof is more likely to be reacted in the copolymerization of ethylene with the monomer forming the structural units D. As r2 is increased, the polymer having the structural units D at ends thereof is more likely to be reacted with the monomer forming the structural units D and a chain of the structural units D is therefore easily created.

A product r1 × r2 of the reactivity ratios is calculated by a method described in the document "Kakugo, M.; Naito, Y.; Mizunuma, K.; Miyatake, T. Macromolecules, 1982, 15, 1150". In the present invention, the product r1 × r2 of the reactivity ratios is obtained by plugging, in an equation below, the fraction of each of dyads AA, AD, and DD of the structural units A and D, the fraction being calculated from a $^{13}C$ nuclear magnetic resonance spectrum of the precursor polymer.

$$r1 \times r2 = AA[DD/(AD/2)^2]$$

The product r1 × r2 of the reactivity ratios is an index representing a monomer chain distribution of the copolymer. The copolymer shows higher random nature in the monomer chain distribution as the product r1 × r2 of the reactivity ratios is closer to 1, shows higher alternating copolymerization nature in the monomer chain distribution as the product r1 × r2 of the reactivity ratios is closer to 0, and shows higher block copolymerization nature in the monomer chain distribution as the product r1 × r2 of the reactivity ratios is greater than 1.

The melt flow rate (MFR) of the precursor polymer measured in accordance with JIS K7210 at a temperature

of 190°C and a load of 21 N is preferably 0.1 to 500 g/10 min, more preferably 1 to 100 g/10 min, further preferably 5 to 50 g/10 min.

Examples of a method for producing the precursor polymer include a coordination polymerization method, a cation polymerization method, an anion polymerization method, and a radical polymerization method. The production method is preferably a radical polymerization method, more preferably a radical polymerization method under high pressure.

The temperature for reacting the precursor polymer with the compounds β and γ is usually 40 to 250°C. This reaction may be performed in the presence of a solvent. Examples of the solvent include hexane, heptane, octane, nonane, decane, toluene, and xylene. When a byproduct is generated in this reaction, the reaction may, in order to promote the reaction, be performed while the byproduct is distilled away under reduced pressure, or be performed while the byproduct and the solvent are subjected to azeotropy, the volatilized byproduct and solvent are cooled, the distillate containing the byproduct and solvent is separated into a byproduct layer and a solvent layer, and only the recovered solvent layer is returned as a reflux solution into the reaction system.

The reaction of the precursor polymer P with the compounds β and γ may be performed while the precursor polymer P is melt-kneaded with the compounds β and γ. When a byproduct is generated in the reaction of the precursor polymer P with the compounds β and γ under melt kneading, the reaction may, in order to promote the reaction, be performed while the byproduct is distilled away under reduced pressure. Examples of a melt-kneading apparatus used for the melt kneading include a single-screw extruder, a twin-screw extruder, and a Banbury mixer. The temperature for the melt kneading is preferably 100 to 250°C.

The polystyrene-equivalent weight average molecular weight Mw of the polymer 1 measured by gel permeation chromatography (GPC) is preferably 10,000 to 5,000,000, more preferably 50,000 to 1,000,000, further preferably 100,000 to 500,000.

When the polystyrene-equivalent weight average molecular weight Mw of the polymer (1) according to the present invention is measured by gel permeation chromatography, the measurement is usually performed using tetrahydrofuran as a mobile phase and at a measurement temperature of 35°C.

The polymer 1 preferably includes the structural units A derived from ethylene in order to give good moldability of the polymer 1. In order to give good blow moldability or foam moldability of the polymer 1, the structural units A derived from ethylene preferably form branched structures in the polymer, and the branched structures are more preferably long-chain branched structures having branched chains long enough to enable entanglement of polymer chains.

As to the polymer 1, a ratio A defined by an equation (I) below is preferably 0.95 or less, more preferably 0.90 or less, further preferably 0.80 or less.

$$A = \alpha_1/\alpha_0 \quad (I)$$

In the equation (I),

$\alpha_1$ is a value obtained by measuring the absolute molecular weight and the intrinsic viscosity of the polymer according to gel permeation chromatography with an apparatus including a light scattering detector and a viscosity detector; and plotting the measured data, with the logarithm of the absolute molecular weight put on the horizontal axis and the logarithm of the intrinsic viscosity put on the vertical axis, approximating the logarithm of the absolute molecular weight and the logarithm of the intrinsic viscosity by a least-squares method according to an equation (I-I) in a horizontal-axis range of not less than the logarithm of the weight average molecular weight but not more than the logarithm of the z-average molecular weight of the polymer, and obtaining an inclination $\alpha_1$ of a line represented by the equation (I-I).

$$\log[\eta_1] = \alpha_1 \log M_1 + \log K_1 \quad (I\text{-}I)$$

In the equation (I-I),

$[\eta_1]$ represents the intrinsic viscosity (unit: dl/g) of the polymer,
$M_1$ represents the absolute molecular weight of the polymer, and
$K_1$ represents a constant.
$\alpha_0$ is a value obtained by measuring the absolute molecular weight and the intrinsic viscosity of the polyethylene reference material 1475a (manufactured by National Institute of Standards and Technology) according to gel permeation chromatography with an apparatus including a light scattering detector and a viscosity detector; and plotting the measured data, with the logarithm of the absolute molecular weight put on the horizontal axis and the

logarithm of the intrinsic viscosity put on the vertical axis, approximating the logarithm of the absolute molecular weight and the logarithm of the intrinsic viscosity by a least-squares method according to an equation (I-II) in a horizontal-axis range of not less than the logarithm of the weight average molecular weight but not more than the logarithm of the z-average molecular weight of the polyethylene reference material 1475a, and obtaining an inclination $\alpha_0$ of a line represented by the equation (I-II).

$$\log[\eta_0] = \alpha_0 \log M_0 + \log K_0 \quad \text{(I-II)}$$

In the equation (I-II),

$[\eta_0]$ represents the intrinsic viscosity (unit: dl/g) of the polyethylene reference material 1475a,
$M_0$ represents the absolute molecular weight of the polyethylene reference material 1475a, and
$K_0$ represents a constant.

The polyethylene reference material 1475a (manufactured by National Institute of Standards and Technology) is non-branched high-density polyethylene.

The equations (I-I) and (I-II) are referred to as Mark-Hauwink-Sakurada equations representing the correlation between the intrinsic viscosity and the molecular weight of a polymer, and the number of polymer-chain tangles attributed to branched structures is larger as $\alpha_1$ is decreased. Since the polyethylene reference material 1475a does not have branched structures, the polymer-chain entanglement attributed to branched structures are not generated. The structural units A form more long-chain branched structures in the polymer as the ratio A of $\alpha_1$ to $\alpha_0$ of the polyethylene reference material 1475a is decreased.

Composition

A composition (also referred to as a "resin composition A") according to the present invention contains the polymer 1. In one aspect, the composition contains the polymer in an amount of 0.1 to 100 wt%, preferably 0.5 to 99 wt%, more preferably 1 to 50 wt%, further preferably 2 to 5 wt%. The composition has hydrophilicity and oleophobic properties.

The resin composition A may further contain a base resin (also referred to as a polymer 2). The base resin is at least one selected from the group consisting of a thermosetting resin and a thermoplastic resin.

As the thermoplastic resin, any of conventionally known thermoplastic resins can be used, and examples thereof include:

polyethylene, polypropylene, an olefin-based thermoplastic elastomer, polyvinyl chloride, polyvinylidene chloride, vinyl chloride-based thermoplastic elastomer polystyrene, acrylonitrile-butadiene-styrene, acrylonitrile-styrene, a styrene-based thermoplastic elastomer, polyester, polycarbonate, a polyamide, a silicone resin, polyvinyl acetal, polyacetal, polyvinyl alcohol, an ethylene-vinyl alcohol resin, a cellulose resin, an acrylic polyol-based resin, a polyester polyol-based resin, a polyester-based thermoplastic elastomer, a urethane resin, a polyurethane-based thermoplastic elastomer, polytetrafluoroethylene, a fluororesin, polyvinyl acetate, ethylene-vinyl acetate, a methyl (meth)acrylate polymer, an ethyl (meth)acrylate polymer, an octadecyl (meth)acrylate polymer, a hexadecyl (meth)acrylate polymer, a tetradecyl (meth)acrylate polymer, methyl polymethacrylate, methyl polyacrylate, an acrylonitrile-acrylic rubber-styrene resin, an acrylonitrile-ethylene rubber-styrene resin, a (meth)acrylic acid ester-styrene resin, a styrene-butadiene-styrene resin, a styrene-butadiene copolymer, a polyphenylene ether, a modified polyphenylene ether, polyphenylene oxide, polyphenylene sulfide, polyamideimide, polyether ether ketone, a polyether-polypropylene block copolymer, a polyether-ester amide, a 1H,1H,2H,2H-tridecafluoro-1-octyl (meth)acrylate polymer, a 1H, 1H, 2H, 2H-heptafluoro-1-hexyl (meth)acrylate polymer; and
ethylene-(meth)acrylic acid ester copolymers such as an ethylene-methyl (meth)acrylate copolymer, an ethylene-ethyl (meth)acrylate copolymer, an ethylene-octadecyl (meth)acrylate copolymer, an ethylene-hexadecyl (meth)acrylate copolymer, an ethylene-tetradecyl (meth)acrylate copolymer, and an ethylene-octadecyl (meth)acrylate-methyl (meth)acrylate copolymer, and ionomer resins thereof; and
an ethylene-(meth)acrylic acid resin and an ionomer resin thereof.

As the thermosetting resin, any of conventionally known thermosetting resins can be used, and examples thereof include an epoxy resin, a phenolic resin, a xylene resin, a petroleum resin, a urea resin, a melamine resin, an alkyd resin, a furan resin, a polyimide, an unsaturated polyester resin, a DAP resin, polyurethane, a silicone resin, and a thermosetting acrylic resin.

As the thermosetting resin, any of conventionally known thermosetting resins can be used. Preferable examples thereof include an epoxy resin, a phenolic resin, a urea resin, a melanin resin, an alkyd resin, an unsaturated polyester resin, a DAP resin, polyurethane, a silicone resin, and a thermosetting acrylic resin. More preferable examples thereof include an unsaturated polyester resin.
The resin composition A may contain two or more polymers 1 and two or more base resins (polymers 2).

Quorum sensing inhibitor

The resin composition A may contain a quorum sensing inhibitor. The quorum sensing inhibitor is a compound that inhibits the quorum sensing of microorganisms.
The quorum sensing inhibitory properties can be measured by bioassay using, for example, a bacterium that produces a pigment or a bacterium that exhibits bioluminescence responsive to a substance that induces the quorum sensing (e.g., Sensors 2013, 13, 5117-5129). In Sensors 2013, 13, 5117-5129, N-hexanoylhomoserine lactone that induces the quorum sensing is added to a reporter strain such as C. violaceum CV026 in a medium, caffeine serving as the quorum sensing inhibitor is further added, and the bacteria are then warmly incubated. The document indicates the produced amount of a purple pigment (violacein) is smaller than the amount of the purple pigment (violacein) produced when caffeine is not added, and therefore caffeine has the quorum sensing inhibitory properties.
The quorum sensing inhibitor is preferably a quorum sensing inhibitor described below:
when N-hexanoylhomoserine lactone is added to C. violaceum CV026 (reporter strain) in a medium, a quorum sensing inhibitor is further added, and the bacteria are then warmly incubated, on the basis of a method described in Sensors 2013, 13, 5117-5129, a quorum sensing inhibitor has a produced amount of a purple pigment (violacein) of 85% or less (defining as 100% the amount of the purple pigment produced when the quorum sensing inhibitor is not added and the bacteria are warmly incubated).
Examples of the quorum sensing inhibitor include:

phenylpropanoids such as eugenol, methyl eugenol, cinnamaldehyde, cinnamic acid, vanillin, isovanilin, ferulic acid, chlorogenic acid, caffeic acid, P-coumaric acid, cinnamic aldehyde, methyl cinnamate, phenylpropionic acid, 2-methoxycinnamic acid, 3-methoxycinnamic acid, 4-methoxycinnamic acid, 3-bromocinnamic acid, 2-fluorocinnnamic acid, 3-fluorocinnamic acid, 3-methylcinnamic acid, 4-acetoxycinnamic acid, 4-bromocinnamic acid, 4-ethoxycinnamic acid, 4-fluorocinnamic acid, 3,4-dimethoxycinnamic acid, 2,3-dimethoxycinnamic acid, 2,5-dimethoxycinnamic acid, 2,3,4-trimethoxycinnamic acid, 3,4,5-trimethoxycinnamic acid, and lignin;
benzoic acid analogs such as salicylic acid, vanillic acid, gallic acid, and ellagic acid;
tannins such as 1,2,3,4,6-pentagalloyl glucose, punicalagin, hamamelitannin, and tannic acid;
stilbene analogs and polyketides such as resveratrol and pterostilbene;
flavonoids such as (-)-catechin, (-)-epicatechin, (-)-gallocatechin, (-)-epigallocatechin, (-)-catechin gallate, (-)-epicatechin gallate, (-)-gallocatechin gallate, (-)-epigallocatechin gallate, naringenin, flavone, apigenin, chrysin, acacetin, a flavonol, kaempferol, quercetin, quercitrin, flavanone, isosakuranetin, pinostrobin, eriodictyol, cyanidin, and malvidin;
diarylheptanoids such as curcumin;
terpenes and terpenoids such as carvacrol, salvipisone, acanthospermolide, isolimonic acid, ichangin, betulinic acid, ursolic acid, gymnemic acid, protoanemonin, obacunone, deacetylnomilinic acid glucoside, and phytol;
sulfur-containing compounds such as allicin, ajoene, sulforaphane, allyl isothiocyanate, iberin, thiazolidinedione, and diphenyl disulfide;
nitrogen-containing compounds such as indole and 2-methyltryptoline;
coumarin derivatives such as umbelliferone and scopoletin;
furanocoumarins such as psoralen, angelicin, bergamottin, and dihydroxybergamottin;
quinone derivatives such as chrysophanol, emodin, shikonin, purpurin, and emberine;
alkaloids such as berberine, berberine chloride hydrate, chelerythrine, sanguinarine, reserpine, caffeine, oroidin, piperine, and hordenine;
phenols or polyphenols such as pyrogallol, malabaricone C, taxifolin, and rosmarinic acid;
surfactants having quorum sensing inhibitory performance such as rhamnolipid, trehalolipid, sophorolipid, cellobiopid, viscosin, surfactin, and emulsan;
phenazines such as pyocyanin;
ubiquinone analogs such as piericidin A and glucopiericidin A;
eicosanoids such as lipoxin A4;
polysaccharides such as polygalacturonic acid and pectin;
macrolides such as erythromycin;
carotenoids such as zeaxanthin;

mycotoxins such as penicillic acid and patulin;
steroids such as cholesteryl chloride;
boronic acids and boronic acid derivatives such as 3-fluoro-4-methylphenylboronic acid and 2-fluoro-4-trifluoromethylphenylboronic acid;
lactones such as acylated cyclopentyl amide and N-(3-oxododecanoyl)-L-homoserine lactone; and
butenolides such as 3,4-dibromo-2(5H)-furanone.

A symbol logS of the quorum sensing inhibitor is the common logarithm of an amount (solubility) S (g/100g) of the quorum sensing inhibitor dissolved in 100 g of water at a temperature of 25°C and a pH of 6 to 8. The quorum sensing inhibitor having a smaller numerical value of logS is less likely to be dissolved in water.

From the viewpoint of allowing the molded article according to the present invention to maintain the effect of reducing the adhesion of biofilms, the numerical value of logS is preferably less than 0.1, more preferably 0.01 or less, further preferably -0.1 or less, particularly preferably -0.4 or less. The numerical value of logS of the quorum sensing inhibitor is usually -30 or greater, preferably -12 or greater.

Even when the quorum sensing inhibitor does not have a known literature value or the like of logS, the numerical value of logS of the quorum sensing inhibitor can simply be estimated from the chemical structure thereof using computer software Hansen Solubility Parameter in Practice (HSPiP).

As the numerical value of logS of the quorum sensing inhibitor contained in the resin composition A, a value calculated by HSPiP ver5.0.04 or a literature value is usually used.

However, when the quorum sensing inhibitor contained in the resin composition A is an ionic compound, a charge transfer complex, an inorganic compound, a compound having more than 120 atoms other than hydrogen atoms, or a compound that forms multiple hydrogen bonds with anther compound, a value calculated by solubility measurement for measuring the amount of a solute dissolved in 100 g of water is used as the numerical value of logS of the quorum sensing inhibitor.

Examples of the quorum sensing inhibitor having a logS of less than 0.1 include a phenylpropanoid having a logS of less than 0.1, a benzoic acid analog having a logS of less than 0.1, tannins having a logS of less than 0.1, a stilbene analog and a polyketide each having a logS of less than 0.1, a flavonoid having a logS of less than 0.1, a diarylheptanoid having a logS of less than 0.1, a terpene and a terpenoid each having a logS of less than 0.1, a sulfur-containing compound having a logS of less than 0.1, a nitrogen-containing compound having a logS of less than 0.1, a coumarin derivative having a logS of less than 0.1, furanocoumarins having a logS of less than 0.1, a quinone derivative having a logS of less than 0.1, an alkaloid having a logS of less than 0.1, a phenol and polyphenols each having a logS of less than 0.1, a surfactant having a logS of less than 0.1 and having quorum sensing inhibitory performance, phenazines having a logS of less than 0.1, a ubiquinone analog having a logS of less than 0.1, an eicosanoid having a logS of less than 0.1, a carotenoid having a logS of less than 0.1, a mycotoxin having a logS of less than 0.1, a macrolide having a logS of less than 0.1, polysaccharides having a logS of less than 0.1, a boronic acid and a boronic acid derivative each having a logS of less than 0.1, steroids having a logS of less than 0.1, lactones having a logS of less than 0.1, and a butenolide having a logS of less than 0.1.

Among these examples, preferred are a phenylpropanoid having a logS of less than 0.1, a benzoic acid analog having a logS of less than 0.1, tannins having a logS of less than 0.1, a stilbene analog and a polyketide each having a logS of less than 0.1, a flavonoid having a logS of less than 0.1, a diarylheptanoid having a logS of less than 0.1, a terpene and a terpenoid each having a logS of less than 0.1, a sulfur-containing compound having a logS of less than 0.1, a nitrogen-containing compound having a logS of less than 0.1, a coumarin derivative having a logS of less than 0.1, furanocoumarins having a logS of less than 0.1, a quinone derivative having a logS of less than 0.1, an alkaloid having a logS of less than 0.1, a phenol and polyphenols each having a logS of less than 0.1, a surfactant having a logS of less than 0.1 and having quorum sensing inhibitory performance, phenazines having a logS of less than 0.1, a ubiquinone analog having a logS of less than 0.1, an eicosanoid having a logS of less than 0.1, a carotenoid having a logS of less than 0.1, a mycotoxin having a logS of less than 0.1, a macrolide having a logS of less than 0.1, polysaccharides having a logS of less than 0.1, steroids having a logS of less than 0.1, a boronic acid and a boronic acid derivative each having a logS of less than 0.1, lactones having a logS of less than 0.1, and a butenolide having a logS of less than 0.1,

more preferred are a phenylpropanoid having a logS of less than 0.1, a benzoic acid analog having a logS of less than 0.1, tannins having a logS of less than 0.1, a stilbene analog and a polyketide each having a logS of less than 0.1, a flavonoid having a logS of less than 0.1, a diarylheptanoid having a logS of less than 0.1, a terpene and a terpenoid each having a logS of less than 0.1, a sulfur-containing compound having a logS of less than 0.1, a nitrogen-containing compound having a logS of less than 0.1, a coumarin derivative having a logS of less than 0.1, a quinone derivative having a logS of less than 0.1, an alkaloid having a logS of less than 0.1, a boronic acid and a boronic acid derivative each having a logS of less than 0.1, and lactones having a logS of less than 0.1,
further preferred are 2,3,4-trimethoxycinnamic acid, 2-fluorocinnamic acid, eugenol, salicylic acid, tannic acid, resveratrol, (-)-epicatechin, flavone, curcumin, carvacrol, phytol, diphenyl disulfide, indole, umbelliferone, purpurin, reserpine, berberin chloride hydrate, 3-fluoro-4-methylphenylboronic acid, N-(3-oxododecanoyl)-L-homoserine lactone, and 2-fluoro-4-trifluoromethylphenylboronic acid.

Examples of the phenylpropanoid having a logS of less than 0.1 include eugenol, methyl eugenol, cinnamaldehyde, cinnamic acid, isovanilin, ferulic acid, cinnamic aldehyde, methyl cinnamate, phenylpropionic acid, 2-methoxycinnamic acid, 3-methoxycinnamic acid, 4-methoxycinnamic acid, 3-bromocinnamic acid, 2-fluorocinnnamic acid, 3-fluorocinnamic acid, 3-methylcinnamic acid, 4-acetoxycinnamic acid, 4-bromocinnamic acid, 4-ethoxycinnamic acid, 4-fluorocinnamic acid, 3,4-dimethoxycinnamic acid, 2,3-dimethoxycinnamic acid, 2,5-dimethoxycinnamic acid, 2,3,4-trimethoxycinnamic acid, 3,4,5-trimethoxycinnamic acid, and lignin.

Examples of the benzoic acid analog having a logS of less than 0.1 include salicylic acid, gallic acid, and ellagic acid.

Examples of the tannins having a logS of less than 0.1 include 1,2,3,4,6-pentagalloyl glucose, punicalagin, hamamelitannin, and tannic acid.

Examples of the stilbene analog and the polyketide each having a logS of less than 0.1 include resveratrol and pterostilbene.

Examples of the flavonoid having a logS of less than 0.1 include (-)-epicatechin, (-)-catechin gallate, (-)-epicatechin gallate, (-)-gallocatechin gallate, (-)-epigallocatechin gallate, naringenin, flavone, apigenin, chrysin, acacetin, a flavonol, kaempferol, quercetin, quercitrin, flavanone, isosakuranetin, pinostrobin, eriodictyol, and malvidin.

Examples of the diarylheptanoid having a logS of less than 0.1 include curcumin.

Examples of the terpene and the terpenoid each having a logS of less than 0.1 include carvacrol, salvipisone, acanthospermolide, isolimonic acid, ichangin, betulinic acid, ursolic acid, gymnemic acid, obacunone, deacetylnomilinic acid glucoside, and phytol.

Examples of the sulfur-containing compound having a logS of less than 0.1 include allicin, sulfolane, allyl isothiocyanate, iberin, and diphenyl disulfide.

Examples of the nitrogen-containing compound having a logS of less than 0.1 include indole and 2-methyltryptoline.

Examples of the coumarin derivative having a logS of less than 0.1 include esculetin, umbelliferone, and scopoletin.

Examples of the furanocoumarins having a logS of less than 0.1 include psoralen, angelicin, bergamottin, and dihydroxybergamottin.

Examples of the quinone derivative having a logS of less than 0.1 include chrysophanol, emodin, shikonin, purpurin, and emberine.

Examples of the alkaloid having a logS of less than 0.1 include berberine, berberine chloride hydrate, chelerythrine, sanguinarine, reserpine, oroidin, piperine, and hordenine.

Examples of the phenol and the polyphenols each having a logS of less than 0.1 include malabaricone C, taxifolin, and rosmarinic acid.

Examples of the surfactant having a logS of less than 0.1 and having quorum sensing inhibitory performance include rhamnolipid, trehalolipid, sophorolipid, cellobiopid, viscosin, and emulsan.

Examples of the phenazines having a logS of less than 0.1 include pyocyanin.

Examples of the ubiquinone analog having a logS of less than 0.1 include piericidin A and glucopiericidin A.

Examples of the eicosanoid having a logS of less than 0.1 include lipoxin A4.

Examples of the carotenoid having a logS of less than 0.1 include zeaxanthin.

Examples of the mycotoxin having a logS of less than 0.1 include penicillic acid and patulin.

Examples of the macrolide having a logS of less than 0.1 include erythromycin.

Examples of the polysaccharides having a logS of less than 0.1 include polygalacturonic acid and pectin.

Examples of the steroids having a logS of less than 0.1 include cholesteryl chloride.

Examples of the boronic acid and the boronic acid derivative each having a logS of less than 0.1 include 3-fluoro-4-methylphenylboronic acid and 2-fluoro-4-trifluoromethylphenylboronic acid.

Examples of the lactones having a logS of less than 0.1 include N-(3-oxododecanoyl)-L-homoserine lactone.

Examples of the butenolide having a logS of less than 0.1 include 3,4-dibromo-2(5H)-furanone.

A distance $Ra_2$ between the Hansen solubility parameter (hereinafter, also expressed as $HSP_D$) of the quorum sensing inhibitor and the Hansen solubility parameter (hereinafter, also expressed as $HSP_A$) of the polymer 1 is preferably more than 3.2 $MPa^{1/2}$, more preferably 3.5 $MPa^{1/2}$ or more, further preferably 4.2 $MPa^{1/2}$ or more. The distance $Ra_2$ is usually 50 $MPa^{1/2}$ or less, preferably 35 $MPa^{1/2}$ or less.

The Hansen solubility parameter (hereinafter, also expressed as HSP) is defined by three-dimensional parameters ($\delta D$, $\delta P$, and $\delta H$) below and is represented by an equation (H) below. This idea (theory) suggested by Hansen is described in Hansen solubility parameter: A User's Handbook, Second Edition, C. M. Hansen (2007), Taylor and Francis

Group, LLC (HSPiP manual).

$$HSP^2 = (\delta D)^2 + (\delta P)^2 + (\delta H)^2 \quad (H)$$

δD: London dispersion force term
δP: molecular polarization term (dipole-dipole force term)
δH: hydrogen bonding term

The terms δD, δP, and δH can be calculated, for example, from the chemical structural formulae of the polymer 1 and the quorum sensing inhibitor, using computer software Hansen Solubility Parameters in Practice (HSPiP). For the molded article according to the present invention, a value obtained through calculation by HSPiP ver. 5.0.04 is used.

When the polymer 1, and the quorum sensing inhibitor to be contained in the resin composition A are each a copolymer consisting of two or more types of structural units, the program described above cannot directly calculate the Hansen solubility parameters. In such a case, the Hansen solubility parameters of homopolymers each consisting of one type of structural units were calculated, and as the Hansen solubility parameter of the copolymer was used a value obtained by averaging the calculated Hansen solubility parameters of the homopolymers according to the volume ratio between the types of structural units included in the copolymer. Here, the phrase "a value obtained by averaging ... according to the volume ratio" refers to a value obtained by multiplying the Hansen solubility parameters δD, δP, and δH of each of the homopolymers, which are each consisting of one type of structural units, by the volume fraction of the type of structural units and totaling, for each of the terms δD, δP, and δH, the values obtained by the multiplication. Here, the term "volume fraction" of a type of structural units means (volume of the type of structural units)/(total volume of types of structural units in copolymer).

The distance $Ra_1$ between $HSP_A$ and $HSP_D$ represents the distance between the Hansen solubility parameters (HSP) of two substances. The distance $Ra_1$ is an index representing the affinity between the two substances, and the two substances can be said to have higher affinity therebetween as the value of $Ra_1$ is decreased.

Supposing that the Hansen solubility parameters HSPα and HSPβ of substances α and β are set as

$$HSP_\alpha = (\delta D_\alpha, \ \delta P_\alpha, \ \delta H_\alpha)$$

$$HSP_\beta = (\delta D_\beta, \ \delta P_\beta, \ \delta H_\beta),$$

a distance (Ra) between $HSP_\alpha$ and $HSP_\beta$ can be calculated by an equation (R) below.
[Math 1]

$$Ra = [4\times(\delta D_\alpha - \delta D_\beta)^2 + (\delta P_\alpha - \delta P_\beta)^2 + (\delta H_\alpha - \delta H_\beta)^2]^{1/2} \cdots (R)$$

The quorum sensing inhibitor may be supported by a carrier. Examples of the carrier include:

zeolite;
montmorillonite;
activated carbon;
calcium phosphate-based compounds such as hydroxyapatite;
oxides such as silicon oxide, aluminum oxide, magnesium oxide, titanium oxide, and zirconium oxide;
nitrides such as silicon nitride, titanium nitride, aluminum nitride, and zirconium nitride;
non-oxide ceramic such as silicon carbide;
silicic acid salts such as calcium silicate, aluminum silicate, magnesium silicate, and diatom earth; and
alumina-silica-based compounds such as kaolinite, bentonite, floatstone, feldspar, and quartz.

When the resin composition A further contains the quorum sensing inhibitor, the content of the quorum sensing inhibitor is preferably 0.01 to 30 wt%, more preferably 0.1 to 10 wt%, further preferably 0.1 to 5 wt%, with the amount of the polymer 1 defined as 100 wt%.

Antibacterial mildew-proofing agent

The resin composition A may contain an antibacterial mildew-proofing agent. Examples of the antibacterial mildew-proofing agent include:

phenol-alcohol-based antibacterial mildew-proofing agents such as methyl-2,4-dihydroxy-6-methylbenzoate, ethyl-2,4-dihydroxy-6-methylbenzoate, methyl-2,4-dihydroxy-3,6-dimethylbenzoate, isopropyl-2,4-dihydroxy-6-methylbenzoate, 3-methoxy-5-methylphenyl-2,4-dihydroxy-6-methylbenzoate, ethyl-2,4-dihydroxy-3,6-dimethylbenzoate, ethyl-3-formyl-2,4-dihydroxy-6-methylbenzoate, isopropyl-3-formyl-2,4-dihydroxy-6-methylbenzoate, 3-hydroxy-5-methylphenyl-2,4-dihydroxy-6-methylbenzoate, 3-hydroxy-5-methylphenyl-2-dihydroxy-4-methoxy-6-methylbenzoate, 3-methoxy-5-methylphenyl-2-hydroxy-4-methoxy-6-methylbenzoate, and 3-chloro-2,6-dihydroxy-4-methylbenzoate;
pyridine-quinoline-based antibacterial mildew-proofing agents such as (2-pyridylthio-1-oxide)sodium, nalidixic acid, gatifloxacin, pyrithione copper, and pyrithione zinc;
triazine-based antibacterial mildew-proofing agents such as hexahydro-1,3,5-tris(2-hydroxyethyl)-S-triazine;
isothiazolone-based antibacterial mildew-proofing agents such as 1,2-bezisothiazolin-3one, a 2-methyl-5-chloro-4-isothiazolone complex, octylisothiazolinone, methylisothiazolinone, chloromethylisothiazolinone, dichlorooctylisothiazolinone, and benzisothiazolinone
anilide-based antibacterial mildew-proofing agents such as 4'-hydroxyacetanilide, N-(3-hydroxyphenyl)benzenecarboxamide, and N-(3-hydroxyphenyl)benzamide;
nitrile-based antibacterial mildew-proofing agents such as monobromocyanoacetamide, dibromocyanoacetamide, 1,2-dibromo-2,4-dicyanobutane, and tetrachlorophthalonitrile;
imidazole-thiazole-based antibacterial mildew-proofing agents such as 2-(4-thiazolyl)benzimidazole, methyl 2-benzimidazolecarbamate, and methyl 1-(butylcarbamoyl)-2-benzimidazolecarbamate;
aldehyde-based antibacterial mildew-proofing agents such as dehydroacetic acid;
carboxylic acid-based antibacterial mildew-proofing agents such as sorbic acid;
ester-based antibacterial mildew-proofing agents such as a paraoxybenzoic acid ester;
disulfide compounds such as dithio-2,2-bis(benzmethylamide), tetramethylthiuram disulfide, and dimethylphenylsulfamide;
thiocarbamate compounds such as manzeb, maneb, zineb, and a polycarbamate;
nitro compounds such as 1,1-dibromo-1-nitropropanol and 1,1-dibromo-1-nitro-2-acetoxypropane;
quaternary ammonium salts such as benzalkonium chloride, benzethonium chloride, methylbenzethonium chloride, cetylpyridinium chloride, cetrimonium, dofanium chloride, tetraethylammonium bromide, didecyldimethylammonium chloride, and domiphen bromide;
biguanides such as metformin, buformin, phenformin, proguanil, chlorproguanil, chlorhexidine, alexidine, polyaminopropyl biguanide, and polyhexanide;
surfactants such as sodium alkylbenzenesulfonate, polyoxyethylene nonylphenyl ether, polyoxyethylene oleyl ether, polyoxyethylene stearyl amine, and lauryldimethylbenzylammonium chloride; and
inorganic antibacterial agents such as silver-supported zeolite, copper-supported zeolite, zinc-supported zeolite, silver-supported calcium phosphate, copper-supported calcium phosphate, zinc-supported calcium phosphate, and titanium oxide.

Among these examples, preferred are phenol-alcohol-based antibacterial mildew-proofing agents, pyridine-quinoline-based antibacterial mildew-proofing agents, isothiazolone-based antibacterial mildew-proofing agents, nitrile-based antibacterial mildew-proofing agents, imidazole-thiazole-based antibacterial mildew-proofing agents, aldehyde-based antibacterial mildew-proofing agents, carboxylic acid-based antibacterial mildew-proofing agents, ester-based antibacterial mildew-proofing agents, quaternary ammonium salts, biguanides, surfactants, and inorganic antibacterial agents; more preferred are pyridine-quinoline-based antibacterial mildew-proofing agents, isothiazolone-based antibacterial mildew-proofing agents, and imidazole-thiazole-based antibacterial mildew-proofing agents; and further preferred are thiabendazole, pyrithione zinc, and octylisothiazolinone.

When containing the antibacterial mildew-proofing agent, the resin composition A may contain only one antibacterial mildew-proofing agent or two or more antibacterial mildew-proofing agents.

The common logarithm logS of the solubility of the antibacterial mildew-proofing agent in water at a pH of 6 to 8 and 25°C is in a range of preferably 1 or less, more preferably -0.6 or less, further preferably -1 or less, further preferably -1.5 or less.

The antibacterial mildew-proofing agent may be supported by a carrier.

Examples of the carrier for the antibacterial mildew-proofing agent include examples listed as the carrier for the quorum sensing inhibitor.

When the resin composition A contains the antibacterial mildew-proofing agent, the content of the antibacterial mildew-proofing agent is preferably 0.01 to 10 wt%, more preferably 0.1 to 5 wt%, with the amount of the polymer 1 and the antibacterial mildew-proofing agent defined as 100 wt%.

Surface modifier

The resin composition A may contain a surface modifier. The "surface modifier" in the present description means a compound that changes, depending on the presence or absence thereof, the surface free energy of the molded article.
Examples of the surface modifier include:

fluorine-based surfactants such as nonafluoro-1-butanesulfonic acid, tridecafluoroheptanoic acid, heptadecafluorooctanesulfonic acid, heptadecafluorononanoic acid, heneicosafluoroundecanoic acid, 2H,2H,3H,3H-heptadecafluoroundecanoic acid, ammonium pentadecafluorooctanoate, lithium nonafluoro-1-butanesulfonate, potassium heptadecafluoro-1-octanesulfonate, Surflon S-431, Surflon S-461, and Surflon S-420;
a perfluoropolyether group-containing compound described in International Publication WO 2014/080873;
fluorine-based monomers such as 1H,1H,2H,2H-heptadecafluorodecyl acrylate;
an alkylsiloxy group-containing compound described in RSC Adv. 2015, 5, 53054-53062;
a polyalkylene ether group-containing compound described in Japanese Unexamined Patent Application Publication No. 2017-115044;
a betaine-type compound described in Japanese Unexamined Patent Application Publication No. 2002-069178; and
surfactants such as glycerin monostearate.

Among these examples, preferred are fluorine-based surfactants, a perfluoropolyether group-containing compound, fluorine-based monomers, a polyalkylene ether group-containing compound, a betaine-type compound, and surfactants; more preferred are fluorine-based surfactants, fluorine-based monomers, and a polyalkylene ether group-containing compound; and further preferred are 1H,1H,2H,2H-heptadecafluorodecyl acrylate, Surflon S-431, Surflon S-461, and Surflon S-420.
When the resin composition A contains the surface modifier, the content of the surface modifier is preferably 0.1 to 30 wt%, more preferably 1 to 20 amount%, with the amount of the polymer 1 defined as 100 wt%.
The resin composition A may contain a known additive as necessary. Examples of the additive include an antioxidant, an antirust, an ultraviolet absorber, a light stabilizer, an anti-biofouling agent, a biological repellent, an antibiotic, an antivirus agent, a deodorant, a pigment, a flame retardant, an antistat, a lubricant, a filling agent, a plasticizer, a nucleating agent, an antiblocking agent, a foaming agent, an emulsifier, a brightener, a binding agent, a compatibilizing agent, a polymerization inhibitor, a shrinkage reducing agent, a curing agent, a cross-linking agent, a promotor, a mold-releasing agent, a thickener, fibers, a weather-proof agent, a defogging agent, an anti-drop agent, and a filler.
These additives may be added by kneading with the uncross-linked polymer according to the present invention before cross-linking the uncross-linked polymer according to the present invention.
Examples of the antioxidant include a phenol-based antioxidant, a sulfur-based antioxidant, a phosphorus-based antioxidant, and a hindered amine-based antioxidant.
Examples of the phenol-based antioxidant include N-octadecyl-3-(4-hydroxy-3,5-di-tert-butylphenyl)propionate, 2,6-di-tert-butyl-4-methylphenol, 2,2-thio-diethylene-bis-[3-(3,5-di-tert-butyl-4-hydroxyphenyl)propionate], triethyleneglycol-bis-[3-(3-tert-butyl-5-methyl-4-hydroxyphenyl)propionate], 3,9-bis[2-{3-(3-tert-butyl-4-hydroxy-5-methylphenyl)propioniloxy}-1,1-dimethylethyl]-2,4,8,10-tetraoxaspiro[5.5]undecane, tetrakis{3-(3,5-di-tert-butyl-4-hydroxyphenyl)-propionic acid}pentaerythrityl ester, 2-tert-butyl-6-(3-tert-butyl-2-hydroxy-5-methylbenzyl)-4-methylphenyl acrylate, 2-[1-(2-hydroxy-3,5-di-tert-pentylphenyl)ethyl]-4,6-di-tert-pentylphenyl acrylate, 1,3,5-trimethyl-2,4,6-tris(3,5-di-tert-butyl-4-hydroxybenzyl)benzene, tris(3,5-di-tert-butyl-4-hydroxybenzyl)isocyanurate, 1,3,5-tris(4-tert-butyl-3-hydroxy-2,6-dimethylbenzyl)-1,3,5-triazine-2,4,6-(1H,3H,5H)-trione, 2,2'-methylenebis(6-tert-butyl-4-methylphenol), 4,4'-butylidenebis(6-tert-butyl-3-methylphenol), and 4,4'-thiobis(6-tert-butyl-3-methylphenol).
Examples of the sulfur-based antioxidant include 3,3'-thiodipropionic acid di-N-dodecyl ester, 3,3'-thiodipropionic acid di-N-tetradecyl ester, 3,3-thiodipropionic acid di-N-octadecyl ester, and tetrakis(3-dodecylthiopropionic acid)pentaerythrityl ester.
Examples of the phosphorus-based antioxidant include tris(2,4-di-tert-butylphenyl)phosphite, bis(2,4-di-tert-butylphenyl)pentaerythritol diphosphite, bis(2,6-di-tert-butyl-4-methylphenyl)pentaerythritol diphosphite, bis(2,4-dicumylphenyl)pentaerythritol diphosphite, tetrakis(2,4-di-tert-butylphenyl)-4,4'-biphenylene diphosphonite, and bis-[2,4-di-tert-butyl, (6-methyl)phenyl]ethyl phosphite.
Examples of the hindered amine-based antioxidant include sebacic acid bis(2,2,6,6-tetramethyl-4-piperidyl) ester, 2,2,6,6-tetramethyl-4-piperidyl methacrylate, and poly[{6-(1,1,3,3-tetramethylbutyl)amino-1,3,5-triazine-2,4-diyl}{(2,2,6,6-tetramethyl-4-piperidyl)imino}-1,6-hexamethylene{(2,2,6,6-tetramethyl-4-piperidyl)imino}].

Examples of the antirust include an alkanolamine, a quaternary ammonium salt, an alkanethiol, imidazoline, sodium metavanadate, bismuth citrate, a phenol derivative, a polyalkenylamine, an alkylimidazoline derivative, a dianoalkylamine, a carboxylic acid amide, an alkylenediamine, pyrimidine, and carboxylic acid complexes thereof, naphthenic acid complexes thereof, and sulfonic acid complexes thereof, calcium nitrite, an alkyl amine or ester, a polyalcohol, a polyphenol, an alkanolamine, sodium molybdate, sodium tungstate, sodium nitrite, sodium phosphonate, sodium chromate, sodium silicate, gelatin, a carboxylic acid polymer, an aliphatic amine, an aliphatic diamine, an aromatic amine, an aromatic diamine, an ethoxylated amine, imidazole, benzimidazole, a nitro compound, formaldehyde, an acetylene alcohol, an aliphatic thiol, an aliphatic sulfide, an aromatic thiol, an aromatic sulfide, a sulfoxide, thiourea, an acetylene alcohol, 2-mercaptobenzimidazole, a mixture of an amine or a quaternary ammonium salt with a halogen ion, an acetylene thiol or sulfide, dibenzyl sulfoxide, a mixture of an alkyl amine with potassium iodide, dicyclohexylamine nitrite, cyclohexylamine benzoate, benzotriazole, a mixture of tannin with sodium phosphate, a mixture of triethanolamine, lauryl sarcosine, and benzotriazole, and a mixture of an alkyl amine, benzotriazole, sodium nitrite, and sodium phosphate.

Examples of the ultraviolet absorber and the light stabilizer include 2-(5-methyl-2-hydroxyphenyl)benzotriazole, 2-[2-hydroxy-3,5-bis(A,A-dimethylbenzyl)phenyl]-2H-benzotriazole, 2-(3-tert-butyl-5-methyl-2-hydroxyphenyl)-5-chlorobenzotriazole, 2-(2'-hydroxy-5'-tert-octylphenyl)benzotriazole, methyl-3-[3-tert-butyl-5-(2H-benzotriazole-2-yl)-4-hydroxyphenyl]propionate-polyethylene glycol, a hydroxyphenylbenzotriazole derivative, 2-(4,6-diphenyl-1,3,5-triazine-2-yl)-5[(hexyl)oxy]-phenol, and 2-ethoxy-2'-ethyl-oxalic acid bis anilide.

Examples of the anti-biofouling agent include tetramethylthiuram disulfide, zinc bis(N,N-dimethyldithiocarbamate), 3-(3,4-dichlorophenyl)-1,1-dimethylurea, dichloro-N-((dimethylamino)sulfonyl)fluoro-N-(P-tryl)methanesulpheneamide, pyridine-tri phenylborane, N,N-dimethyl-N'-phenyl-N'-(fluorodichloromethylthio)sulfamide, copper(I) thiocyanate, copper(I) oxide, tetrabutylthiuram disulfide, 2,4,5,6-tetrachloroisophthalonitrile, zinc ethylenebisdithiocarbamate, 2,3,5,6-tetrachloro-4-(methylsulfonyl)pyridine, N-(2,4,6-trichlorophenyl)maleimide, a bis(2-pyridinethiol-1-oxide)zinc salt, a bis(2-pyridinethiol-1-oxide)copper salt, 2-methylthio-4-tert-butylamino-6-cyclopropylamino-S-triazine, an alkylpyridine compound, a gramine-based compound, and an isotonyl compound.

Examples of the deodorant include organic acids, fatty acid metals, a metal compound, cyclodextrins, and a porous material.

Examples of the organic acids include lactic acid, succinic acid, malic acid, citric acid, maleic acid, malonic acid, ethylenediamine polyacetic acid, an alkane-1,2-dicarboxylic acid, an alkene-1,2-dicarboxylic acid, a cycloalkane-1,2-dicarboxylic acid, a cycloalkene-1,2-dicarboxylic acid, and naphthalenesulfonic acid.

Examples of the fatty acid metals include zinc undecylenate, zinc 2-ethylhexanoate, and zinc ricinoleate.

Examples of the metal compound include iron oxide, iron sulfate, zinc oxide, zinc sulfate, zinc chloride, silver oxide, copper oxide, sodium metal (iron, copper, or the like) chlorophyllin, a metal (iron, copper, cobalt, or the like) phthalocyanine, a metal (iron, copper, cobalt, or the like) phthalocyanine tetrasulfonate, titanium dioxide, and visible light-responsive titanium dioxide (nitrogen-doped-type or the like).

Examples of the cyclodextrins include $\alpha$-cyclodextrin, $\beta$-cyclodextrin, $\gamma$-cyclodextrin, and methyl derivatives thereof, hydroxypropyl derivatives thereof, glucosyl derivatives thereof, and maltosyl derivatives thereof.

Examples of a component constituting the porous material include a polyunsaturated carboxylic acid, an aromatic polymer, chitin, chitosan, activated carbon, silica gel, activated alumina, zeolite, and ceramic.

Examples of the polyunsaturated carboxylic acid include polymethacrylic acid and polyacrylic acid.

Examples of the aromatic polymer include polydivinylbenzene, a styrene-divinylbenzene-vinylpyridine copolymer, and a divinylbenzene-vinylpyridine copolymer.

Examples of the pigment include carbon black, titanium oxide, a phthalocyanine-based pigment, a quinacridone-based pigment, an isoindolinone-based pigment, a perylene pigment, a perynine-based pigment, a quinophthalone-based pigment, a diketopyrrolo-pyrrole-based pigment, a dioxazine-based pigment, a condensed disazo-based pigment, and a benzimidazolone-based pigment.

Examples of the flame retardant include decabromobiphenyl, antimony trioxide, a phosphorus-based flame retardant, and aluminum hydroxide.

Examples of the antistat include a cationic surfactant, an amphoteric surfactant, an anionic surfactant, and a nonionic surfactant.

Examples of the cationic surfactant include a quaternary ammonium salt, a primary amine salt, a secondary amine salt, a tertiary amine salt, a quaternary amine salt, and a pyridine derivative.

Examples of the amphoteric surfactant include a betaine-type surfactant, a carboxylic acid derivative, and an imidazoline derivative.

Examples of the anionic surfactant include an alkyl phosphate-type surfactant, sulfated oil, soap, sulfated ester oil, sulfated amide oil, sulfated ester salts of olefins, fatty alcohol sulfuric acid ester salts, an alkyl sulfuric acid ester salt, a fatty acid ethyl sulfonic acid salt, an alkyl naphthalene sulfonic acid salt, an alkyl benzene sulfonic acid salt, a succinic acid ester sulfonic acid salt, and a phosphoric acid ester salt.

Examples of the nonionic surfactant include a partial fatty acid ester of a polyhydric alcohol, an ethylene oxide adduct of a fatty alcohol, an ethylene oxide adduct of a fatty acid, an ethylene oxide adduct of a fatty amino or a fatty acid amide, an ethylene oxide adduct of an alkyl phenol, an ethylene oxide adduct of a partial fatty acid ester of a polyhydric alcohol, and polyethylene glycol.

Examples of the curing agent include tertiary (C4-C10) alkyl peroxybenzoates such as t-butyl peroxybenzoate, t-amyl peroxybenzoate, 1,1-dimethylbutyl peroxybenzoate, 1,1,2-trimethylpropyl peroxybenzoate, and 1,1,3,3-tetramethylbutyl peroxybenzoate; tertiary (C4-C10) alkyl peroxy branched (C4-C10) alkyl esters such as t-butyl peroxy-2-ethylhexanoate, t-amyl peroxy-2-ethylhexanoate, 1,1-dimethylbutyl peroxy-2-ethylhexanoate, 1,1,2-trimethylpropyl peroxy-2-ethylhexanoate, 1,1,3,3-tetramethylbutyl peroxy-2-ethylhexanoate, t-butyl peroxyneodecanoate, t-butyl peroxypivalate, 1,1-dimethylbutyl peroxypivalate, 1,1,2-trimethylpropyl peroxypivalate, t-butyl peroxyisobutyrate, t-butyl peroxyacetate, t-butyl peroxy-3,5,5-trimethylhexanoate, t-amyl peroxy-3,5,5-trimethylhexanoate, 1,1-dimethylbutyl peroxy-3,5,5-trimethylhexanoate, and 1,1,2-trimethylpropyl peroxy-3,5,5-trimethylhexanoate; ketone peroxides such as methyl ethyl ketone peroxide, methylisopropyl ketone peroxide, methylisobutyl ketone peroxide, and cyclohexanone peroxide; peroxy monocarbonates such as t-butyl peroxy isopropyl carbonate, t-amyl peroxy isopropyl carbonate, 1,1-dimethylbutyl peroxy isopropyl carbonate, 1,1,2-trimethylpropyl peroxy isopropyl carbonate, t-butyl peroxy-2-ethylhexyl carbonate, t-amyl peroxy-2-ethylhexyl carbonate, 1,1-dimethylbutyl peroxy-2-ethylhexyl carbonate, 1,1,2-trimethyl peroxy propyl carbonate, and 1,1,3,3-tetramethylbutyl peroxy-2-ethylhexyl carbonate; and hydroperoxides such as o-diisopropylbenzene monohydroperoxide, m-diisopropylbenzene monohydroperoxide, p-diisopropylbenzene monohydroperoxide, o-diisopropylbenzene dihydroperoxide, m-diisopropylbenzene dihydroperoxide, and p-diisopropylbenzene dihydroperoxide.

Examples of the polymerization inhibitor include quinones such as para-benzoquinone, toluquinone, naphthoquinone, phenanthraquinone, and 2,5-diphenyl para-benzoquinone; hydroquinones such as toluhydroquinone, hydroquinone, tertiary butyl catechol, mono tertiary butyl hydroquinone, and 2,5-ditertiary butyl hydroquinone; and monophenols such as hydroquinone monomethyl ether and 2,6-di-t-butyl-p-cresol.

Examples of the shrinkage reducing agent include thermoplastic resins such as polystyrene, polymethyl methacrylate, polyvinyl acetate, saturated polyester, and styrene-butadiene-based rubber.

Examples of the promoter include cobalt naphthenate, cobalt octanoate, manganese naphthenate, copper naphthenate, cobalt octanoate, and copper octanoate.

Examples of the mold-releasing agent include metal soap such as zinc stearate and calcium stearate, a fluorine-based organic compound, and a phosphoric acid-based compound.

Examples of the thickener include an oxide or a hydroxide of magnesium, calcium, or the like.

Examples of the fibers include glass chopped strands, milled glass fibers, and glass roving.

When subjected to extrusion molding, injection molding, vacuum molding, blow molding, or roll molding, the resin composition according to the present invention preferably has a melt flow rate (MFR) of 0.1 to 100 g/10 min, from the viewpoint of the moldability, the melt flow rate being measured at 230°C and a load of 2.16 kgf in accordance with JIS K7210.

When spun into fibers as described later, the resin composition according to the present invention preferably has a melt flow rate (MFR) of 1 to 1000 g/10 min, the melt flow rate being measured at 230°C and a load of 2.16 kgf in accordance with JIS K7210.

The method for producing the resin composition A is not particularly limited.

The resin composition A may be produced by melt-kneading the polymer 1 with a thermoplastic resin, a thermosetting resin, a quorum sensing inhibitor, an antibacterial mildew-proofing agent, a surface modifier, other additives, or the like added as necessary, and then cooling the mixture. The resin composition A may be produced by melt-kneading these materials and then formed into pellets by a pelletizer.

The resin composition A may also be produced by melt-kneading in advance the polymer 1 with a thermoplastic resin, a thermosetting resin, a quorum sensing inhibitor, an antibacterial mildew-proofing agent, a surface modifier, other additives, or the like added as necessary, preparing high-density masterbatch, then further adding the polymer 1, a thermoplastic resin, or a thermosetting resin, and melt-kneading the mixture.

The resin composition A may also be produced by simply mixing the polymer 1 with a thermosetting resin, a quorum sensing inhibitor, an antibacterial mildew-proofing agent, a surface modifier, other additives, or the like added as necessary. The resin composition A may also be produced by dissolving the polymer 1 in a solvent and then mixing the solution with a thermosetting resin, a quorum sensing inhibitor, an antibacterial mildew-proofing agent, a surface modifier, other additives, or the like added as necessary. The resin composition A may also be produced by mixing the polymer 1 with a solvent or a solution obtained by dissolving in a solvent a thermosetting resin, a quorum sensing inhibitor, an antibacterial mildew-proofing agent, a surface modifier, other additives, or the like added as necessary. The resin composition A may also be produced by dissolving the polymer 1 in a solvent, then dissolving in a solvent a thermosetting resin, a quorum sensing inhibitor, an antibacterial mildew-proofing agent, a surface modifier, other additives, or the like added as necessary, and then mixing the solutions.

The resin composition A may also be produced by: simply mixing in advance the polymer 1 with a thermoplastic

resin, a thermosetting resin, a quorum sensing inhibitor, an antibacterial mildew-proofing agent, a surface modifier, other additives, or the like added as necessary, or mixing these materials after dissolving in a solvent; preparing high-density masterbatch; then further adding the polymer 1, a thermoplastic resin, a thermosetting resin, or the like directly or after dissolving in a solvent as necessary; and then mixing the mixture.

The resin composition A may also be produced by mixing a monomer or a prepolymer of the polymer 1 with a thermoplastic resin, a thermosetting resin, a quorum sensing inhibitor, an antibacterial mildew-proofing agent, a surface modifier, other additives, or the like added as necessary, and may also be produced by further polymerizing the mixture. Examples of a polymerization method include bulk polymerization, cast polymerization, solution polymerization, suspension polymerization, and emulsion polymerization.

Using, as a raw material, the polymer 1 or the resin composition A obtained by a method described above, a molded article and a coating film can be produced.

Molded article

A molded article containing the polymer 1 or the resin composition A can be produced by molding the polymer or the composition.

The method for molding the polymer 1 or the resin composition A is not particularly limited. Examples of the method include molding methods such as an injection molding method, an extrusion molding method, a vacuum molding method, a compressed-air molding method, a press molding method, transfer molding, cast molding, compression molding, laminate molding, inflation molding, calendar molding, blow molding, hollow molding, two-color molding, foam molding, insert molding, in-mold coating molding, rotational molding, hand lay-up molding, spray-up molding, matched-die molding, vacuum infusion molding, filament winding molding, centrifugal molding, and pultrusion molding.

Examples of the molded article according to the present invention include an injection molded article, an extrusion molded article, a vacuum molded article, a compressed-air molded article, a press molded article, a transfer molded article, a cast molded article, a compression molded article, a laminate molded article, an inflation molded article, a calendar molded article, a blow molded article, a hollow molded article, a two-color molded article, a foam molded article, an insert molded article, an in-mold coating molded article, a rotational molded article, a hand lay-up molded article, a spray-up molded article, a matched-die molded article, a vacuum infusion molded article, a filament winding molded article, a centrifugal molded article, a pultrusion molded article, a sheet, and a film. The molded article may have a single-layer structure or a multilayer structure.

Multilayer structure

The molded article according to the present invention may have a multilayer structure including a layer formed of the resin composition A, and a layer different therefrom. In the multilayer structure, the layer formed of the resin composition A is preferably at least one of surface layers of the multilayer structure. Examples of a material for forming the layer different from the layer formed of the resin composition A include a resin different from the resin composition A, a metal, paper, and leather. The multilayer structure can be produced by bonding the layer formed of the resin composition A to the layer different therefrom.

The molded article according to the present invention preferably has a dispersion force component $\gamma^d$ of surface free energy of 25 mN/m or less or a sum of a dipole force component $\gamma^p$ and a hydrogen bonding component $\gamma^h$ of surface free energy of 30 mN/m or more, more preferably has a $\gamma^d$ of 20 mN/m or less or a sum of $\gamma^p$ and $\gamma^h$ of 40 mN/m or more, further preferably has a $\gamma^d$ of 16 mN/m or less or a sum of $\gamma^p$ and $\gamma^h$ of 80 mN/m or more. The molded article according to the present invention usually has a dispersion force component $\gamma^d$ of surface free energy of 0 mN/m or more.

The surface free energy is divided into a dispersion term ($\gamma^d$), a hydrogen bonding term ($\gamma^h$), and a dipole term ($\gamma^p$).

As a method for calculating the surface free energy of the molded article according to the present invention, a Kitazaki-Hata method is used.

In the Kitazaki-Hata method, supposing that a surface free energy $\gamma$ consists of the dispersion force component $\gamma^d$, the dipole force component $\gamma^p$, and the hydrogen bonding component $\gamma^h$, the surface free energy $\gamma$ is expressed as:

[Math 2]

$$\gamma = \gamma^{d} + \gamma^{p} + \gamma^{h} \qquad \text{(E)}$$

Further, the relationship between a surface energy $\gamma^l$ of a liquid, a surface energy $\gamma^s$ of a solid, and a contact angle $\theta$ is expressed as:

[Math 3]

$$\gamma_L(1+\cos\theta)=2\sqrt{\gamma_S^d\gamma_L^d}+2\sqrt{\gamma_S^p\gamma_L^p}+2\sqrt{\gamma_S^h\gamma_L^h} \qquad (E\ 1)$$

Using three liquids whose components constituting $\gamma^l$ are known, the contact angles $\theta$ of the liquids are measured, and

[Math 4]

$$\gamma_S^d$$

[Math 5]

$$\gamma_S^p$$

[Math 6]

$$\gamma_S^h$$

simultaneous equations involving the above variables are solved, and the components of the surface free energy of the molded article can thus be obtained.

Fibers containing polymer

Fibers containing the polymer 1 can be obtained by spinning the resin composition A (the resin composition containing the polymer 1).

The resin composition A may contain, as a polymer component, only the polymer 1, or the polymer 1 and a polymer different from the polymer 1. When the resin composition A contains a polymer different from the polymer 1, the different polymer is, for example, the polymer 2 described above. When the resin composition A contains the polymers 1 and 2, it is preferred that the content of the polymer 1 is 1 to 99 wt% and the content of the polymer 2 is 1 to 99 wt%, with the total amount of the polymers 1 and 2 defined as 100 wt%.

When the resin composition A contains the polymer 1 and a polymer different from the polymer 1 and the polymer different from the polymer 1 is incompatible with the polymer 1, a phase formed of the polymer 1 and a phase formed of the polymer different from the polymer 1 usually form a morphology such as a sea-island structure, a cylinder

structure, a lamella structure, or a co-continuous structure.

The cross-sectional shape of the fibers containing the resin composition A may be a circular cross section, a polygon, or an irregular cross section such as a multifoliate shape, or may be a hollow cross section.

The single fiber fineness of the fibers containing the resin composition A is not particularly limited. The single fiber fineness, however, is preferably 1 dtex or more from the viewpoint of easy fiberization, and preferably 20 dtex or less from the viewpoint of softness of the fibers.

Examples of a method for producing the fibers containing the resin composition A include a dry spinning method, a wet spinning method, and a melt spinning method. Preferred is a melt spinning method. General spinning methods include two steps, i.e., a spinning step and a drawing step, with resin composition-containing chips used as a raw material. On the other hand, examples of a spinning method used suitably in the method for producing the fibers containing the resin composition A include: a continuous polymerization spinning method in which the resin composition is not formed into chips but is spun continuously after a step of producing the resin composition; a direct spinning drawing (spin-draw) method in which a spinning step and a drawing step are performed in one step; a high-speed spinning method that does not require a drawing step; a POY-DTY method in which the resin composition is formed into partially-oriented yarn (POY) and subjected to a false twisting step to give draw textured yarn (DTY); and a spun-bonding method. These methods are more rationalized methods than the general spinning methods.

The fibers containing the resin composition A may be composite fibers. The composite fibers refer to fibers that are each a single fiber including two or more types of fibers bonded to each other and formed of different components. Examples of the composite fibers include core-sheath type composite fibers, bonded composite fibers, divided composite fibers, and sea-island type composite fibers.

The single fiber fineness of the composite fibers containing the resin composition A is not particularly limited. The single fiber fineness, however, is preferably 1 dtex or more from the viewpoint of easy fiberization, and preferably 20 dtex or less from the viewpoint of softness of the fibers.

Examples of a structure of the core-sheath type composite fibers include: a core-sheath structure in which a material different from the resin composition A is covered with the resin composition A; and a core-sheath structure in which the resin composition A is covered with a material different from the resin composition A. Preferred is a core-sheath structure in which a material different from the resin composition A is covered with the resin composition A. The material different from the resin composition A is preferably the polymer 2, more preferably polypropylene (PP), polyethylene terephthalate (PET), polytrimethylene terephthalate (PTT), polybutylene terephthalate (PBT), polyamide 6 (PA6), or polyamide 66 (PA66).

As the core-sheath type composite fibers having a core-sheath structure in which a material different from the resin composition A is covered with the resin composition A, preferred are core-sheath type composite fibers having an area proportion of 10% to 90% for the sheath portion on the fiber-diametral cross section.

The bonded composite fibers are crimpled using, for example, the difference in the shrinkage rate of the fibers containing the resin composition A. When the composite fibers are spirally crimped, located on the outer side of the spiral may be the resin composition A or a material different from the resin composition A. Preferred are bonded composite fibers including the resin composition A on the outer side of the spiral. The material different from the resin composition A is preferably the polymer 2, more preferably polypropylene (PP), polyethylene terephthalate (PET), polytrimethylene terephthalate (PTT), polybutylene terephthalate (PBT), polyamide 6 (PA6), or polyamide 66 (PA66).

The divided composite fibers are obtained as ultra-fine fibers by chemically treating the fibers containing the resin composition A and thereby dividing and opening the fibers. When the divided composite fibers each include a radial fiber located in the center thereof and a plurality of wedge-shaped fibers surrounding the radial fiber, the plurality of surrounding wedge-shaped fibers may be the resin composition A or a material different from the resin composition A. Preferred are divided composite fibers each including the resin composition A as the plurality of surrounding wedge-shaped fibers. The material different from the resin composition A is preferably the polymer 2, more preferably polypropylene (PP), polyethylene terephthalate (PET), polytrimethylene terephthalate (PTT), polybutylene terephthalate (PBT), polyamide 6 (PA6), or polyamide 66 (PA66).

The sea-island type composite fibers can be obtained by chemically treating the fibers containing the resin composition A and thereby removing a fiber-sea portion of each of the fibers, and can thus be obtained as ultra-fine fibers each including a plurality of fiber-island portions. The fiber-island portions may be the resin composition A or a material different from the resin composition A. Preferred are sea-island type composite fibers including the resin composition A as the fiber-island portions. The material different from the resin composition A is preferably the polymer 2, more preferably polypropylene (PP), polyethylene terephthalate (PET), polytrimethylene terephthalate (PTT), polybutylene terephthalate (PBT), polyamide 6 (PA6), or polyamide 66 (PA66).

Examples of a form of the fibers containing the resin composition A include long fibers (multifilaments or monofilaments) and short fibers (staple fibers). The long fibers (multifilaments or monofilaments) may be used as they are, may be processed into false twist-textured yarn by false twisting, or may be processed into mixed spun yarn by air mixing. The short fibers (staple fibers) may be used as they are, may be processed into spun yarn by spinning, or may

be processed into blended yarn by blend spinning. The form of the fibers containing the resin composition A may be core spun yarn obtained by combining long fibers with short fibers, or may be folded yarn, twisted union yarn, or covering yarn obtained by twisting the fibers containing the resin composition A.

The fibers containing the resin composition A may contain additives such as an antioxidant, a pigment, a dye, an antibacterial agent, a deodorant, an antistatic agent, a flame retardant, inert fine particles, a light-absorbing heat-generating material, a moisture-absorbing heat-generating material, and a far-infrared heat-generating material. The additives can be added during or after the spinning of the resin composition A.

Light-absorbing heat-generating fibers containing the resin composition A and a light-absorbing heat-generating material are fibers each including therein or having fixed to the surface thereof the light-absorbing heat-generating material, such as zirconium carbide, which absorbs a specific wavelength of sunlight and highly efficiently converts the light to heat energy. A fabric made of the light-absorbing heat-generating fibers is capable of increasing the temperature on a sun-light-applied surface of the fabric, compared to fabrics made of fibers containing no light-absorbing heat-generating material.

Moisture-absorbing heat-generating fibers containing the resin composition A and a moisture-absorbing heat-generating material are fibers that generate adsorption heat when absorbing moisture and that release moisture in a low-humidity environment, thereby having an effect of controlling the temperature and the humidity in clothes.

Far-infrared fibers containing the resin composition A and a far-infrared-emitting material are fibers each including therein or having fixed to the surface thereof ceramic or the like having high far-infrared emissivity, thereby having a heat-keeping effect attributed to far-infrared rays.

A fabric or cloth made of the fibers containing the resin composition A may be any of a woven fabric, a knitted fabric and a nonwoven fabric. Examples of a weave include a plane weave, a twill weave, a sateen weave, and variations thereof, a dobby weave, and a Jacquard weave. Examples of a stitch include weft knitting, warp knitting, and variations thereof.

The weight and the gauge of the fabric or cloth made of the fibers containing the resin composition A are not particularly limited.

The fabric or cloth made of the fibers containing the resin composition A may be made only of the fibers containing the resin composition A, or may be used as a mix-woven or mix-knitted fabric or cloth including another type of fibers. Examples of the other type of fibers include: inorganic fibers such as carbon fibers, inorganic fibers, and metal fibers; purified fibers such as Lyocell; regenerated fibers such as rayon, cupra, and polynosic fibers; semi-synthetic fibers such as acetate, triacetate, and promix fibers; synthetic fibers such as acrylic, acrylic-based fibers, vinylon, vinylidene, polyvinyl chloride, polyethylene, polychlal, aramid, polybutylene terephthalate (PBT), polytrimethylene terephthalate (PTT), polyamide 66 (PA66), and urethane; plant fibers such as cotton, cellulose-based fibers, and Cannabis (e.g., flax, ramie, hemp, and jute), and wool; natural fibers including animal fibers such as sheep wool, animal hair (e.g., Angora, Cashmere, mohair, alpaca, and camel), and silk; and bird feathers such as down and feathers. The use proportion of the fibers containing the resin composition A is not particularly limited, but is preferably 20 wt% to 100 wt%.

The nonwoven fabric made of the fibers containing the resin composition A may contain heat-fusion binder fibers. The heat-fusion binder fibers are preferably core-sheath type or bonded composite fibers made from the resin composition A and a material having a melting point different from the melting point of the resin composition A. The material having a melting point different from the melting point of the resin composition A is preferably the polymer 2, more preferably polypropylene (PP), polyethylene terephthalate (PET), polytrimethylene terephthalate (PTT), polybutylene terephthalate (PBT), polyamide 6 (PA6), or a polyamide 66 (PA66).

When the nonwoven fabric made of the fibers containing the resin composition A includes the heat-fusion binder fibers, the content of the heat-fusion binder fibers is preferably 5 to 20 wt% of all the fibers in the nonwoven fabric.

The nonwoven fabric made of the fibers containing the resin composition A preferably has a weight of 100 $g/m^2$ or less and a thickness of 5 mm or less, and more preferably has a weight of 60 $g/m^2$ or less and a thickness of 5 mm or less, from the viewpoint of lightness, soft texture, fashionability of clothing, and the like.

A method for producing the nonwoven fabric made of the fibers containing the resin composition A usually includes a web-forming step and a web-binding step. Examples of the web-forming step include a dry method, a wet method, a spun-bonding method, a melt-blown method, and an air-laid method. Examples of the web-binding step include a chemical bonding method, a thermal bonding method, a needle punch method, and a spun lace method.

The polymer and composition according to the present invention, and the molded article thereof have excellent moldability, and they can therefore have any shape. Examples of the shape include a spherical shape, an angular shape (cubic shape), a rosary shape (bead shape), a cylindrical shape (pellet shape), a powder shape, a bar shape (stick shape), a needle shape, a fibrous shape (fiber shape), a strand shape, a yarn shape, a string shape, a rope shape, a net shape, a plate shape, a sheet shape, a membrane shape (film shape), a woven fabric shape, a nonwoven fabric shape, a box shape (capsule shape), a foam shape, and any stereoscopic shapes. The shape can be appropriately selected according to the purpose of use.

The molded article having a spherical shape, an angular shape (cubic shape), a rosary shape (bead shape),

a cylindrical shape (pellet shape), or a powder shape may have a core-shell structure in which the polymer according to the present invention is covered with a material different from the polymer according to the present invention, or may have a core-shell structure in which a material different from the polymer according to the present invention is covered with the polymer according to the present invention. Examples of the material different from the polymer according to the present invention include a polymer different from the polymer according to the present invention, a metal, and an inorganic material other than metals.

The molded article having a bar shape (stick shape), a needle shape, a fibrous shape (fiber shape), a strand shape, a yarn shape, a string shape, a rope shape, or a net shape may have a core-sheath structure in which the combined body according to the present invention is covered with a material different from the polymer according to the present invention, or may have a core-sheath structure in which a material different from the polymer according to the present invention is covered with the polymer according to the present invention.

The molded article having a plate shape, a sheet shape, a membrane shape (film shape), a woven fabric shape, a nonwoven fabric shape, a box shape, or a capsule shape may have a laminate structure in which the polymer according to the present invention has both surfaces or one surface thereof covered with a material different from the polymer according to the present invention, or may have a laminate structure in which a material different from the polymer according to the present invention has both surfaces or one surface thereof covered with the polymer according to the present invention.

The molded article having a foam shape, and

the molded article having a shape different from foam shapes, or a material different from the polymer according to the present invention
may have a core-shell structure, a core-sheath structure, or a laminate structure.

Coating film

A coating film containing the polymer 1 or the resin composition A can be produced by applying the polymer 1 or the resin composition A onto a base material and drying the polymer or the composition, or by dissolving the polymer 1 or the resin composition A in a solution and then applying the solution onto a base material.

The method for applying the polymer 1 or the resin composition A is not particularly limited. Examples of the application method include a dip coating method, a roll coating method, a bar coating method, a screen printing method, a doctor blade method, a spin coating method, a spray coating method, a die coating method, and an evaporation coating method.

Examples of the base material onto which the coating film according to the present invention is applied include metals such as silicon, iron, copper, aluminum, and zinc; inorganic materials such as an alloy, ceramic, stainless steel, and glass; thermoplastic resins such as an acrylic resin, a polycarbonate resin, a polyester resin, a styrene resin, an acrylic-styrene copolymer resin, a cellulose resin, a polyolefin resin, and polyvinyl alcohol; organic materials such as a phenolic resin, a urea resin, a melamine resin, an epoxy resin, unsaturated polyester, a silicone resin, and a urethane resin; and wood, a stone, cement, concrete, fibers, a textile, paper, and leather. The coating film may have a single layer or a multilayer.

Examples of a shape of the base material onto which the coating film according to the present invention is applied include a flat plate, a film, a curved surface, a spherical shape, an angular shape (cubic shape), a rosary shape (bead shape), a cylindrical shape (pellet shape), a powder shape, a bar shape (stick shape), a needle shape, a fibrous shape (fiber shape), a strand shape, a yarn shape, a string shape, a rope shape, a net shape, a plate shape, a sheet shape, a membrane shape (film shape), a woven fabric shape, a nonwoven fabric shape, a box shape (capsule shape), a foam shape, and any stereoscopic shapes.

Multilayer coating film

The coating film according to the present invention may be a multilayer coating film including a layer formed of the polymer 1 or the resin composition A, and a layer different therefrom. In the multilayer coating film, the layer formed of the polymer 1 or the resin composition A is preferably at least one of surface layers of the multilayer coating film. Examples of a material for forming the layer different from the layer formed of the polymer 1 or the resin composition A include a resin different from the polymer 1 or the resin composition A, and a primer. The multilayer coating film can be produced by sequentially applying onto the base material the layer formed of the resin composition A and the layer different therefrom.

The coating film according to the present invention preferably has a dispersion force component $\gamma^d$ of surface free energy of 25 mN/m or less or a sum of a dipole force component $\gamma^p$ and a hydrogen bonding component $\gamma^h$ of surface free energy of 30 mN/m or more, more preferably has a $\gamma^d$ of 20 mN/m or less or a sum of $\gamma^p$ and $\gamma^h$ of 40 mN/m or more,

further preferably has a $\gamma^d$ of 16 mN/m or less or a sum of $\gamma^p$ and $\gamma^h$ of 80 mN/m or more. The coating film according to the present invention usually has a dispersion force component $\gamma^d$ of surface free energy of 0 mN/m or more.

The composition, the molded article, the fibers, and the coating film each containing the polymer 1 have excellent hydrophilicity and oleophobic properties. In one aspect, the composition, the molded article, the fibers, and the coating film further have at least one excellent characteristic selected from antifouling properties, sliding properties, antistatic properties, heat resistance, chemical resistance, solvent resistance, chemical low permeability, flame retardancy, electric properties, or durability. Therefore, the composition, the molded article, the fibers, and the coating film can be used for various uses requiring the characteristics described above.

In one aspect, the molded article according to the present invention has excellent antifouling properties, and can therefore suitably be used for uses such a fibrous product, kitchen equipment and a member thereof, bathroom, lavatory, or toilet equipment and a member thereof, a member of water storage equipment, a home electrical appliance and a member thereof, medical equipment and a member thereof, an agricultural material and a member thereof, fishing equipment and a member thereof, a civil engineering material and a member thereof, a member of road traffic equipment, and a member of a power plant facility or a harbor or gulf coast facility.

Examples of an item as which the molded article containing the resin composition A can be applied include:

kitchen members and kitchen equipment such as a dish, various cooking tools, a storage container, a water purification pod, a water filter, a drain outlet, a drain trap, a sink strainer, various components of a sink, a water storage pod, a heat insulating pod, wrap, an IH heater, a draining basket, a water pipe, a tap, a kitchen hood, and a coffee mill;
lavatory members such as a lavatory, a wash bowl, a bathroom vanity, a mirror, a drain outlet, a drain trap, a drain plug, a hair catcher, and a drain trap;
bathroom members such as a bathroom wall, a bathroom floor, a counter, a bathtub, a tap, a mirror, an air fan, a bathroom dryer, a bathtub cover, and a shower;
washing members such as a washing machine, a hose, a washing tub, a washing-machine drain trap, and a washing-machine drain outlet;
toilet members such as a toilet seat, a toilet seat cover, a toilet bowl, a flush tank, a warm-water washing toilet seat, a warm-water washing toilet seat nozzle, and a portable washlet (registered trade name);
various pipes;
various types of packing;
various cocks;
various nets;
various water storage items and equipment such as a water storage tank, a reservoir, a solar water heater, a water tank, and a pool;
breeding or cultivation equipment such as a cultivation water tank, a display or ornamental water tank, a build-up water tank, cycle filtration equipment, an automatic feeder, a warming and cooling unit, a thermometer, a water tank fan, an air supplier, an oxygen generator, a fish tag, a foam separator, a stir paddle, a water bottom activator, an incubator, an aqua frame, and a pump; living fish transportation equipment such as a living fish tank, a container, a blower, and a cooling device; and various packing materials such as a food packing material and a cosmetic packing material;
various interior equipment such as an air fan, a window frame, a screen, a sash, window glass, cultured marble, a tatami mat, a wood floor, a light, a carpet, wall paper, a house interior wall, a house ceiling, and a drainage channel;
house exterior equipment such as an electric power cable, an antenna, a roof material, a house exterior wall, a power pole, and an embedded pipe;
various types of electric equipment and accessories thereof such as an air conditioner, an air conditioner drainage pan, an air conditioner exterior unit, various hoses, a heat exchanger, a humidifier, a dryer, a refrigerator, a dish washer, a dish dryer, a washing machine, a cleaner, a drink server, a coffee server, a microwave, a clothes iron, a steamer, an aroma diffuser, a home cleaning machine, a high-pressure cleaning machine, a pot, a wearable device, a printer, and a liquid absorber for image forming apparatuses;
various medical supplies such as a nasogastric tube, a wound contact layer, a catheter, a tube stent, a pacemaker shell, a cardiac valve, an orthopedic implant, a periodontal implant, an orthodontic device, an orthodontic tool other than orthodontic devices, an artificial tooth, a tooth crown, a face mask, a contact lens, an intraocular lens, a soft tissue implant, a surgical tool, a suture thread, a cochlear implant, a tympanic cavity forming tube, a shunt, a postoperative drainage tube, a drainage device, an endotracheal tube, a cardiac valve, an adhesive tape, a wound dressing, an implantable device other than the above, an indwelling device other than the above, artificial skin, and artificial muscle;
fishing members such as a ship, a ship bottom paint, a rope, a fishing net, a fishing tool, a float, a buoy, a live-box, a fish hook, a floater, a fish line, a float ball, a container, a bucket, a longline, a wire, and an underwater light;
underwater structures such as water supply and discharge port of a thermal or nuclear power plant;

sea water utilizing equipment such as a sea water pump;
power plant facilities and harbor or gulf coast facilities such as a mega-float, a gulf coast road, and an undersea tunnel;
members of a power plant facility such as a wind power generator blade, a solar power generator panel, a solar battery cover, a heat exchanger, and a heat radiation fin for heat exchangers;
civil engineering equipment such as a sludge diffusion preventing membrane used in various types of marine civil engineering work for canals, waterways, or the like;
vehicle members such as automobile window glass, a vehicle body, a seat, a paint for automobiles, a grazing material, a head lamp lens, a door mirror, a camera lens, a radiator fin, an evaporator, a pop-up display, a front window, and a two-wheel vehicle body;
equipment for public transportation vehicles such as a railroad vehicle body, a bus body, a seat, a vehicle floor, window glass, a hand rail, a hanging strap, and an in-vehicle toilet;
equipment for aircrafts such as an airframe, a seat, an aircraft floor, window glass, and an in-flight toilet;
outdoor equipment such as a bridge, a road mirror, a dust-proofing cover, a signboard, a traffic sign, various display devices, an advertisement tower, a soundproof wall, outdoor advertisement, a bridge, a guard rail, a tunnel, a water-purifier tank, a cooling tower, and a drainage channel;
separator tanks and oil trap tanks such as an oil water separator tank, a grease trap, a grease interceptor, an oil trap, an oil interceptor, and a drainage pit;
agricultural materials such as a plant pod, soil, a watering tube, a pipe, a plastic greenhouse, a float panel, a propagation tray, a propagation sponge, a hydroponic culture solution supply channel, a vase, and a planter;
separation membranes such as an oil water separation membrane, a gas separation membrane, a reverse osmosis membrane, a nanofiltration membrane, an ultrafiltration membrane, and a microfiltration membrane;
fibrous items such as clothes; and
display devices such as a television, a smart phone, a tablet PC, a personal computer, a touch panel display, and VR goggles.

[Measurement of adhesion amount of biofilms]

A method for measuring the amount of biofilms adhering to a material containing the composition according to the present invention includes a step of forming biofilms on a material, and a step of quantitatively measuring the biofilms thus formed.

As the biofilms used for the measurement, biofilms existing in various environments can be collected and used directly as they are. Alternatively, a single type or a plurality of types of bacteria known as forming biofilms can be used for the measurement. The biofilms include different types of bacteria according to the environment in which the biofilms are formed, and also according to the season or the environmental conditions in which the biofilms are collected. Therefore, the same material can provide a different result in every measurement.
Therefore, in the evaluation for biofilm adhesion of materials, only a single type of bacteria or a mixture of a few types of bacteria known as forming biofilms are preferably used for the measurement, in view of quantitativeness and reproducibility.

The type of bacteria used for measuring the adhesion amount of biofilms is not particularly limited as long as the bacteria have an ability of forming biofilms. Examples of type of bacteria used for the measurement include Pseudomonas bacteria, Brevundimonas bacteria, Methylobacterium bacteria, Bacillus bacteria, and Staphylococcus bacteria. It is preferred that the bacteria used for the measurement are easily incubated, adheres to a material in a large amount, and are not peelable from a material with weak water flow, in view of quantitativeness and reproducibility. As the type of bacteria having these characteristics, preferred are Staphylococcus epidermidis ATCC35984 and Brevundimonas diminuta NBRC14213.

As a method for forming biofilms on a material, a material is put in a place where biofilms are formed, and biofilms can thereby be formed on the material. Alternatively, using a general technique of incubating microorganisms, a material is immersed in an incubation solution, and biofilms can thereby be formed on the material. In view of quantitativeness and reproducibility, preferred in the measurement of the adhesion amount of biofilms is using a general technique of incubating microorganisms, and more preferred is carrying out the measurement under the uniform conditions for temperature, a medium, and the like and the contamination-free conditions such as sterilization of an incubation container and a medium for forming biofilms.

The incubation conditions for forming biofilms on a material can be set as appropriate in a range allowing the growth of bacteria, the incubation conditions including: physical conditions such as temperature, aeration, vibration, and stationary; nutrition conditions such as medium components, concentration, and pH; a material and a size of a container used for incubation; and other conditions. The shape and size of a material on which biofilms are to be formed can be set as appropriate in a range allowing the material to be accommodated in an incubation container and immersed in an incubation solution.

The adhesion amount of biofilms formed on a material can be measured by measuring biofilms adhering to the material or by measuring biofilms recovered from the material. Examples of a method for detecting biofilms include a method for counting the number of bacteria of biofilms suspended in water, and a method for staining biofilms with a staining reagent. Preferred is a method for staining biofilms in view of simple measurement operation, quantitativeness, and reproducibility. Examples of the reagent for staining biofilms include crystal violet, methylene blue, fuchsin, acridine orange, DAPI, and Alcian Blue. Preferred is crystal violet in view of simple measurement operation, quantitativeness, and reproducibility.

EXAMPLES

Hereinafter, the present invention is described in further detail by way of examples and comparative examples. The present invention, however, is not limited to them.

I. Number (unit: %) of each type of structural units A derived from ethylene, structural units B represented by formula (1), structural units C represented by formula (2), and structural units D represented by formula (3) or (4), all types of structural units being included in polymer 1

A nuclear magnetic resonance spectrum (hereinafter, an NMR spectrum) of the polymer was measured using a nuclear magnetic resonance spectrometer (NMR) under the measurement conditions described below. Next, the amount (number [mol%] and weight [wt%]) of each type of the structural units A, B, C, and D was obtained according to the method described above.

Measurement conditions for carbon nuclear magnetic resonance ($^{13}C$-NMR)

Apparatus: AVANCE III 600HD manufactured by Bruker Biospin K.K.
Measurement probe: 10-mm CryoProbe
Measurement solvent: mixed liquid of 1,2-dichlorobenzene and 1,1,2,2-tetrachloroethane-$d_2$ = 50/50 (volume ratio)
Sample concentration: 100 mg/mL
Measurement temperature: 135°C
Measurement method: proton decoupling method
Cumulated number: 5000
Pulse width: 45 degrees
Pulse recurrence period: 4 seconds
Measurement reference: tetramethylsilane

II. Weight (unit: wt%) of each type of structural units A derived from ethylene, structural units B represented by formula (1), structural units C represented by formula (2), and structural units D represented by formula (3) or (4), all types of structural units being included in polymer

The number of each type of the structural units A derived from ethylene, the structural units B represented by the formula (1), and the structural units C represented by the formula (2), and the weight percent (wt%) of the structural units D represented by the formula (3) or (4) were calculated according to the methods described above, all the types of structural units being included in the polymer.

III. Polystyrene-equivalent average molecular weight of polymer according to the present invention (PS-equivalent number average molecular weight Mn, PS-equivalent weight average molecular weight Mw, and PS-equivalent z-average molecular weight Mz) (unit: g/mol)

The polystyrene-equivalent average molecular weight of the polymer was measured using a gel permeation chromatography (GPC) apparatus and software under the measurement conditions described below.

GPC apparatus and software

Liquid delivery pump: LC-20AD (SHIMADZU CORPORATION)
Degasser: DGU-20A3 (SHIMADZU CORPORATION)
Autosampler: SIL-20A HT (SHIMADZU CORPORATION)
Column oven: CTO-20A (SHIMADZU CORPORATION)

Differential refractive index detector (RID): RID-10A (SHIMADZU CORPORATION)
System controller: CBM-20A (SHIMADZU CORPORATION)
Measurement/analysis software: LC solution ver. 1.24 SP1

GPC measurement conditions

GPC column: Plus Pore series Poly Pore 7.5 mm I.D. × 300 mm (Agilent Technologies, Inc.) 2 columns
Mobile phase: tetrahydrofuran (KANTO CHEMICAL CO., INC., guaranteed, no stabilizer contained)
Flow rate: 1 mL/min
Column oven temperature: 35°C
Detection: Differential refractive index detector (RID)
RID cell temperature: 35°C
Dose of sample solution: 100 μL
Reference material for GPC column calibration: PStQuick Kit-H (Tosoh Corporation)
Filtration filter: Millex-LG, pore diameter 0.2 um, hydrophilic, PTFE, filter diameter 25 mm (Merck KGaA)

Conditions for preparing sample solution

Solvent: toluene (KANTO CHEMICAL CO., INC., guaranteed)
Concentration of sample solution: 1 mg/mL
Automatic shaking apparatus for dissolution: DF-8020 (Tosoh Corporation)

Dissolution conditions: a sample in an amount of 10 mg and 10 mL of a solvent are poured into a screw vial and hermetically closed therein, and stirred by DF-8020 at a stir rate of 60 strokes/min and 80°C for 60 minutes. The screw vial was left still at room temperature, and the solution was then filtered with a filtration filter.

IV. Contact angle of molded article (unit: °)

The contact angle of a molded article (sheet) was measured using an automatic contact angle meter DM-501 (manufactured by Kyowa Interface Science Co., Ltd.). The measurement was carried out using pure water or hexadecane (manufactured by Tokyo Chemical Industry Co., Ltd.) as a test liquid, at a drop of 2 μL, and using a θ/2 method as a measurement method. The molded article has higher hydrophilicity as the contact angle with pure water is decreased, and has higher oleophobic properties as the contact angle with hexadecane is increased.

V. Evaluation for solubility in water

A coating film was formed on a glass substrate (manufactured by Matsunami Glass Ind., Ltd., S2111, 76 mm × 26 mm × 0.8 to 1 mm) by the method described in the examples and comparative examples below, vacuum-dried at 80°C and 0.1 MPa for 3 hours, and measured for the "weight before evaluation for solubility". Thereafter, the glass substrate was immersed in 400 mL of water included in a 500-mL beaker for 6 hours. The glass substrate was taken out from the water, air-dried for 30 minutes, then vacuum-dried at 80°C and 0.1 MPa for 3 hours, and measured for the "weight after evaluation for solubility". The change in weight between before and after the evaluation for solubility was calculated by an equation (S) below. When the change in weight was 10% or more, the coating film was evaluated as "soluble" for the solubility in water, and when the change in weight was less than 10%, the coating film was evaluated as "insoluble" for the solubility in water.

[Math 7]

"Change in weight between before and after evaluation for solubility" = "Weight after evaluation for solubility" - "Weight before evaluation for solubility" (S)

VI. Evaluation for antifouling properties

A test piece was produced by press-molding the polymer according to the method described in the examples and the comparative examples. Alternatively, a test piece was produced by forming a coating film on a glass substrate according to the method described in the examples and the comparative examples. The test piece had a drop of chili oil (S & B FOODS INC.) placed on the surface thereof using a poly dropper and was then sunk in tap water included in a tray. The test piece was evaluated as "o" for the antifouling properties when confirmed, by visual inspection, to have the chili oil removed from the surface thereof, and the test piece was evaluated as "x" for the antifouling properties when confirmed to have the chili oil left thereon.

VII. Evaluation for adhesion of biofilms

A test piece was produced by press-molding the polymer according to the method described in the examples and the comparative examples, and cutting the press-molded article into a size of 20 mm × 40 mm × 1 mm. The test piece was washed with a diluted neutral detergent to remove dirt on the surface thereof, and immersed in ethanol for a few seconds to kill bacteria on the surface and thus sterilized. The test piece was attached to a drain outlet of a big bath used by about 100 people per day and left still for 14 days to allow the adhesion of slime.

Preparation of medium and measurement solution

- Biofilm staining solution (0.2-mass% crystal violet solution: CV solution)

Into a 2000-mL polyethylene bottle, 2 g of crystal violet (NACALAI TESQUE, INC.) was added and 1000 mL of ultrapure water was next added for dissolution, to prepare a biofilm staining solution.

- Stained biofilm eluate (2.0-mass% sodium dodecyl sulfate solution: SDS solution)

Into a 2000-mL polyethylene bottle, 20 g of sodium dodecyl sulfate (NACALAI TESQUE, INC.) was added and 1000 mL of ultrapure water was next added for dissolution, to prepare a stained biofilm eluate.

Measurement of adhesion amount of biofilms

After about 50 mL of pure water was added into a 100-mL beaker, the taken-out test piece was immersed in the pure water and washed by lightly shaking the beaker. The washed test piece was taken out, and extra moisture attached to the test piece was blotted with a paper towel.

Into a 100-mL poly bottle, 10 mL of the biofilm staining solution was added. The washed test piece was immersed in the biofilm staining solution for 30 minutes or more and thus stained. The test piece was taken out from the biofilm staining solution, and an extra biofilm staining solution attached to the test piece was blotted with a paper towel.

After about 50 mL of pure water was added into a 100-mL beaker, the taken-out test piece was immersed in the pure water and washed by lightly shaking the beaker. The washed test piece was taken out, and extra moisture attached to the test piece was blotted with a paper towel.

Into a 100-mL poly bottle, 15 mL of the stained biofilm eluate was added. The stained test piece was immersed in the stained biofilm eluate for 30 minutes or more, and the crystal violet was eluted from the test piece. The resultant eluate was set in a 1-mL spectrometer cell and measured for the absorbance at a wavelength of 570 nm using a spectrophotometer. A higher absorbance means a larger adhesion amount of biofilms.

When the test piece contained a homopolymer, a "biofilm reduction rate 1" of the composition in each of the examples was obtained according to an equation below using the absorbance of the test piece (hereinafter, expressed as "A (molded article 1)") in each of the examples and the absorbance of a PP sheet (hereinafter, "A (PP)").

[Math 8]

$$Biofilm\ reduction\ rate\ 1(\%) = \left(1 - \frac{A(Molded\ article\ 1)}{A\ (PP)}\right) \times 100$$

When the test piece contained a composition, a "biofilm reduction rate 2" of the composition in each of the examples was obtained according to an equation below using the absorbance of the test piece (hereinafter, expressed as "A (molded article 2)") in each of the examples and the absorbance of a sheet made from UPE below (hereinafter, "A (UPE)") contained in the composition in each of the examples.

[Math 9]

$$Biofilm\ reduction\ rate\ 2(\%) = \left(1 - \frac{A(Molded\ article\ 2)}{A\ (UPE)}\right) \times 100$$

A higher "biofilm reduction rate" means a smaller amount of biofilms adhering to the test piece, with respect to the amount of biofilms adhering to the sheet made from PP or UPE below.

VIII. Raw materials

Precursor polymer having structural units A and D

A-1: ethylene-methyl acrylate copolymer

An ethylene-methyl acrylate copolymer A-1 was produced as follows.

Ethylene and methyl acrylate were copolymerized by an autoclave reactor, at a reaction temperature of 195°C and a reaction pressure of 160 MPa, using tert-butyl peroxypivalate as a radical polymerization initiator. An ethylene-methyl acrylate copolymer A-1 was thus obtained. The composition and the melt flow rate (MFR) of the resultant copolymer A-1 were as follows.

Number of structural units derived from ethylene: 85% (65 wt%)
Number of structural units derived from methyl acrylate: 15% (35 wt%)
MFR (measured in accordance with JIS K7210, at temperature of 190°C and load of 21N): 29 g/10min

Compound β

B-1: 1H,1H,2H,2H-tridecafluoro-1-octanol [manufactured by Tokyo Chemical Industry Co., Ltd.]

Compound γ

C-1: polyethylene glycol monomethyl ether 1000 [manufactured by Lotte Chemical Corporation]

Catalyst

D-1: tetra(iso-propyl) orthotitanate [manufactured by Nippon Soda Co., Ltd.]

Additives

E-1: diethylene glycol dibutyl ether [manufactured by Tokyo Chemical Industry Co., Ltd.]
F-1: hexadecyltrimethylammonium chloride [manufactured by Tokyo Chemical Industry Co., Ltd.]

Polymer 2

G-1: unsaturated polyester [U-Pica 2035P, manufactured by Japan U-Pica Company Ltd., U-Pica 2035P containing styrene]

G-2: acrylonitrile-butadiene-styrene copolymer [KRALASTIC SR, manufactured by NIPPON A & L INC.]
G-3: polystyrene [TOYO STYRENE GP HRM48N, manufactured by TOYO STYRENE Co., Ltd.]
G-4: polyethylene [HI-ZEX 5000S, manufactured by Prime Polymer Co., Ltd.]

Curing agent

H-1: methyl ethyl ketone peroxide [manufactured by Tokyo Chemical Industry Co., Ltd.]

IX. Synthesis and analysis of polymer

Example A1

(1) Synthesis and analysis of polymer (ex1-1)

The atmosphere in a 0.3-L separable flask was replaced with nitrogen gas, the separable flask being equipped with a stirrer, a finger baffle, and a Graham condenser having 23°C cooled water flowed therein. Then, 40.0 g of A-1, 18.2 g of B-1, 49.9 g of C-1, 14.5 g of E-1, and 5.3 g of F-1 were added, and the mixture was heated under stirring at a reduced pressure of 10 kPa for 3 hours, with the oil-bath temperature set to 130°C. Thereafter, 1.89 g of D1 was added in a nitrogen gas atmosphere, and the mixture was heated under stirring at a reduced pressure of 10 to 1 kPa for 30 hours, with the oil-bath temperature set to 140°C and the cooled-water temperature set to 20°C. A polymer (ex1-1) (ethylene-1H,1H,2H,2H-tridecafluoro-n-octyl acrylate-methoxy polyethylene glycol acrylate-methyl acrylate copolymer) was thus obtained. The proportion of each type of the structural units in the polymer was analyzed by the method described above. Table 1 shows the analysis results.

(2) Production of test piece made from polymer (ex1-1)

The polymer (ex1-1) obtained in Example A1 (1) was charged into the frame of a spacer (50 mm length × 50 mm width × 1 mm thickness), and the spacer was held between two 0.2-mm-thick Teflon (registered trade name) sheets, further held between two 0.5-mm-thick aluminum plates placed on the outer surfaces of the sheets, and further held between two 2-mm-thick stainless-steel plates. The framed polymer was placed in a heat press molding machine, with pressing plates set to 150°C, preheated for 5 minutes, kept pressed at an increased pressure of 10 MPa for 5 minutes, then cooled at 30°C and 10 MPa for 5 minutes, and next cooled at 20°C for 1 hour. A 1-mm-thick sheet (ex1-2) was thus produced.

(3) Moldability

A solid test piece (1-mm-thick sheet) was obtained in (2) above. The test piece was measured for the D hardness using a durometer hardness tester (EXCEL, DIGITAL HARDNESS TESTER MODEL RH-305A) in accordance with JIS K7215. The test piece was not broken in the measurement. The polymer (ex1-1) can singly be formed into a sheet by heat molding, and the resultant sheet was hard enough for the hardness measurement.

(4) Measurement of contact angle, evaluation for antifouling properties, and evaluation for adhesion of biofilms

The sheet (ex1-2) obtained in (2) above was evaluated, by the methods described above, for the contact angle with pure water and hexadecane, the antifouling properties, and the adhesion of biofilms. Table 1 shows the evaluation results.

(5) Shape retainability

The sheet (ex1-2) obtained in (2) above was measured for the vertical and horizontal length. The sheet (ex1-2) was left still in a Geer oven at 80°C for 3 hours. The test piece was then observed by visual inspection and measured again for the vertical and horizontal length. The test piece after left still in the Geer oven was not broken. The table shows the area change rate.

(6) Test for abrasion resistance of hydrophilic and oleophobic properties

The sheet (ex1-2) obtained in (2) above had the surface thereof abraded by reciprocating a sponge wetted with water 50 times under a load of 5 kg, using a Gakushin-type rubbing tester (RT-200 manufactured by DAIEI KAGAKU

SEIKI MFG. CO., LTD.).

The contact angle with pure water and hexadecane was measured by the method described above before and after the test. Table 1 shows the results.

(7) Evaluation for solubility in water

Into a 500-mL beaker, 100 mg of the polymer (ex1-1) obtained in Example A1 (1) and 200 mL of toluene (manufactured by KANTO CHEMICAL CO., INC.) were poured, and the mixture was stirred with a magnetic stirrer for 2 hours while heated at 80°C. A solution containing the polymer (ex1-1) was thus obtained. The solution was cooled to room temperature, then dropped with a dropper on a glass substrate (manufactured by Matsunami Glass Ind., Ltd., S2111, 76 mm × 26 mm × 0.8 to 1mm), and air-dried for 30 minutes. Thereafter, the glass substrate was vacuum-dried at 80°C and 0.1 MPa for 1 hour. A substrate (ex1-3) was thus obtained. The substrate was evaluated for the solubility in water by the method described above. Table 1 shows the evaluation result.

Example A2

(1) Synthesis and analysis of polymer (ex2-1)

A polymer (ex2-1) (ethylene-1H,1H,2H,2H-tridecafluoro-n-octyl acrylate-methoxy polyethylene glycol acrylate-methyl acrylate copolymer) was obtained similarly to Example A1 (1) except that the used amounts of B-1 and C-1 were respectively changed to 15.1 g and 41.6 g. The proportion of each type of the structural units in the polymer was analyzed by the method described above. Table 1 shows the analysis results.

(2) Production of test piece made from polymer 1

A test piece (ex2-2) was produced similarly to Example A1 (2) except for replacing the polymer (ex1-1) with the polymer (ex2-1).

(3) Moldability

A solid test piece (1-mm-thick sheet) was obtained in (2) above. The test piece was measured for the D hardness similarly to Example A1 (3). The test piece was not broken in the measurement. The polymer (ex2-1) can singly be formed into a sheet by heat molding, and the resultant sheet was hard enough for the hardness measurement.

(4) Measurement of contact angle on surface of test piece, and evaluation for shape retainability, abrasion resistance, and antifouling properties

The sheet (ex2-2) obtained in (2) above was evaluated, similarly to Example A1, for the contact angle with pure water and hexadecane, the shape retainability, the abrasion resistance, and the antifouling properties. Table 1 shows the evaluation results.

(5) Evaluation for solubility in water

A substrate (ex2-3) obtained by replacing the polymer (ex1-1) with the polymer (ex2-1) was evaluated for the solubility in water by a similar method to that in Example A1 (7) .

Example A3

(1) Synthesis and analysis of polymer (ex3-1)

A polymer (ex3-1) (ethylene-1H,1H,2H,2H-tridecafluoro-n-octyl acrylate-methoxy polyethylene glycol acrylate-methyl acrylate copolymer) was obtained similarly to Example A1 (1) except that the used amounts of B-1 and C-1 were respectively changed to 12.1 g and 33.3 g. The proportion of each type of the structural units in the polymer (ex3-1) was analyzed by the method described above. Table 1 shows the analysis results.

(2) Production of test piece made from polymer 1

A test piece (ex3-2) was obtained similarly to Example A1 (2) except for replacing the polymer (ex1-1) with the

polymer (ex3-1).

(3) Moldability

A solid test piece (1-mm-thick sheet) was obtained in (2) above. The test piece was measured for the D hardness similarly to Example A1 (3). The test piece was not broken in the measurement. The polymer (ex3-1) can singly be formed into a sheet by heat molding, and the resultant sheet was hard enough for the hardness measurement.

(4) Measurement of contact angle on surface of test piece, and evaluation for shape retainability, abrasion resistance, and antifouling properties

The sheet (ex3-2) obtained in (2) above was evaluated, similarly to Example A1, for the contact angle with pure water and hexadecane, the shape retainability, the abrasion resistance, and the antifouling properties. Table 1 shows the evaluation results.

(5) Evaluation for solubility in water

A substrate (ex3-3) obtained by replacing the polymer (ex1-1) with the polymer (ex3-1) was evaluated for the solubility in water by a similar method to that in Example A1 (7).

Example A4

(1) Synthesis and analysis of polymer (ex4-1)

A polymer (ex4-1) (ethylene-1H,1H,2H,2H-tridecafluoro-n-octyl acrylate-methoxy polyethylene glycol acrylate-methyl acrylate copolymer) was obtained similarly to Example A1 (1) except that the used amounts of B-1 and C-1 were respectively changed to 25.4 g and 29.9 g. The proportion of each type of the structural units in the polymer was analyzed by the method described above. Table 1 shows the analysis results.

(2) Production of test piece made from polymer 1

A test piece (ex4-2) was produced similarly to Example A1 (2) except for replacing the polymer (ex1-1) with the polymer (ex4-1).

(3) Moldability

A solid test piece (1-mm-thick sheet) was obtained in (2) above. The test piece was measured for the D hardness similarly to Example A1 (3). The test piece was not broken in the measurement. The polymer (ex4-1) can singly be formed into a sheet by heat molding, and the resultant sheet was hard enough for the hardness measurement.

(4) Measurement of contact angle on surface of test piece, and evaluation for shape retainability, abrasion resistance, and antifouling properties

The sheet (ex4-2) obtained in (2) above was evaluated, similarly to Example A1, for the contact angle with pure water and hexadecane, the shape retainability, the abrasion resistance, and the antifouling properties. Table 1 shows the evaluation results.

(5) Evaluation for solubility in water

A substrate (ex4-3) obtained by replacing the polymer (ex1-1) with the polymer (ex4-1) was evaluated for the solubility in water by a similar method to that in Example A1 (7).

Example A5

(1) Synthesis and analysis of polymer (ex5-1)

A polymer (ex5-1) (ethylene-1H,1H,2H,2H-tridecafluoro-n-octyl acrylate-methoxy polyethylene glycol acrylate-methyl acrylate copolymer) was obtained similarly to Example A1 (1) except that the used amounts of B-1 and C-1 were

respectively changed to 10.9 g and 69.9 g. The proportion of each type of the structural units in the polymer was analyzed by the method described above. Table 1 shows the analysis results.

(2) Production of test piece made from polymer 1

A test piece (ex5-2) was produced similarly to Example A1 (2) except for replacing the polymer (ex1-1) with the polymer (ex5-1).

(3) Moldability

A solid test piece (1-mm-thick sheet) was obtained in (2) above. The test piece was measured for the D hardness similarly to Example A1 (3). The test piece was not broken in the measurement. The polymer (ex5-1) can singly be formed into a sheet by heat molding, and the resultant sheet was hard enough for the hardness measurement.

(4) Measurement of contact angle on surface of test piece, and evaluation for shape retainability, abrasion resistance, and antifouling properties

The sheet (ex5-2) obtained in (2) above was evaluated, similarly to Example A1, for the contact angle with pure water and hexadecane, the shape retainability, the abrasion resistance, and the antifouling properties. Table 1 shows the evaluation results.

(5) Evaluation for solubility in water

A substrate (ex5-3) obtained by replacing the polymer (ex1-1) with the polymer (ex5-1) was evaluated for the solubility in water by a similar method to that in Example A1 (7).

Comparative Example A1

(1) Synthesis and analysis of polymer (ce1-1)

A 0.1-L eggplant flask equipped with a Graham condenser had a stirring bar put therein and was dried at 120°C for 3 hours. The atmosphere in the dried eggplant flask was replaced with nitrogen gas. Then, into the eggplant flask were charged 4.3 g of 1H,1H,2H,2H-tridecafluoro-n-octyl acrylate (manufactured by Tokyo Chemical Industry Co., Ltd.) having a stabilizer removed therefrom by alumina column chromatography, 5.0 g of polyethylene glycol monomethyl ether acrylate (n = approx. 9) (manufactured by Tokyo Chemical Industry Co., Ltd.) having a stabilizer removed therefrom by alumina column chromatography, 0.085 g of 2,2'-azobis(isobutyronitrile) (manufactured by Tokyo Chemical Industry Co., Ltd.) purified by recrystallization, and 50 mL of 2-propanol (manufactured by KANTO CHEMICAL CO., INC.) dried with Molecular Sieves 3A (FUJIFILM Wako Pure Chemical Corporation). The solution was bubbled for 24 hours with nitrogen gas flowed into the solution using a syringe needle. Thereafter, the solution was stirred for 8 hours, with an oil bath set to 60°C. The solvent was removed by a rotary evaporator, and a polymer (ce1-1) (1H,1H,2H,2H-tridecafluoro-n-octyl acrylate-methoxy polyethylene glycol acrylate copolymer) was obtained. Table 1 shows the evaluation results of the polymer.

(2) Moldability of polymer

Production of a test piece was attempted by a method similar to that in Example A1 (2) except for replacing the polymer (ex1-1) with the polymer (ce1-1). A test piece, however, cannot be obtained because the sheet became a liquid after cooled.

(3) Production of test piece made from polymer

Into a 500-mL beaker, 1 g of the polymer (ce1-1) obtained in Comparative Example A1 (1) and 200 mL of toluene (manufactured by KANTO CHEMICAL CO., INC.) were poured, and the mixture was stirred with a magnetic stirrer for 2 hours while heated at 80°C. A solution containing the polymer (ce1-1) was thus obtained. After the solution was cooled to room temperature, a glass substrate was soaked in the solution, taken out, and then air-dried for 30 minutes. Thereafter, the glass substrate was vacuum-dried at 80°C and 0.1 MPa for 1 hour. A test piece (ce1-2) was thus produced.

(4) Measurement of contact angle on surface of test piece, and evaluation for abrasion resistance

The test piece (ce1-2) obtained in (3) above was evaluated, similarly to Example A1, for the contact angle with pure water and hexadecane and for the abrasion resistance. Table 1 shows the evaluation results.

(5) Evaluation for solubility in water

The test piece (ce1-2) was evaluated for the solubility in water by a similar method to that in Example A1 (7).

[Table 1]

| | Unit | Example A1 | Example A2 | Example A3 | Example A4 | Example A5 | Comparative Example A1 |
|---|---|---|---|---|---|---|---|
| Structural units A | wt% | 26.7 | 31.2 | 35.7 | 30.7 | 24.1 | - |
| Structural units B | | 21.6 | 20.3 | 19.0 | 34.2 | 11.5 | 29.5 |
| Structural units C | | 51.7 | 48.5 | 45.3 | 35.1 | 64.4 | 70.5 |
| Structural units D | | 5.7 | 8.7 | 11.7 | 6.7 | 5.3 | - |
| Structural units A | mol% | 84.9 | 84.9 | 84.9 | 84.9 | 84.9 | - |
| Structural units B | | 4.61 | 3.7 | 3.02 | 6.34 | 2.72 | 50 |
| Structural units C | | 4.61 | 3.7 | 3.02 | 2.72 | 6.34 | 50 |
| Structural units D | | 5.89 | 7.7 | 9.06 | 6.04 | 6.04 | - |
| PS-equivalent number average molecular weight Mn | g/mol | 50355 | 52722 | n.d. | n.d. | 58197 | n.d. |
| PS-equivalent weight average molecular weight Mw | g/mol | 137176 | 180019 | n.d. | n.d. | 248612 | n.d. |
| PS-equivalent z-average molecular weight Mz | g/mol | 406537 | 633556 | n.d. | n.d. | 1003624 | n.d. |
| Contact angle with water | ° | 24 | 26 | 35 | 31 | 18 | 21 |
| Contact angle with hexadecane | ° | 42 | 37 | 30 | 50 | 35 | 50 |
| Solubility in water | Wt% | < 1 | < 1 | < 1 | < 1 | < 1 | 91 |
| Moldability | - | o | o | o | o | o | liquid, poor moldability |
| Shape retainability | % | 2 | 3 | 2 | 2 | 2 | liquid, poor shape retainability |
| Change in contact angle with water after abrasion resistance test | ° | 5 | 4 | 4 | 3 | 5 | 16 |
| Change in contact angle with hexadecane after abrasion resistance test | ° | 1 | 3 | 2 | 3 | 2 | 45 |
| Antifouling properties | - | o | o | o | o | o | n.d. |
| Biofilm reduction rate | % | 85 | n.d. | n.d. | n.d. | n.d. | n.d. |
| n.d. = no data | | | | | | | |

X. Production and evaluation of molded article

Example B1

A solution (exB1-1) was prepared by dissolving 100 mg of the polymer (ex1-1) in 200 mL of toluene. Into a polyethylene bottle were added 97 wt% of G-1 as a prepolymer, 2 wt% (amount of polymer) of the solution (exB1-1), and 1 wt% of H-1 as a curing agent, and the mixture was stirred with a mechanical stirrer for 5 minutes to give a solution. The resultant solution was injected into a cell formed by holding, with two glass plates (200 mm length × 200 mm width × 5 mm thickness), a butyl rubber frame (150 mm length × 150 mm width × 2 mm thickness; inner size: 140 mm length × 140 mm width × 2 mm thickness), then set in an oven, with one of the glass plates located vertically lower and the other glass plate located vertically upper, and left still at room temperature for 30 minutes. Thereafter, the cell was heated at 100°C for 2 hours to polymerize and cross-link unsaturated polyester and styrene. Thus, a 2-mm-thick unsaturated polyester sheet (exB1-2) was obtained. The unsaturated polyester sheet (exB1-2) was a sheet containing the polymer (ex1-1).

The sheet was evaluated for the contact angle with pure water and hexadecane, the antifouling properties, and the adhesion of biofilms. Table 2 shows the evaluation results.

Example B2

(1) Production of resin composition (exB2-1)

A resin composition (exB2-1) was obtained by meltkneading 1 wt% of (G-2) and 99 mass% of the polymer (ex1-1) at 200°C using Labo Plastomill (manufactured by Toyo Seiki Seisaku-sho, Ltd., R100).

(2) Production of sheet (exB2-2)

The resin composition was charged into the frame of a spacer (150 mm length × 150 mm width × 1 mm thickness), the spacer was held between two 0.2-mm-thick Teflon (registered trade name) sheets, further held between 0.5-mm-thick aluminum plates, and further held between two 2-mm-thick stainless-steel plates. The resultant sample was placed in a heat press molding machine, with pressing plates set to 210°C, preheated for 5 minutes, kept pressed at an increased pressure of 10 MPa for 5 minutes, and then cooled at 30°C and 10 MPa for 5 minutes. A 1-mm-thick sheet (exB2-2) was thus produced.

The sheet was evaluated for the contact angle with pure water and hexadecane and for the antifouling properties. Table 2 shows the evaluation results.

Example B3

A composition (exB3-1) and a sheet (exB3-2) were obtained similarly to Example B2 except for replacing (G-2) with (G-3).

The sheet was evaluated for the contact angle with pure water and hexadecane. Table 2 shows the evaluation results.

Example B4

A composition (exB4-1) and a sheet (exB4-2) were obtained similarly to Example B2 except for replacing (G-2) with (G-4).

The sheet was evaluated for the contact angle with pure water and hexadecane. Table 2 shows the evaluation results.

Example B5

A solution (exB5-1) and a sheet (exB5-2) were obtained similarly to Example B1 except for replacing the polymer (ex1-1) with the polymer (ex4-1).

The sheet was evaluated for the contact angle with pure water and hexadecane and for the antifouling properties. Table 2 shows the evaluation results.

Example B6

A solution (exB6-1) and a sheet (exB6-2) were obtained similarly to Example B1 except for replacing the polymer (ex1-1) with the polymer (ex5-1).

The sheet was evaluated for the contact angle with pure water and hexadecane and for the antifouling properties. Table 2 shows the evaluation results.

Comparative Example B1

Into a polyethylene bottle were added 99 mass% of G-1 as a prepolymer and 1 mass% of methyl ethyl ketone peroxide (manufactured by Tokyo Chemical Industry Co., Ltd.) as a curing agent, and the mixture was stirred with a mechanical stirrer for 5 minutes to give a solution (ceB1-1). The resultant solution was injected into a cell formed by holding, with two glass plates (200 mm length × 200 mm width × 5 mm thickness), a butyl rubber frame (150 mm length × 150 mm width × 2 mm thickness; inner size: 140 mm length × 140 mm width × 2 mm thickness), then set in an oven, with one of the glass plates located vertically lower and the other glass plate located vertically upper, and left still at room temperature for 30 minutes. Thereafter, the cell was heated at 100°C for 2 hours to polymerize and cross-link unsaturated polyester and styrene. Thus, a 2-mm-thick unsaturated polyester sheet (ceB1-2) was obtained.

The sheet was evaluated for the contact angle with pure water and hexadecane, the antifouling properties, and the adhesion of biofilms. Table 2 shows the evaluation results.

Comparative Example B2

The polymer (G-2) was charged into the frame of a spacer (150 mm length × 150 mm width × 1 mm thickness), and the spacer was held between two 0.2-mm-thick Teflon (registered trade name) sheets, further held between 0.5-mm-thick aluminum plates, and further held between two 2-mm-thick stainless-steel plates. The resultant sample (ceB2-1) was placed in a heat press molding machine, with pressing plates set to 210°C, preheated for 5 minutes, kept pressed at an increased pressure of 10 MPa for 5 minutes, and then cooled at 30°C and 10 MPa for 5 minutes. A 1-mm-thick sheet (ceB2-2) was thus produced.

The sheet was evaluated for the contact angle with pure water and hexadecane and for the antifouling properties. Table 2 shows the evaluation results.

Comparative Example B3

A sheet (ceB3-2) was obtained similarly to Comparative Example B2 except for replacing (G-2) with (G-3) .

The sheet was evaluated for the contact angle with pure water and hexadecane. Table 2 shows the evaluation results.

Comparative Example B4

A sheet (ceB4-2) was obtained similarly to Comparative Example B3 except for replacing (G-2) with (G-4) .

The sheet was evaluated for the contact angle with pure water and hexadecane. Table 2 shows the evaluation results.

[Table 2]

| Resin composition | | Example B1 | Example B2 | Example B3 | Example B4 | Example B5 | Example B6 | Comparative Example B1 | Comparative Example B2 | Comparative Example B3 | Comparative Example B4 |
|---|---|---|---|---|---|---|---|---|---|---|---|
| Polymer G-1 | wt% | 97 | - | - | - | 97 | 97 | 100 | - | - | - |
| Curing agent H-1 | wt% | 1 | - | - | - | 1 | 1 | - | - | - | - |
| Polymer G-2 | wt% | - | 1 | - | - | - | - | - | 100 | - | - |
| Polymer G-3 | wt% | - | - | 1 | - | - | - | - | - | 100 | - |
| Polymer G-4 | wt% | - | - | - | 1 | - | - | - | - | - | 100 |
| Polymer ex1-1 | wt% | 2 | 99 | 99 | 99 | - | - | - | - | - | - |
| Polymer ex4-1 | wt% | - | - | - | - | 2 | - | - | - | - | - |
| Polymer ex5-1 | wt% | - | - | - | - | - | 2 | - | - | - | - |
| Polymer ex6-1 | wt% | - | - | - | - | - | - | - | - | - | - |
| Surflon S-283 | wt% | - | - | - | - | - | - | - | - | - | - |
| Contact angle with water | ° | 36 | 27 | 29 | 30 | 39 | 30 | 85 | 90 | 102 | 101 |
| Contact angel with hexadecane | ° | 40 | 39 | 40 | 36 | 48 | 31 | < 5 | 18 | 19 | 10 |
| Antifouling properties | - | o | o | n.d. | n.d. | o | o | × | × | n.d. | n.d. |
| Biofilm reduction rate | % | 42 | n.d. | n.d. | n.d. | n.d. | n.d. | 0 | n.d. | n.d. | n.d. |
| n.d. = no data | | | | | | | | | | | |

**Claims**

1. A polymer comprising: structural units A derived from at least one selected from the group consisting of ethylene and propylene; structural units B represented by a formula (1) below; and structural units C represented by a formula (2) below,

[Chemical 1]

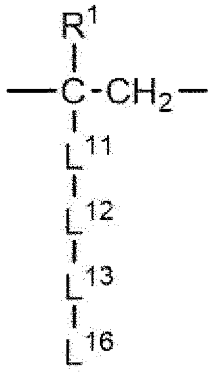

Formula (1)

wherein

$R^1$ represents a hydrogen atom or a methyl group;
$L^{11}$ represents -CO-O-, -O-CO-, or -O-;
$L^{12}$ represents a single bond, $-CH_2-$, $-CH_2-CH_2-$, $-CH_2-CH_2-CH_2-$, $-CH(CH_3)-CH_2-$, $-CH_2-CH(CH_3)-$, $-CH_2-CH(OH)-CH_2-$, or $-CH_2-CH(CH_2OH)-$;
$L^{13}$ represents a single bond, -CO-O-, -O-CO-, -O-, - CO-NH-, -NH-CO-, -CO-NH-CO-, -NH-CO-NH-, -NH-, or $-N(CH_3)-$;
$L^{16}$ represents $-(CH_2)_n-(R^{f2}O)_p-R^{f1}$;
$R^{f1}$ represents a $C_{1-15}$ alkyl group having one or more hydrogen atoms thereof substituted with one or more fluorine atoms;
$R^{f2}$ represents a $C_{1-15}$ alkylene group having one or more hydrogen atoms thereof substituted with one or more fluorine atoms;
p represents an integer of 0 to 15, and n represents an integer of 0 to 10;
when p is an integer of 2 or greater, a plurality of moieties $-(R^{f2}O)-$ may be identical or different; and
in $L^{11}$, $L^{12}$, and $L^{13}$ each representing a horizontally written chemical formula, a left side of the horizontally written chemical formula corresponds to an upper side of the formula (1), i.e., a main-chain side of the polymer, and a right side of the horizontally written chemical formula corresponds to a lower side of the formula (1), i.e., an end side of a side chain of the polymer, and

[Chemical 2]

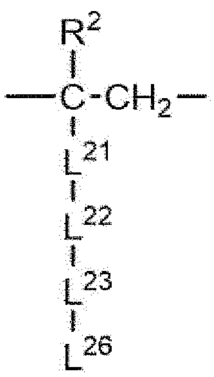

Formula (2)

wherein
$R^2$ represents a hydrogen atom or a methyl group;
$L^{21}$ represents -CO-O-, -O-CO-, or -O-;
$L^{22}$ represents a single bond, $-CH_2-$, $-CH_2-CH_2-$, $-CH_2-CH_2-CH_2-$, $-CH(CH_3)-CH_2-$, $-CH_2-CH(CH_3)-$, $-CH_2-CH(OH) -CH_2-$, or $-CH_2-CH(CH_2OH)-$;
$L^{23}$ represents a single bond, -CO-O-, -O-CO-, -O-, - CO-NH-, -NH-CO-, -CO-NH-CO-, -NH-CO-NH-, -NH-, or $-N(CH_3)-$;
$L^{26}$ represents $-(CH_2)_n-(R^{r2}O)_q-R^{r1}$;
$R^{r1}$ represents a hydrogen atom or a $C_{1-15}$ alkyl group;
$R^{r2}$ represents a $C_{1-15}$ alkylene group;
q represents an integer of 0 to 1000000, and n represents an integer of 0 to 10;
when q is an integer of 2 or greater, a plurality of moieties $-(R^{r2}O)-$ may be identical or different; and
in $L^{21}$, $L^{22}$, and $L^{23}$ each representing a horizontally written chemical formula, a left side of the horizontally written chemical formula corresponds to an upper side of the formula (2), i.e., the main-chain side of the polymer, and a right side of the horizontally written chemical formula corresponds to a lower side of the formula (2), i.e., an end side of a side chain of the polymer.

2. The polymer according to claim 1, further comprising structural units D that are at least one type selected from the group consisting of structural units represented by a formula (3) below and structural units represented by a formula (4) below,

[Chemical 3]

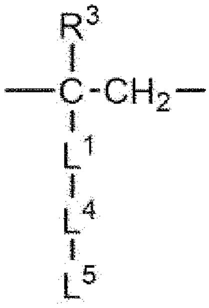

Formula (3)

[Chemical 4]

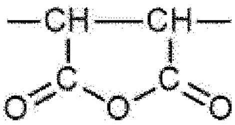

Formula (4)

wherein

$R^3$ represents a hydrogen atom or a methyl group;
$L^1$ represents -CO-O-, -O-CO-, or -O-;
$L^4$ represents a single bond or a $C_{1-8}$ alkylene group;
$L^5$ represents a hydrogen atom, an epoxy group, - $CH(OH)-CH_2OH$, a carboxy group, a hydroxy group, an amino group, or a $C_{1-4}$ alkylamino group; and
in $L^1$ representing a horizontally written chemical formula, a left side of the horizontally written chemical formula corresponds to an upper side of the formula (3), i.e., the main-chain side of the polymer, and a right side of the horizontally written chemical formula corresponds to a lower side of the formula (3), i.e., an end side of a side chain of the polymer.

3. The polymer according to claim 1 or 2, wherein
when a total number of the structural units A, B, C, and D is defined as 100%, a number of the structural units A is

1 to 99% and a total number of the structural units B, C, and D is 99 to 1%.

4. The polymer according to any one of claims 1 to 3, wherein
when the total number of the structural units B, C, and D is defined as 100%, a total number of the structural units B and C is 1 to 99% and a total number of the structural units D is 99 to 1%.

5. The polymer according to any one of claims 1 to 4, wherein
a number ratio B : C between the structural units B and C is 3 : 7 to 7 : 3.

6. The polymer according to any one of claims 1 to 5, being cross-linked.

7. The polymer according to any one of claims 1 to 6, having a gel fraction of 20% or more.

8. The polymer according to any one of claims 1 to 7, wherein
when a total number of all structural units included in the polymer is defined as 100%, the total number of the structural units A, B, C, and D is 90% or more.

9. A composition comprising the polymer according to any one of claims 1 to 8.

10. The composition according to claim 9, comprising 1 wt% or more of the polymer.

11. The composition according to claim 9 or 10, comprising a base resin.

12. The composition according to claim 11, wherein
the base resin is a thermosetting resin.

13. The composition according to claim 11, wherein
the base resin is unsaturated polyester.

14. A molded article comprising the polymer according to any one of claims 1 to 8.

15. The molded article comprising the composition according to any one of claims 9 to 13.

16. The molded article according to claim 14 or 15, configured to be an antifouling material.

17. The molded article according to claim 14 or 15, configured to be an anti-slime material.

18. A coating film comprising the polymer according to any one of claims 1 to 8.

19. The coating film comprising the composition according to any one of claims 9 to 13.

20. The coating film according to claim 18 or 19, configured to be an antifouling material.

21. The coating film according to claim 18 or 19, configured to be an anti-slime material.

22. A method for producing the polymer according to any one of claims 1 to 8, the method comprising reacting a polymer with a compound β and a compound γ,

the polymer including: structural units A derived from at least one selected from the group consisting of ethylene and propylene; and structural units D that are at least one type selected from the group consisting of structural units represented by a formula (3) below and structural units represented by a formula (4) below, a number of the structural units A being 1 to 99% when a total number of the structural units A and D is defined as 100%,
the compound β being one or more selected from the group consisting of a compound represented by a formula (β1) below, a compound represented by a formula (β2) below, a compound represented by a formula (β3) below, a compound represented by a formula (β4) below, a compound represented by a formula (β5) below, a compound represented by a formula (β6) below, a compound represented by a formula (β7) below, and a compound represented by a formula (β8) below, and
the compound γ being one or more selected from the group consisting of a compound represented by a formula

($\gamma$1) below, a compound represented by a formula ($\gamma$2) below, a compound represented by a formula ($\gamma$3) below, a compound represented by a formula ($\gamma$4) below, a compound represented by a formula ($\gamma$5) below, a compound represented by a formula ($\gamma$6) below, a compound represented by a formula ($\gamma$7) below, and a compound represented by a formula ($\gamma$8) below,

[Chemical 5]

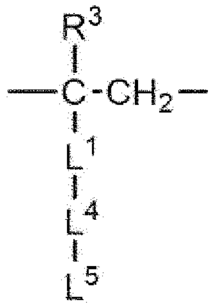

Formula (3)

wherein
$R^3$ represents a hydrogen atom or a methyl group;
$L^1$ represents -CO-O-, -O-CO-, or -O-;
$L^4$ represents a single bond or a $C_{1-8}$ alkylene group;
$L^5$ represents a hydrogen atom, an epoxy group, - $CH(OH)-CH_2OH$, a carboxy group, a hydroxy group, an amino group, or a $C_{1-4}$ alkylamino group; and
in $L^1$ representing a horizontally written chemical formula, a left side of the horizontally written chemical formula corresponds to an upper side of the formula (3), i.e., a main-chain side of the polymer, and a right side of the horizontally written chemical formula corresponds to a lower side of the formula (3), i.e., an end side of a side chain of the polymer,

[Chemical 6]

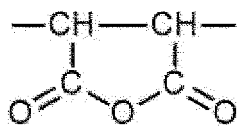

Formula (4)

$R^{f1}-(OR^{f2})_p-(CH_2)_n-OH$ formula ($\beta$1)

$R^{f1}-(OR^{f2})_p-(CH_2)_n-NH_2$ formula ($\beta$2)

$R^{f1}-(OR^{f2})_p-(CH_2)_n-X$ formula ($\beta$3)

$R^{f1}-(OR^{f2})_p-(CH_2)_n-COOH$ formula ($\beta$4)

$R^{f1}-(OR^{f2})_p-(CH_2)_n-CONH_2$ formula ($\beta$5)

$R^{f1}-(OR^{f2})_p-(CH_2)_n-COX$ formula ($\beta$6)

$R^{f1}-(OR^{f2})_p-(CH_2)_n-NHCONH_2$ formula ($\beta$7)

$R^{f1}-(OR^{f2})_p-(CH_2)_n-NCO$ formula ($\beta$8)

wherein
$R^{f1}$, $R^{f2}$, p, and n are as specified in the formula (1), and X represents a halogen atom; and

when a plurality of the compounds β are used, $R^{f1}$, $R^{f2}$, p, n, and X may be identical or different between the plurality of the compounds β, and

$R^{r1}$-$(OR^{r2})_q$-$(CH_2)_m$-OH formula (γ1)

$R^{r1}$-$(OR^{r2})_q$-$(CH_2)_m$-$NH_2$ formula (γ2)

$R^{r1}$-$(OR^{r2})_q$-$(CH_2)_m$-X formula (γ3)

$R^{r1}$-$(OR^{r2})_q$-$(CH_2)_m$-COOH formula (γ4)

$R^{r1}$-$(OR^{r2})_q$-$(CH_2)_m$-$CONH_2$ formula (γ5)

$R^{r1}$-$(OR^{r2})_q$-$(CH_2)_m$-COX formula (γ6)

$R^{r1}$-$(OR^{r2})_q$-$(CH_2)_m$-$NHCONH_2$ formula (γ7)

$R^{r1}$-$(OR^{r2})_q$-$(CH_2)_m$-NCO formula (γ8)

wherein
$R^{r1}$, $R^{r2}$, q, and m are as specified in the formula (1), and X represents a halogen atom; and
when a plurality of the compounds γ are used, $R^{r1}$, $R^{r2}$, q, m, and X may be identical or different between the plurality of the compounds γ.

**23.** The method according to claim 22, wherein
in the reacting, a neutral compatibilizing agent and a cationic compatibilizing agent are added.

**INTERNATIONAL SEARCH REPORT**

International application No.
PCT/JP2021/011072

A. CLASSIFICATION OF SUBJECT MATTER
Int. Cl. C08F8/14(2006.01)i, C08F8/18(2006.01)i, C08F220/28(2006.01)i
FI: C08F8/18, C08F8/14, C08F220/28

According to International Patent Classification (IPC) or to both national classification and IPC

B. FIELDS SEARCHED

Minimum documentation searched (classification system followed by classification symbols)
Int. Cl. C08F8/14, C08F8/18, C08F220/28

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2019/159865 A1 (SUMITOMO CHEMICAL CO., LTD.) 22 August 2019, claims, examples, paragraphs [0009]-[0050], [0138], [0146] | 1-23<br>22, 23 |
| X<br>Y | JP 2005-519174 A (E. I. DU PONT DE NEMOURS & CO.) 30 June 2005, claims, examples, paragraph [0039] | 1-21<br>22, 23 |

☐ Further documents are listed in the continuation of Box C.    ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23.04.2021 | 11.05.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/011072

| Patent Documents referred to in the Report | Publication Date | Patent Family | Publication Date |
|---|---|---|---|
| WO 2019/159865 A1 | 22.08.2019 | (Family: none) | |
| JP 2005-519174 A | 30.06.2005 | US 2005/0090633 A1<br>claims, examples,<br>paragraph [0053] | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 1108290 A
- WO 2014080873 A
- JP 2017115044 A
- JP 2002069178 A


### Non-patent literature cited in the description


- **KAKUGO, M. ; NAITO, Y. ; MIZUNUMA, K. ; MIYATAKE, T.** *Macromolecules,* 1982, vol. 15, 1150
- *Sensors,* 2013, vol. 13, 5117-5129
- **C. M. HANSEN.** A User's Handbook. Taylor and Francis Group, LLC, 2007
- *RSC Adv.,* 2015, vol. 5, 53054-53062